# EUROPEAN PATENT APPLICATION

(11) **EP 4 800 276 A1**
(43) Date of publication of application: **02.09.2026**
(21) Application number: 23956597.1
(22) Date of filing: 16.11.2023
(51) Int. Cl.: F16K 31/06, F16K 31/00

(54) **CONTROL VALVE**

(30) Priority: 26.10.2023 CN 202311410618
(71) Applicant: Nanjing Hanshu Environmental Protection Equipment Co., Ltd, Nanjing, Jiangsu 211500 (CN); Liu, Guo, Nanjing, Jiangsu 211500 (CN)
(72) Inventor: LIU, Xiaohan, Nanjing, Jiangsu 211500 (CN); LIU, Guo, Nanjing, Jiangsu 211500 (CN)
(74) Representative: JD&P Patent Attorneys Joanna Dargiewicz & Partners
(86) International application number: PCT/CN2023/131901
(87) International publication number: WO 2025/086360

(57) **Abstract**

Disclosed in the present invention is a control valve, comprising: a valve core mechanism and a trigger mechanism. The valve core mechanism comprises: a valve body in which an active valve cavity is formed; and an active valve core provided in the active valve cavity, wherein the active valve core has a first position and a second position, when the active valve core is switched from the second position to the first position under a first trigger force, the active valve core directly or indirectly opens/closes a controlled port, and when the active valve core is switched from the first position to the second position under a second trigger force opposite to the first trigger force, the active valve core directly or indirectly closes/opens the controlled port. The trigger mechanism is used for providing the first trigger force and the second trigger force; an active magnet is provided on the active valve core; a positioning magnet is provided on the valve body; the positioning magnet is adjacent to the active magnet; and by means of magnetic interaction between the positioning magnet and the active magnet, the active valve core has an acting force for keeping same at the first position or second position to which the active valve core is switched.

## Description

### TECHNICAL FIELD

The present disclosure relates to the field of valves, and in particular, to a control valve for controlling a fluid.

### BACKGROUND

In traditional valve components (mechanisms or devices), motion and power are usually transmitted between moving components by means of mechanical contact force. For example, a valve core in a valve component achieves a purpose of having a certain motion characteristic through a constructed mechanical transmission member.

However, the conventional manner of transmitting motion and power between moving components in valve components using mechanical contact force has the following drawbacks:

To achieve certain motion characteristics of the moving components, it is necessary to construct complex transmission structures and/or transmission components in the valve body of the valve component. This inevitably makes the internal structure of the valve body overly complex. Since valve components are typically relatively small in size, a complex internal structure inevitably increases the manufacturing difficulty and production cost of the valve component.

During the movement of a mechanical transmission member, the force acting on it may decrease (e.g., the force applied by a spring), thus requiring a larger preset force to achieve a certain motion characteristic, which in turn results in a larger reaction force.

Using mechanical transmission methods significantly increases wear on moving parts and related structures, thereby affecting service effectiveness and service life.

### SUMMARY

### Technical Problem

In view of the above technical problems existing in the prior art, the present disclosure provides a control valve.

### Technical Solution

The control valve includes: a valve core mechanism and a trigger mechanism;
the valve core mechanism includes:
a valve body, where an active valve cavity is arranged inside the valve body; and
an active valve core, where the active valve core is arranged in the active valve cavity and is movable along the active valve cavity, the active valve core has a first position and a second position respectively located at two ends of a movement stroke; after the active valve core is subjected to a first trigger force and is switched from the second position to the first position, the active valve core directly or indirectly opens/closes a controlled port; and after the active valve core is subjected to a second trigger force opposite to the first trigger force and is switched from the first position to the second position, the active valve core directly or indirectly closes/opens the controlled port; and
the trigger mechanism is configured to provide the first trigger force for switching the active valve core from the second position to the first position and to provide the second trigger force for switching the active valve core from the first position to the second position.

An active magnet is arranged on the active valve core; and
a positioning magnet is arranged on the valve body, the positioning magnet is adjacent to the active magnet, and the positioning magnet through a magnetic force interaction with the active magnet, enables the active valve core to have an acting force capable of maintaining the active valve core at a switched position after switching to the first position or the second position.

In some embodiments, the positioning magnet is arranged on the valve body in a fixed manner relative to the valve body.

In some embodiments, a magnetic pole direction of the positioning magnet is consistent with a magnetic pole direction of the active magnet, and opposite magnetic poles of the positioning magnet and the active magnet face the same direction.

In some embodiments, magnetic pole directions of the positioning magnet and the active magnet are perpendicular to each other.

In some embodiments, one of the positioning magnet and the active magnet is an annular magnet, and another of the positioning magnet and the active magnet is a bar-shaped magnet, the annular magnet surrounds the bar-shaped magnet.

In some embodiments, the annular magnet and the bar-shaped magnet are movable relative to each other along the magnetic pole direction, the bar-shaped magnet is maintained at either end of an inner cavity formed by magnetic poles at two ends of the annular magnet through a magnetic force interaction with the annular magnet, and the bar-shaped magnet includes a magnet formed as a permanent magnet or a ferrous material magnetized by the annular magnet.

In some embodiments, the positioning magnet is an annular magnet, and the active magnet is a bar-shaped magnet.

In some embodiments, the positioning magnet and the active magnet are both bar-shaped magnets, and the positioning magnet is located on a side of the active magnet.

In some embodiments, the control valve further includes a trigger magnet, opposite magnetic poles of the trigger magnet and the positioning magnet face each other, and like magnetic poles of the trigger magnet and the active magnet face each other; and
the trigger magnet, by forming a magnetic attractive force with the positioning magnet and a magnetic repulsive force with the active magnet, cooperates with the trigger mechanism to apply the first trigger force to switch the active valve core from the second position to the first position.

In some embodiments, a length of the active magnet is less than a length of the positioning magnet.

In some embodiments, the positioning magnet is formed by stacking two magnet units of equal length with opposite magnetic poles facing each other; and
the active magnet is formed by stacking two magnet units of different lengths with opposite magnetic poles facing each other, a length of a longer magnet unit in the active magnet is equal to a length of each of the magnet units in the positioning magnet, and a length of a shorter magnet unit in the active magnet is less than half of the length of each of the magnet units of the positioning magnet.

In some embodiments, the positioning magnet is formed by stacking two magnet units of equal length with opposite magnetic poles facing each other; and
the active magnet includes one magnet unit, a length of the magnet unit of the active magnet is equal to the length of each magnet unit in the positioning magnet.

In some embodiments, the positioning magnet is formed by stacking three magnet units with opposite magnetic poles facing each other, a length of a middle magnet unit being greater than a length of two magnet units respectively arranged at two sides along an axis, and radially outer sides of the two magnet units on the two sides protrude beyond relative to a radially outer side of the middle magnet unit; and
the active magnet includes one magnet unit, the length of the magnet unit of the active magnet is greater than that of the middle magnet unit of the positioning magnet.

In some embodiments, the positioning magnet is formed by stacking three magnet units of equal length with opposite magnetic poles facing each other, and
the active magnet is formed by stacking two magnet units of equal length with opposite magnetic poles facing each other, the length of the magnet unit of the positioning magnet is equal to the length of each magnet unit of the active magnet.

In some embodiments, the length of the active magnet is greater than the length of the positioning magnet.

In some embodiments, the positioning magnet includes one magnet unit; and
the active magnet is formed by stacking two magnet units of equal length with opposite magnetic poles facing each other, the length of the magnet unit of the positioning magnet is equal to the length of the magnet unit of the active magnet.

In some embodiments, the magnetic pole direction of the active magnet is consistent with a moving direction of the active valve core, and the magnetic pole direction of the positioning magnet is perpendicular to the moving direction of the active valve core.

In some embodiments, the positioning magnet is formed by stacking at least two magnet units along a thickness direction, opposite magnetic poles of the two magnet units of the positioning magnet facing the same direction;
the active magnet is formed by stacking two magnet units along a length direction with opposite magnetic poles facing each other; and
a thickness of the positioning magnet is equal to a length of one magnet unit of the active magnet.

In some embodiments, the positioning magnet is formed by stacking four magnet units of equal thickness along a thickness direction, opposite magnetic poles of every two adjacent magnet units of the positioning magnet facing the same direction;
the active magnet includes one magnet unit; and
a length of the active magnet being equal to a sum of thicknesses of two magnet units of the positioning magnet.

In some embodiments, the magnetic pole direction of the active magnet is perpendicular to the moving direction of the active valve core, and the magnetic pole direction of the positioning magnet is consistent with the moving direction of the active valve core.

In some embodiments, the active magnet is formed by stacking two magnet units along a thickness direction, opposite magnetic poles of the two magnet units of the active magnet facing the same direction;
the positioning magnet is formed by stacking two magnet units of different lengths with opposite magnetic poles facing each other;
a length of a shorter magnet unit in the positioning magnet is half the thickness of the active magnet; and
a length of a longer magnet unit in the positioning magnet is equal to the thickness of the active magnet.

In some embodiments, the control valve further includes a passive valve core, a passive valve cavity is arranged in the valve body, the passive valve cavity is located at one side of the active valve cavity, and the passive valve core is arranged in the passive valve cavity and movable along the passive valve cavity;
a passive magnet is arranged on the passive valve core; and
the passive magnet forms a magnetic force interaction with the active magnet and the positioning magnet, such that when the active valve core is switched between the first position and the second position, the passive valve core is driven to move, and the controlled port is closed or opened through the passive valve core.

In some embodiments, an extension direction of the passive valve cavity is consistent with an extension direction of the active valve cavity, and a moving direction of the passive valve core is consistent with the moving direction of the active valve core.

In some embodiments, the extension direction of the passive valve cavity is perpendicular to the extension direction of the active valve cavity, and the moving direction of the passive valve core is perpendicular to the moving direction of the active valve core.

In some embodiments, the positioning magnet is located at another side of the active valve cavity, a positioning valve cavity is formed in the valve body, an extension direction of the positioning valve cavity is consistent with and coaxially opposite the extension direction of the passive valve cavity, and the positioning magnet is arranged in the positioning valve cavity and movable along the positioning valve cavity to approach or move away from the active valve cavity.

In some embodiments, opposite magnetic poles of the positioning magnet and the passive magnet face each other.

In some embodiments, the trigger mechanism includes a float ball mechanism, the float ball mechanism includes floats, the float ball mechanism is configured to apply the first trigger force and the second trigger force to the active valve core through the floats.

In some embodiments, the float ball mechanism includes two floats, the two floats cooperate with each other to apply the first trigger force and the second trigger force to the active valve core.

In some embodiments, a magnetic force follower mechanism is provided between the floats and the active valve core, and the floats are configured to directly or indirectly drive the active valve core to move and switch between the first position and the second position.

In some embodiments, the trigger mechanism includes a float ball mechanism and a button mechanism; and
the button mechanism is configured to provide the first trigger force, and the float ball mechanism is configured to provide the second trigger force.

In some embodiments, the trigger mechanism includes an expansion mechanism and a button mechanism; and
the button mechanism is configured to provide the first trigger force, the expansion mechanism has an expansion component, the expansion component is capable of expanding after absorbing water, the expansion component being configured to provide the second trigger force through the water absorption expansion action.

In some embodiments, the trigger mechanism includes a hydraulic control mechanism, the hydraulic control mechanism has a pressure accumulating port, an actuating mechanism and a reset component for resetting the actuating mechanism are arranged in the hydraulic control mechanism; the actuating mechanism is configured to, in response to an increase in pressure of a fluid at the pressure accumulating port, drive the active valve core to switch from the second position to the first position; and the reset component is configured to, in response to a decrease in pressure at the pressure accumulating port, reset the actuating mechanism, thereby driving the active valve core to switch from the first position to the second position.

In some embodiments, a spring diaphragm or a bulging diaphragm is provided between the pressure accumulating port and the actuating mechanism.

In some embodiments, the trigger mechanism includes an electromagnetic drive mechanism.

In some embodiments, the controlled port includes a hydraulic control port of a diaphragm valve.

### Advantageous Effects

The valve core in the control valve of the present disclosure utilizes magnetic force interactions between magnets to transmit motion and power, thus making the force pushing the valve core to move a trigger force that tends to become smaller, and the internal structure of the valve body is simpler. At the same time, wear on related components and structures may be significantly reduced, improving the service life of the control valve.

Other key advantages of the present disclosure are directly and implicitly recorded in the detailed description below.

It should be understood that the foregoing general description and the following detailed description are merely exemplary and explanatory and are not intended to limit the present disclosure.

The following is an overview of various implementations or examples of the technology described in the present disclosure, and is not a comprehensive disclosure of the full scope or all features of the disclosed technology.

### BRIEF DESCRIPTION OF THE DRAWINGS

In the drawings, which may not necessarily be drawn to scale, the same reference numerals may describe similar components in different views. The same reference signs having letter suffixes or different letter suffixes may represent different instances of similar components. The drawings generally illustrate various embodiments by way of example and not limitation, serve to explain the embodiments of the present disclosure. In the appropriate situation, the same reference signs are used throughout the drawings to refer to the same or like parts. Such embodiments are illustrative and are not intended to be exhaustive or exclusive embodiments of the device or method of the present disclosure.
FIG. 1A is a state diagram of a control valve provided in Embodiment 1 of the present disclosure when a diaphragm valve is opened.
FIG. 1B is a state diagram of the control valve provided in Embodiment 1 of the present disclosure when the diaphragm valve is closed.
FIG. 2A is a state diagram of a control valve provided in Embodiment 2 of the present disclosure when a diaphragm valve is opened.
FIG. 2B is a state diagram of the control valve provided in Embodiment 2 of the present disclosure when the diaphragm valve is closed.
FIG. 3A is a state diagram of a control valve provided in Embodiment 3 of the present disclosure when a diaphragm valve is opened.
FIG. 3B is a state diagram of the control valve provided in Embodiment 3 of the present disclosure when the diaphragm valve is closed.
FIG. 4A is a state diagram of a control valve provided in Embodiment 4 of the present disclosure when a diaphragm valve is opened.
FIG. 4B is a state diagram of the control valve provided in Embodiment 4 of the present disclosure when the diaphragm valve is closed.
FIG. 5A is a state diagram of a control valve provided in Embodiment 5 of the present disclosure when a diaphragm valve is opened.
FIG. 5B is a state diagram of the control valve provided in Embodiment 5 of the present disclosure when the diaphragm valve is closed.
FIG. 6A is a state diagram of a control valve provided in Embodiment 6 of the present disclosure when a diaphragm valve is opened.
FIG. 6B is a state diagram of the control valve provided in Embodiment 6 of the present disclosure when the diaphragm valve is closed.
FIG. 7A is a state diagram of a control valve provided in Embodiment 7 of the present disclosure when a diaphragm valve is opened.
FIG. 7B is a state diagram of the control valve provided in Embodiment 7 of the present disclosure when the diaphragm valve is closed.
FIG. 8A is a state diagram of a control valve provided in Embodiment 8 of the present disclosure when a diaphragm valve is opened.
FIG. 8B is a state diagram of the control valve provided in Embodiment 8 of the present disclosure when the diaphragm valve is closed.
FIG. 9A is a state diagram of a control valve provided in Embodiment 9 of the present disclosure when a diaphragm valve is opened.
FIG. 9B is a state diagram of the control valve provided in Embodiment 9 of the present disclosure when the diaphragm valve is closed.
FIG. 10A is a diagram of an expansion mechanism of a control valve provided in Embodiment 10 of the present disclosure in an initial state.
FIG. 10B is a diagram of the expansion mechanism of the control valve provided in Embodiment 10 of the present disclosure after water absorption expansion.
FIG. 11A is a state diagram of a control valve provided in Embodiment 11 of the present disclosure when a diaphragm valve is opened.
FIG. 11B is a state diagram of the control valve provided in Embodiment 11 of the present disclosure when the diaphragm valve is closed.
FIG. 12A is a state diagram of a control valve provided in Embodiment 12 of the present disclosure when the control valve is opened.
FIG. 12B is a state diagram of the control valve provided in Embodiment 12 of the present disclosure when the control valve is closed.
FIG. 13A is a state diagram of a control valve provided in Embodiment 13 of the present disclosure when the control valve is opened.
FIG. 13B is a state diagram of the control valve provided in Embodiment 13 of the present disclosure when the control valve is closed.
FIG. 14A is a state diagram of a control valve provided in Embodiment 14 of the present disclosure when a diaphragm valve is opened.
FIG. 14B is a state diagram of the control valve provided in Embodiment 14 of the present disclosure when the diaphragm valve is closed.
FIG. 15A is a state diagram of a control valve provided in Embodiment 15 of the present disclosure when a diaphragm valve is opened.
FIG. 15B is a state diagram of the control valve provided in Embodiment 15 of the present disclosure when the diaphragm valve is closed.
FIG. 16A is a state diagram of a control valve provided in Embodiment 16 of the present disclosure when a diaphragm valve is opened.
FIG. 16B is a state diagram of the control valve provided in Embodiment 16 of the present disclosure when the diaphragm valve is closed.

### Reference signs:

10 valve core mechanism; 11 valve body; 111 active valve cavity; 112 passive valve cavity; 113 fluid controlled port; 114 inlet port; 115 air hole; 116 positioning valve cavity; 121 active valve core; 122 passive valve core; 131 active magnet; 132 positioning magnet; 133 passive magnet; 14 valve rod; 141 boss; 142 annular portion; 143 stepped portion; 144 stepped sleeve; 145 stopping portion; 15 trigger magnet; 16 follower stepped shaft;
20 float ball mechanism; 21 tube body; 211 plug; 212 floating component; 22 thread; 23 main float; 231 first float; 232 second float; 241 lower magnetic force follower component; 242 upper magnetic force follower component; 2421 rod-like structure; 243 follower connecting component; 251 lower limit ring; 252 upper limit ring; 26 liner tube;
30 hydraulic control mechanism; 31 pressure accumulating port; 32 sliding sleeve; 331 spring diaphragm; 332 bulging diaphragm; 333 annular retaining ring; 341 reset magnet; 342 reset spring; 3411 magnetic force attracting component;
41 button mechanism; 411 trigger rod; 412 reset spring; 413 trigger button; 42 float ball mechanism; 421 connecting rod; 422 trigger float; 43 expansion mechanism; 431 detection box; 432 expansion component; 44 float ball mechanism; 441 connecting rod; 4411 push plate; 4412 push rod; 442 trigger float; 443 trigger magnet; 444 reset spring;
50 electromagnetic drive mechanism; 51 electromagnetic coil; 52 driven magnet;
100 diaphragm valve; 101 hydraulic control port; 102 diaphragm; 103 outlet.

### DETAILED DESCRIPTION OF THE EMBODIMENTS

In order to make the objectives, technical solutions, and advantages of the embodiments of the present disclosure clearer, the technical solutions of the embodiments of the present disclosure will be described clearly and completely below in conjunction with the drawings of the embodiments of the present disclosure. Apparently, the described embodiments are some, but not all, of the embodiments of the present disclosure. Based on the described embodiments of the present disclosure, all other embodiments obtained by a person of ordinary skill in the art without involving inventive effort fall within the scope of protection of the present disclosure.

Unless otherwise defined, technical terms or scientific terms used in the present disclosure shall have the usual meanings understood by a person having ordinary skill in the art to which the present disclosure pertains. The terms "first", "second", and similar words used in the present disclosure do not indicate any order, quantity, or importance, but are only used to distinguish different components. The words "include" or "contain" and similar words mean that an element or item appearing before the word covers the elements or items and their equivalents listed after the word, but do not exclude other elements or items. The words "connect" or "connected" and similar words are not limited to physical or mechanical connections, but may include electrical connections, whether direct or indirect. The terms "upper", "lower", "left", "right", etc., are only used to indicate relative positional relationships, and when the absolute position of the described object changes, the relative positional relationship may also change accordingly.

In order to keep the following description of the embodiments of the present disclosure clear and concise, detailed descriptions of known functions and known components are omitted in the present disclosure.

The present disclosure provides a control valve. This control valve is generally used to control the opening and closing of an on-off valve having a pressure-controlled port. For convenience, on-off valves having a pressure-controlled port may be collectively referred to as hydraulically controlled on-off valves. Specifically, the control valve controls the opening and closing of the hydraulically controlled on-off valve by opening and closing a hydraulic control port of the hydraulically controlled on-off valve. The hydraulically controlled on-off valve controlled by the control valve is typically arranged on a pipeline, so that the control valve may control the connection and disconnection of the pipeline by controlling the opening and closing of the hydraulically controlled on-off valve.

In the following embodiments provided by the present disclosure, a diaphragm valve is taken as the hydraulically controlled on-off valve. That is, the control valve is used to control the opening and closing of a diaphragm valve arranged on a pipeline, thereby controlling the connection and disconnection of the pipeline. However, this is merely exemplary, and the control valve of the present disclosure may also be used to control other structural forms of hydraulically controlled on-off valves.

The control valve provided by the present disclosure controls the opening and closing of the hydraulically controlled on-off valve by opening and closing the hydraulic control port of the hydraulically controlled on-off valve via a valve core (the principle that opening the hydraulic control port of the hydraulically controlled on-off valve enables the hydraulically controlled on-off valve to open, and closing the hydraulic control port of the hydraulically controlled on-off valve enables the hydraulically controlled on-off valve to close is well-known technology and will not be described in detail in this application). For example, the opening and closing of the hydraulically controlled on-off valve may be controlled by directly opening or closing the hydraulic control port of the hydraulically controlled on-off valve via the valve core. Specifically, for instance, the opening and closing of the diaphragm valve may be controlled by directly opening or closing the hydraulic control port of the diaphragm valve (this hydraulic control port may be a hydraulic control port provided on a valve main body of the diaphragm valve, or a hydraulic control port provided on a diaphragm of the diaphragm valve) via the valve core. For another example, the opening and closing of the hydraulically controlled on-off valve may be controlled by indirectly opening or closing the hydraulic control port of the hydraulically controlled on-off valve via the valve core. Specifically, for instance, the control valve is provided with a fluid controlled port, which is in communication with the hydraulic control port of the diaphragm valve, and the hydraulic control port of the diaphragm valve is opened or closed by opening or closing the fluid controlled port. Therefore, in terms of working principle, directly opening or closing the hydraulic control port of the hydraulically controlled on-off valve has substantially the same effect as indirectly opening or closing the controlled port of the hydraulically controlled on-off valve by opening or closing the fluid controlled port on the control valve. Thus, the hydraulic control port of the hydraulically controlled on-off valve and the fluid controlled port provided on the control valve may be collectively referred to as a controlled port.

The control valve provided by the present disclosure has the following construction and structural features.

The control valve includes a valve core mechanism and a trigger mechanism. The valve core mechanism is used for opening and closing a controlled port, and the trigger mechanism is used for providing a trigger force to the valve core mechanism, so that the valve core mechanism performs the actions of opening and closing the controlled port.

The valve core mechanism includes a valve body, an active valve core, and a magnetic force interaction component. An active valve cavity is arranged in the valve body. The active valve core is arranged in the active valve cavity and is movable along the active valve cavity. The active valve core may open or close the controlled port directly or indirectly by moving along the active valve cavity. The position on the movement stroke of the active valve core where the controlled port is opened may be referred to as a first position, and the position on the movement stroke of the active valve core where the controlled port is closed may be referred to as a second position. Thus, after the active valve core is switched from the second position to the first position, the active valve core directly or indirectly opens the controlled port, thereby opening the hydraulically controlled on-off valve; and after the active valve core is switched from the first position to the second position, the active valve core directly or indirectly closes the controlled port, thereby closing the hydraulically controlled on-off valve.

The trigger mechanism is essentially used for providing a trigger force to the active valve core to drive the active valve core to switch between the first position and the second position. Specifically, the trigger mechanism drives the active valve core to switch from the second position to the first position by providing a first trigger force to the active valve core, and drives the active valve core to switch from the first position to the second position by providing a second trigger force opposite to the first trigger force to the active valve core.

The magnetic force interaction component at least includes an active magnet and a positioning magnet. The positioning magnet is arranged on the valve body, and the active magnet is arranged on the active valve core. A magnetic force interaction is formed between the positioning magnet and the active magnet. On one hand, the formed magnetic force interaction is used to cooperate with the trigger mechanism to switch the active valve core between the first position and the second position. On the other hand, and particularly importantly, this magnetic force interaction is also used to maintain the active valve core at the switched position after it has been switched to the first position or the second position.

It should be noted that the so-called "maintaining at the switched position" should be interpreted as: when the active valve core is switched to the first position or the second position, if the active valve core is disturbed by an external force, for example, by a force from the trigger mechanism, even if the active valve core undergoes an instantaneous displacement, it will subsequently reset. Thus, the active valve core has the advantage of maintaining the controlled port in a stable open state or closed state. The characteristic that the active valve core may "maintain at the switched position" enables it to reduce or avoid interference from external forces, which has significant practical application. For example, if the trigger mechanism is a float ball mechanism for operating in response to a liquid level, and the trigger mechanism interferes with the active valve core due to liquid level fluctuations, the active valve core may still be maintained at the first position or the second position without opening or closing the controlled port, thereby preventing the opening/closing state of the hydraulically controlled on-off valve from being affected by liquid level fluctuations.

The positioning magnet may be fixedly arranged on the valve body, or may be arranged on the valve body in a movable manner. When the positioning magnet is arranged on the valve body in a movable manner, the valve body is usually also provided with a passive valve core having a passive magnet.

The active magnet and the positioning magnet may be configured in various magnetic pole arrangements. For example, the positioning magnet and the active magnet may be arranged such that their magnetic pole directions are the same, and the opposite magnetic poles of the positioning magnet and the active magnet face the same direction. For another example, the positioning magnet and the active magnet may be arranged such that their magnetic pole directions are perpendicular to each other.

It should be noted that:
The magnetic pole direction refers to the direction indicated by the N pole and S pole of a magnet. For example, for a magnet whose N pole points upward (downward) and S pole points downward (upward), the magnetic pole direction of the magnet is the vertical direction. Correspondingly, for a magnet whose N pole points leftward (rightward) and S pole points rightward (leftward), the magnetic pole direction of the magnet is the horizontal direction. Generally, two magnets having the same magnetic pole direction can be understood as the two magnets being arranged in parallel. Magnetic pole directions of the two magnets are perpendicular to each other can be understood as the two magnets being perpendicular to each other. The length of a magnet can be understood as the dimension of the magnet in the magnetic pole direction. The thickness of a magnet can be understood as the dimension of the magnet in a direction perpendicular to the magnetic pole direction.

Opposite magnetic poles facing the same direction means that different poles of two magnets face the same direction. For example, in two magnets, the N pole of one magnet faces upward (downward) and the S pole of the other magnet also faces upward (downward), then the opposite magnetic poles of the two magnets are said to face the same direction. Correspondingly, in two magnets, the N pole of one magnet faces upward and the N pole of the other magnet also faces upward, then the like magnetic poles of the two magnets are said to face the same direction. Correspondingly, "opposite magnetic poles facing each other" mentioned below means that different poles of two magnets face each other. For example, in two magnets, the N pole (S pole) of one magnet faces the S pole (N pole) of the other magnet.

The active magnet and the positioning magnet may be configured in various structural forms. For example, the active magnet may be configured as a bar-shaped magnet (a columnar structure magnet can also be considered a bar-shaped magnet), and the positioning magnet may be configured as an annular magnet (a magnet group formed by arranging multiple bar-shaped magnets in a circle may also be considered an annular magnet), in this case, the positioning magnet surrounds the active valve core. For another example, the positioning magnet may be configured as a bar-shaped magnet, and the active magnet may be configured as an annular magnet, in this case, the active valve core surrounds the positioning magnet. For yet another example, both the active magnet and the positioning magnet may be configured as bar-shaped magnets. In this case, the positioning magnet is arranged on one side of the active valve core.

The active magnet and the positioning magnet may be configured to be formed by stacking multiple magnet units. For example, the active magnet and the positioning magnet may be formed by stacking two magnet units along a length direction with opposite magnetic poles facing each other. For another example, the active magnet and the positioning magnet may be formed by stacking two magnet units along a thickness direction with opposite magnetic poles facing the same direction.

The active magnet and the positioning magnet may be configured with different lengths. For example, the length of the active magnet may be configured to be greater than the length of the positioning magnet. For another example, the length of the active magnet may be configured to be less than the length of the positioning magnet.

The valve core mechanism of the control valve may be configured to directly open or close the controlled port by utilizing the switching of the active valve core between the first position and the second position. The valve core mechanism of the control valve may also be configured to indirectly open or close the controlled port by utilizing the switching of the active valve core between the first position and the second position. Specifically, a passive valve cavity is provided in the valve body, and a passive valve core is provided in the passive valve cavity. The passive valve core opens or closes the controlled port by moving within the passive valve cavity. A passive magnet is provided on the passive valve core. The passive magnet, as a component of the magnetic force interaction component, forms a magnetic force interaction with the active magnet and the positioning magnet, such that the passive valve core may be actuated in response to the switching action of the active valve core. For example, when the active valve core is switched from the second position to the first position, the passive valve core opens the controlled port by moving; and when the active valve core is switched from the first position to the second position, the passive valve core closes the controlled port by moving in the opposite direction.

The moving directions of the passive valve core and the active valve core may be the same (or parallel moving directions), or may be moving directions perpendicular to each other. When the passive valve core and the active valve core are configured to have moving directions perpendicular to each other, the positioning magnet may also be configured to be movable in a positioning valve cavity, and the positioning valve cavity is coaxially opposite the passive valve cavity and respectively located at two sides of the active valve cavity.

The trigger mechanism may have various structural forms and types. For example, the trigger mechanism may be a float ball mechanism, which is located in a container (e.g., a water tank). The float ball mechanism applies the first trigger force and the second trigger force to the active valve core through a float, thereby driving the active valve core to switch between the first position and the second position to open or close the controlled port directly or via the passive valve core, thus controlling the opening and closing of the hydraulically controlled on-off valve. This hydraulically controlled on-off valve may be arranged on a water supply pipeline for filling the water tank. In this way, the float ball mechanism controls the water supply into the water tank by responding to the liquid level in the water tank. For another example, the trigger mechanism may include an expansion mechanism and a button mechanism which cooperate with each other. The button mechanism is configured to provide the first trigger force. The expansion mechanism has an expansion component such as a water-absorbing sponge. The expansion component expands after absorbing water. The expansion component, by means of a water absorption expansion action, is configured to provide the second trigger force. The expansion component may be arranged in a leak detection box located around a pipeline. When water is present in the detection box, causing the expansion component to absorb and expand, this indicates a leak in the pipeline. At this time, the expansion component causes the trigger mechanism to apply the second trigger force to the active valve core, so that the active valve core is switched from the first position to the second position, thereby closing the controlled port, thus closing the hydraulically controlled on-off valve on the pipeline, facilitating detection of the pipeline leak. When the pipeline is replaced or repaired, pressing the button mechanism may cause the active valve core to switch from the second position to the first position, thereby reopening the hydraulically controlled on-off valve. For another example, the trigger mechanism may also be a hydraulic control mechanism. The hydraulic control mechanism has a pressure accumulating port. An actuating mechanism and a reset component for resetting the actuating mechanism are arranged in the hydraulic control mechanism. The actuating mechanism, in response to an increase in pressure of the fluid at the pressure accumulating port, drives the active valve core to switch from the second position to the first position, thereby opening the hydraulically controlled on-off valve. The reset component, in response to a decrease in pressure at the pressure accumulating port, resets the actuating mechanism, thereby driving the active valve core to switch from the first position to the second position, thus closing the hydraulically controlled on-off valve. For yet another example, the trigger mechanism may also be an electromagnetic drive mechanism. In this way, the active valve core may be switched between the first position and the second position by electronic control, thereby controlling the opening and closing of the hydraulically controlled on-off valve.

The control valve is also configured to include a trigger magnet, opposite magnetic poles of the trigger magnet and the positioning magnet face each other, such that the like magnetic poles of the trigger magnet and the active magnet face each other. The trigger magnet, by forming a magnetic attractive force with the positioning magnet and a magnetic repulsive force with the active magnet, cooperates with the trigger mechanism to participate in applying the first trigger force to switch the active valve core from the second position to the first position.

It should be noted:
When one of the active magnet and the positioning magnet is an annular magnet, and the other is a bar-shaped magnet, the length of the annular magnet is greater than the length of the bar-shaped magnet, and when the two magnets are moved relative to each other along the magnetic pole direction, the bar-shaped magnet is maintained in the cavity formed by the magnetic poles at the two ends of the annular magnet. Consequently, the magnetic force strength between opposite magnetic poles that are close together between the bar-shaped magnet and the annular magnet is greater than the magnetic force strength between opposite magnetic poles that are far apart between the bar-shaped magnet and the annular magnet. Thus, the bar-shaped magnet has a force that maintains it at either end of the inner cavity formed by the magnetic poles at the two ends of the annular magnet. Furthermore, this bar-shaped magnet may be a permanent magnet, or a ferrous material magnetized by the annular magnet to become a magnet having opposite magnetic poles facing the same direction as the annular magnet may be used instead of a permanent magnet, reducing cost. Furthermore, the trigger magnet may continue to form a magnetic attractive force with the positioning magnet and continue to form a magnetic repulsive force with the active magnet.

Specific structures, application conditions, working processes, and advantages of some typical control valves are introduced below by enumerating specific embodiments.

### Embodiment 1

### Structure of the Control Valve of Embodiment 1

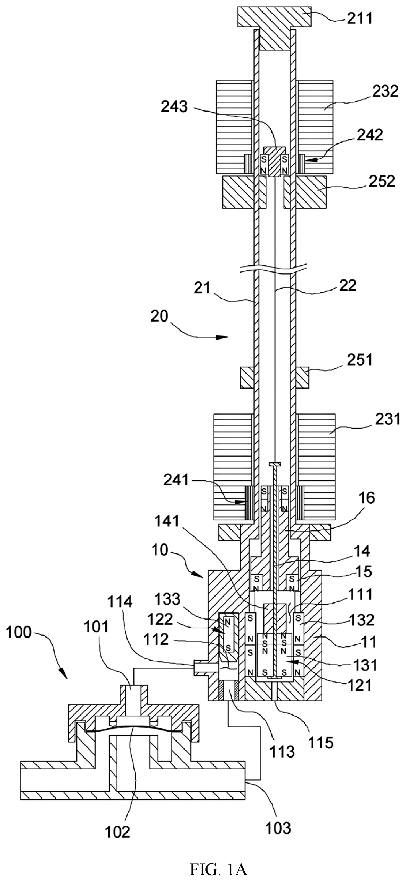

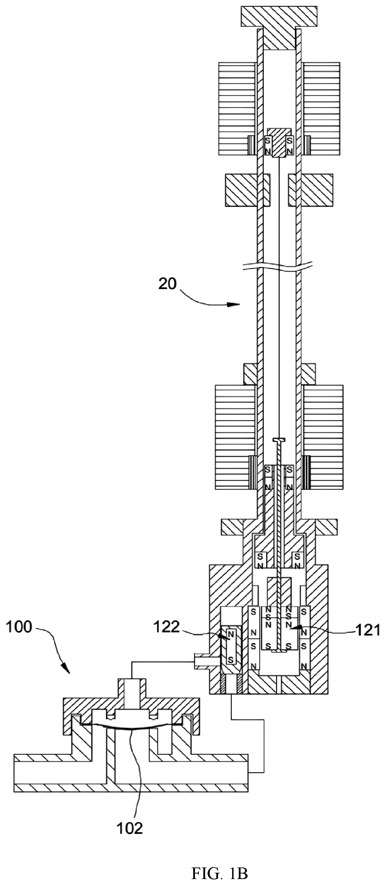

As shown in FIG. 1A and FIG. 1B, the control valve includes a valve core mechanism 10 and a trigger mechanism. The trigger mechanism is arranged above the valve core mechanism 10. The trigger mechanism is a float ball mechanism 20. The hydraulically controlled on-off valve is a diaphragm valve 100, and the control valve is used to control the opening and closing of the diaphragm valve 100.

The valve core mechanism 10 includes a valve body 11, an active valve core 121, a passive valve core 122, a magnetic force interaction component, a valve rod 14, a follower stepped shaft 16, and a trigger magnet 15.

A vertically extending active valve cavity 111 is arranged in a middle portion inside the valve body 11, and an air hole 115 is opened at a bottom of the active valve cavity 111. A grating is provided above the active valve core 121. The active valve core 121 is arranged in the active valve cavity 111 and is vertically movable along the active valve cavity 111. Thus, within a movement stroke, the active valve core 121 has a first position located at a lower portion of the active valve cavity 111 and a second position located at an upper portion of the active valve cavity 111. A passive valve cavity 112 is arranged in the valve body 11 at one side of the active valve cavity 111. An extension direction of the passive valve cavity 112 is consistent with that of the active valve cavity 111, i.e., the passive valve cavity 112 is parallel to the active valve cavity 111. The passive valve core 122 is arranged in the passive valve cavity 112 and is vertically movable along the passive valve cavity 112. A fluid controlled port 113 is opened at a bottom of the passive valve cavity 112. A liquid inlet port 114 is opened on one side of the valve body 11, the liquid inlet port 114 penetrates through to the passive valve cavity 112. The hydraulic control port 101 of the diaphragm valve 100 is connected to the liquid inlet port 114, and the fluid controlled port 113 is connected to an outlet 103 of the diaphragm valve 100.

As shown in FIG. 1A, after the passive valve core 122 moves upward, the passive valve core 122 opens the fluid controlled port 113, the liquid inlet port 114 is in communication with the fluid controlled port 113, a fluid chamber above a diaphragm 102 of the diaphragm valve 100 is depressurized, and the diaphragm 102 deforms upward to open the diaphragm valve 100. As shown in FIG. 1B, after the passive valve core 122 moves downward, the passive valve core 122 closes the fluid controlled port 113, the liquid inlet port 114 is blocked from the fluid controlled port 113, the pressure in the fluid chamber above the diaphragm 102 of the diaphragm valve 100 increases, forcing the diaphragm 102 to deform downward to close the diaphragm valve 100.

The magnetic force interaction component includes an active magnet 131, a positioning magnet 132, and a passive magnet 133. The active magnet 131 is configured as a bar-shaped magnet and arranged on the active valve core 121. The positioning magnet 132 is configured as an annular magnet, is arranged on the valve body 11 in a fixed manner relative to the valve body 11 and surrounds the active valve core 121, and the positioning magnet 132 is longer than the active magnet 131. The passive magnet 133 is configured as a bar-shaped magnet and is arranged on the passive valve core 122.

Magnetic pole directions of the active magnet 131, the positioning magnet 132, and the passive magnet 133 are the same. Opposite magnetic poles of the active magnet 131 and the positioning magnet 132 face the same direction, and opposite magnetic poles of the passive magnet 133 and the positioning magnet 132 face the same direction.

The positioning magnet 132 is formed by stacking two magnet units of equal length with opposite magnetic poles facing each other. The active magnet 131 is formed by stacking two magnet units of different lengths with opposite magnetic poles facing each other. A length of a longer magnet unit in the active magnet 131 is equal to a length of the magnet unit in the positioning magnet 132, and a length of a shorter magnet unit in the active magnet 131 is less than half of the length of the magnet unit of the positioning magnet 132.

A lower portion of the valve rod 14 is connected to the active valve core 121, and an upper portion of the valve rod 14 extends toward the float ball mechanism 20. The follower stepped shaft 16 is arranged in the valve body 11 and located above the positioning magnet 132, and is vertically movable. The valve rod 14 passes through the follower stepped shaft 16 and is vertically movable relative to the follower stepped shaft 16.

The trigger magnet 15 is arranged at a bottom of the follower stepped shaft 16. Opposite magnetic poles of the trigger magnet 15 and the positioning magnet 132 face each other, and the like magnetic poles of the trigger magnet 15 and the active magnet 131 face each other. Thus, when the trigger magnet 15 approaches the positioning magnet 132 and the active magnet 131, a magnetic attractive force is formed between the trigger magnet 15 and the positioning magnet 132, while the trigger magnet 15 generates a magnetic repulsive force on the active magnet 131.

The trigger mechanism includes a tube body 21, a first float 231, a second float 232, and a magnetic force follower mechanism. The tube body 21 is arranged above the valve body 11. A lower end of the tube body 21 is connected to the valve body 11. The upper portions of the valve rod 14 and the follower stepped shaft 16 extend into the tube body 21. A plug 211 is arranged at an upper end of the tube body 21. The first float 231 and the second float 232 are sleeved on the tube body 21 and are both vertically slidable along the tube body 21. The first float 231 is located below the second float 232. Limit rings are provided on the tube body 21, including a lower limit ring 251 and an upper limit ring 252. The lower limit ring 251 is arranged at a lower portion of the tube body 21, and the upper limit ring 252 is arranged at an upper portion of the tube body 21. The lower limit ring 251 is configured to stop the upward-moving first float 231, and the upper limit ring 252 is configured to stop the downward-moving second float 232. The second float 232 is indirectly connected to the upper end of the valve rod 14 via a thread 22.

The magnetic force follower mechanism includes a lower magnetic force follower component 241 and an upper magnetic force follower component 242. Each of the lower magnetic force follower component 241 and the upper magnetic force follower component 242 includes two magnetic force attracting components. The two magnetic force attracting components may both be magnets, or one may be a magnet and the other a ferrous component. The two magnetic force attracting components of the lower magnetic force follower component 241 are respectively arranged on a radial inner side of the first float 231 and on an upper portion of the follower stepped shaft 16. The two magnetic force attracting components of the lower magnetic force follower component 241, by forming a magnetic attractive force therebetween, cause the follower stepped shaft 16 and the first float 231 to follow each other. The two magnetic force attracting components of the upper magnetic force follower component 242 are respectively arranged on a radial inner side of the second float 232 and on a follower connecting component 243 connected to the upper end of the thread 22. The two magnetic force attracting components of the upper magnetic force follower component 242, by forming a magnetic attractive force therebetween, cause the follower connecting component 243 and the second float 232 to follow each other. Thus, when the second float 232 moves upward, the second float 232 pulls the thread 22 via the upper magnetic force follower component 242 and the follower connecting component 243, thereby pulling the valve rod 14 via the thread 22 to drive the active valve core 121 to move upward. Each of the two magnetic force attracting components of the magnetic force follower components is configured as a ring structure, and the two magnetic force attracting components are nested within each other, thereby preventing jamming caused by uneven radial force during the follower movement of the magnetic force attracting components.

### Application Conditions of the Control Valve of Embodiment 1

The control valve of this embodiment controls the water supply to a water tank by controlling the opening and closing of the hydraulically controlled on-off valve. The float ball mechanism 20 of the control valve extends into the water tank from a bottom of the water tank. The first float 231 is closer to the bottom of the water tank, and the second float 232 is closer to a top of the water tank. The valve core mechanism 10 of the control valve is located at the bottom of the water tank.

The diaphragm valve 100, as the hydraulically controlled on-off valve, is located on a water supply pipeline for filling the water tank. The hydraulic control port 101 of the diaphragm valve 100 is connected to the liquid inlet port 114 of the valve body 11 of the valve core mechanism 10, and the fluid controlled port 113 of the valve body 11 is connected to the outlet 103 of the diaphragm valve 100.

### Working Process of the Control Valve of Embodiment 1

As shown in FIG. 1A, when the liquid level in the water tank drops to near the bottom of the water tank, the liquid level where the liquid surface is located at this time may be referred to as a preset lower limit liquid level. The first float 231 and the second float 232 are in a low position, and the active valve core 121 is in the first position located at a lower portion of the active valve cavity 111. The passive valve core 122 is in a first state, and located at an upper portion of the passive valve cavity 112. At this time, the fluid controlled port 113 is in an open state, the fluid controlled port 113 is in communication with the liquid inlet port 114, so the controlled port is in an open state, thus the diaphragm valve 100 is in an open state, the water supply pipeline is in an open state, and water enters the water tank through the water supply pipeline to fill the water tank.

As the water filling continues, the liquid level in the water tank rises, the first float 231 floats upward, and the follower stepped shaft 16 moves upward. The trigger magnet 15 moves upward following the follower stepped shaft 16. When the first float 231 moves upward to the lower limit ring 251, it is stopped by the lower limit ring 251.

As shown in FIG. 1B, when the liquid level rises to near the top of the water tank, the water tank is filled with water. At this time, the liquid level where the liquid surface is located may be referred to as a preset upper limit liquid level. The second float 232, due to buoyancy reaching a certain level, moves upward, and pulls the thread 22 via the upper magnetic force follower component 242 to drive the valve rod 14 upward. The valve rod 14 pulls the active valve core 121 upward, causing the active valve core 121 to switch from the first position to the second position. Correspondingly, due to the change in position of the active magnet 131, the magnetic force interaction on the passive magnet 133 from the active magnet 131 and the positioning magnet 132 changes, forcing the passive valve core 122 to move downward to a second state where the fluid controlled port 113 is closed, thus closing the diaphragm valve 100, blocking the water supply pipeline, and stopping the water supply to the water tank. This process is where the float ball mechanism 20 applies the second trigger force to the active valve core 121 to switch the active valve core 121 from the first position to the second position. After the active valve core 121 is switched to the second position, an upper end surface of the active magnet 131 is substantially flush with an upper end surface of the positioning magnet 132, and is maintained in the substantially flush position by magnetic attractive force.

The first float 231 and the second float 232 may be configured with two types of sequential action relationships:
The first action relationship: the first float 231 floats upward before the second float 232. Specifically, when the liquid level rises to a certain height but not to the preset upper limit liquid level, the first float 231 relies on buoyancy and, via the lower magnetic force follower component 241, drives the follower stepped shaft 16 to float upward first.

The second action relationship: the second float 232 floats upward before the first float 231. Specifically, after the liquid level rises to the preset upper limit liquid level, the second float 232 first floats upward, pulling the valve rod 14 upward via the thread 22. Subsequently, the valve rod 14 pushes the follower stepped shaft 16 upward via the boss 141. Thus, the follower stepped shaft 16, via the lower magnetic force follower component 241, drives the first float 231 and, combined with the buoyancy of the first float 231, causes the first float 231 to float upward.

As the liquid level in the water tank drops due to water usage, when the liquid level in the water tank drops to the preset lower limit liquid level, the second float 232 has already moved downward to a low position, the pulling force of the thread 22 on the valve rod 14 has been removed. The first float 231 moves downward and, via the lower magnetic force follower component 241, drives the follower stepped shaft 16 to move downward. The magnetic attractive force of the positioning magnet 132 on the trigger magnet 15 increases, and the magnetic repulsive force of the trigger magnet 15 on the active magnet 131 increases. Under the pushing action of the follower stepped shaft 16 on the active valve core 121 via the boss 141 and the magnetic repulsive force of the trigger magnet 15 on the active magnet 131, the active valve core 121 is forced to move downward to the lower portion of the active valve cavity 111, i.e., forced to switch from the second position to the first position. Correspondingly, due to the change in position of the active magnet 131, the magnetic force interaction on the passive magnet 133 from the active magnet 131 and the positioning magnet changes, forcing the passive valve core 122 to move upward to the first state in which the fluid controlled port 113 is opened, thus opening the diaphragm valve 100, the water supply pipeline is in fluid communication, and filling the water tank again. This process is where the float ball mechanism 20 applies the first trigger force to the active valve core 121 to switch the active valve core 121 from the second position to the first position. After the active valve core 121 is switched to the first position, a lower end surface of the active magnet 131 is substantially flush with a lower end surface of the positioning magnet 132, and is maintained in the substantially flush position by magnetic attractive force. Additionally, the passive valve core 122 moves upward to a position where an upper end surface of the passive magnet 133 is substantially flush with the upper end surface of the positioning magnet 132, and is maintained in the substantially flush position by magnetic attractive force.

It should be noted that the control valve of Embodiment 1 and the diaphragm valve 100 are two independent valves, but they may also be configured as an integrated on-off valve. The control valve of Embodiment 1 may be used directly as an on-off valve, or in combination with other types of hydraulically controlled on-off valves.

### Advantages of the Control Valve of Embodiment 1:

The structure, construction, and magnetic pole arrangement of the positioning magnet 132 and the active magnet 131 enable the active valve core 121 to be maintained at the switched first position or second position, thereby making the opening/closing state of the hydraulically controlled on-off valve less affected, or even unaffected, by liquid level fluctuations in the water tank.

The structure, construction, and magnetic pole arrangement of the positioning magnet 132 and the active magnet 131 enable the passive valve core 122 to switch positions when the active valve core 121 is fully switched to the first position or the second position, thereby making the opening/closing state of the passive valve core 122 less affected, or even unaffected, by liquid level fluctuations.

The downward movement of the first float 231 is used to control the opening of the controlled port (specifically, the fluid controlled port 113 belonging to the controlled port), and the upward movement of the second float 232 is used to control the closing of the controlled port, thereby allowing the water tank to achieve a larger single water filling volume.

The active valve core 121 may drive the passive valve core 122 to open or close the controlled port with a relatively small stroke.

The trigger force required to drive the active valve core 121 to switch between the first position and the second position is relatively small, thus allowing the two floats to be made smaller.

The trigger force required for the active valve core 121 to switch from the second position to the first position (i.e., moving downward along the active valve cavity 111) is smaller compared to the trigger force required for switching from the first position to the second position (i.e., moving upward along the active valve cavity 111). This facilitates the first float 231 using its own gravity to drive the active valve core 121 to move downward along the active valve cavity 111.

The magnetic force interaction formed between the trigger magnet 15, the positioning magnet 132, and the active magnet 131 is utilized to drive the active valve core 121 to switch to the first position. Therefore, the first float 231 may be made smaller than the second float 232.

The active magnet 131 provided on the active valve core 121 may be replaced by a ferrous material having equal maximum radial dimensions at both ends and an axial length equal to the length of the active magnet 131, thereby reducing cost.

### Embodiment 2

### Structure of the Control Valve of Embodiment 2

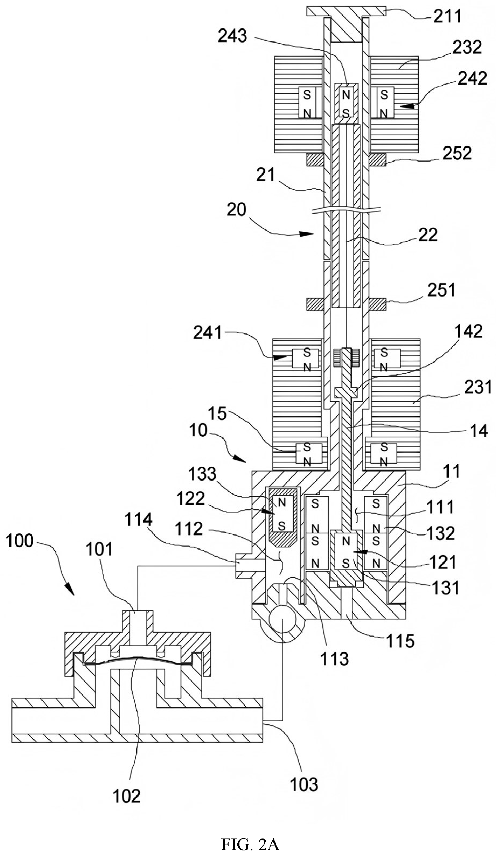

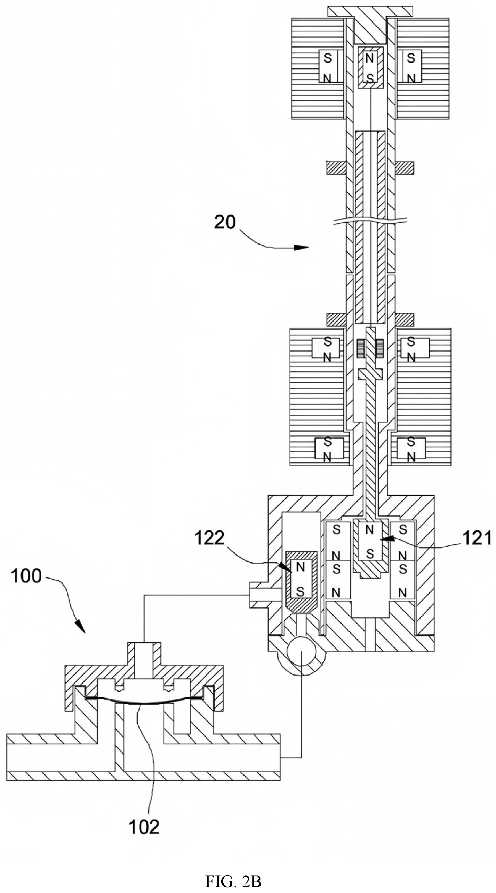

As shown in FIG. 2A and FIG. 2B, the control valve includes a valve core mechanism 10 and a trigger mechanism. The trigger mechanism is arranged above the valve core mechanism 10. The trigger mechanism is a float ball mechanism 20. The hydraulically controlled on-off valve is a diaphragm valve 100, and the control valve is used to control the opening and closing of the diaphragm valve 100.

The structures of the valve core mechanism 10 and the float ball mechanism 20 of the control valve of this embodiment are substantially the same as those of the control valve of Embodiment 1.

The biggest structural differences between the control valve of this embodiment and the control valve of Embodiment 1 are:
The arrangement of the active magnet 131, the positioning magnet, and the passive magnet 133 in the magnetic force interaction component is different.

The valve core mechanism 10 of the control valve of this embodiment removes the follower stepped shaft 16 in Embodiment 1.

To describe the control valve of this embodiment more clearly and comprehensively, the content already described in Embodiment 1 will be described again in this embodiment, and the components (structures) in this embodiment corresponding to those in Embodiment 1 will continue to use the names and reference numerals recorded in Embodiment 1.

The valve core mechanism 10 includes a valve body 11, an active valve core 121, a passive valve core 122, a magnetic force interaction component, a valve rod 14, and a trigger magnet 15.

A vertically extending active valve cavity 111 is arranged in a middle portion inside the valve body 11, and an air hole 115 is opened at a bottom of the active valve core 121. The active valve core 121 is arranged in the active valve cavity 111 and is vertically movable along the active valve cavity 111. Thus, within a movement stroke, the active valve core 121 has a first position located at a lower portion of the active valve cavity 111 and a second position located at an upper portion of the active valve cavity 111. A passive valve cavity 112 is arranged in the valve body 11 on one side of the active valve cavity 111. The passive valve cavity 112 is parallel to the active valve cavity 111. The passive valve core 122 is arranged in the passive valve cavity 112 and is vertically movable along the passive valve cavity 112. A fluid controlled port 113 is opened at a bottom of the passive valve cavity 112. A liquid inlet port 114 is opened on one side of the valve body 11, the liquid inlet port 114 is in communication with the passive valve cavity 112. The hydraulic control port 101 of the diaphragm valve 100 is connected to the liquid inlet port 114, and the fluid controlled port 113 is connected to the outlet 103 of the diaphragm valve 100.

As shown in FIG. 2A, after the passive valve core 122 moves upward, the passive valve core 122 opens the fluid controlled port 113, and the diaphragm valve 100 is opened. As shown in FIG. 2B, after the passive valve core 122 moves downward, the passive valve core 122 closes the fluid controlled port 113, and the diaphragm valve 100 is closed.

The magnetic force interaction component includes an active magnet 131, a positioning magnet 132, and a passive magnet 133. The active magnet 131 is configured as a bar-shaped magnet and is arranged on the active valve core 121. The positioning magnet 132 is configured as an annular magnet, is arranged on the valve body 111 in a fixed manner relative to the valve body 111, surrounds the active valve core 121, and the positioning magnet 132 is longer than the active magnet 131.

The passive magnet 133 is configured as a bar-shaped magnet and is arranged on the passive valve core 122. Magnetic pole directions of the active magnet 131, the positioning magnet 132, and the passive magnet 133 are the same. Opposite magnetic poles of the active magnet 131 and the positioning magnet 132 face the same direction, and opposite magnetic poles of the passive magnet 133 and the positioning magnet 132 face the same direction.

The difference between the magnetic force interaction component in this embodiment and that in Embodiment 1 is: the active magnet 131 includes only one magnet unit; the positioning magnet 132 is formed by stacking two magnet units of equal length with opposite magnetic poles facing each other, and the length of the magnet unit of the positioning magnet 132 is equal to the length of the magnet unit of the active magnet 131.

The float ball mechanism 20 includes a tube body 21, a first float 231, a second float 232, and a magnetic force follower mechanism. The tube body 21 is arranged above the valve body 11. A lower portion of the valve rod 14 is connected to the active valve core 121, and an upper portion of the valve rod 14 extends into the tube body 21. A plug 211 is arranged at an upper end of the tube body 21. The first float 231 and the second float 232 are sleeved on the tube body 21 and are both vertically slidable along the tube body 21. The first float 231 is located below the second float 232. Limit rings are provided on the tube body 21, including a lower limit ring 251 and an upper limit ring 252. The lower limit ring 251 is arranged at a lower portion of the tube body 21, and the upper limit ring 252 is arranged at an upper portion of the tube body 21. The lower limit ring 251 is configured to stop the upward-moving first float 231, and the upper limit ring 252 is configured to stop the downward-moving second float 232. The second float 232 is indirectly connected to the upper end of the valve rod 14 via the thread 22.

The trigger magnet 15 is arranged at a bottom of the first float 231. The magnetic pole arrangement direction of the trigger magnet 15 in this embodiment is the same as that in Embodiment 1. That is, opposite magnetic poles of the trigger magnet 15 and the positioning magnet 132 face each other, and the like magnetic poles of the trigger magnet 15 and the active magnet 131 face each other. Thus, when the trigger magnet 15 approaches the positioning magnet 132 and the active magnet 131, a magnetic attractive force is formed between the trigger magnet 15 and the positioning magnet 132, while a magnetic repulsive force is formed between the trigger magnet 15 and the active magnet 131.

The magnetic force follower mechanism includes a lower magnetic force follower component 241 and an upper magnetic force follower component 242. Each of the lower magnetic force follower component 241 and the upper magnetic force follower component 242 includes two magnetic force attracting components. The two magnetic force attracting components of the lower magnetic force follower component 241 are respectively arranged on upper radial inner sides of the first float 231 and are sleeved on the valve rod 14, and the valve rod 14 and the magnetic force attracting component sleeved thereon are relatively movable. The two magnetic force attracting components of the lower magnetic force follower component 241, by forming a magnetic attractive force therebetween, cause the magnetic force attracting component sleeved on the outer periphery of the valve rod 14 and the first float 231 to follow each other. The two magnetic force attracting components of the upper magnetic force follower component 242 are respectively arranged on a radial inner side of the first float 232 and on a follower connecting component 243 connected to the upper end of the thread 22. The two magnetic force attracting components of the upper magnetic force follower component 242, by forming a magnetic attractive force therebetween, cause the follower connecting component 243 and the second float 232 to follow each other. Thus, when the second float 232 moves upward, the second float 232 pulls the thread 22 via the upper magnetic force follower component 242 and the follower connecting component 243, thereby pulling the valve rod 14 via the thread 22 to drive the active valve core 121 to move upward.

### Application Conditions of the Control Valve of Embodiment 2

The application conditions of the control valve of this embodiment are the same as those of the control valve of Embodiment 1. The arrangement positions of the float ball mechanism 20 and the valve core mechanism 10 of the control valve are also the same as in Embodiment 1. The connection relationships among the diaphragm valve 100 as the hydraulically controlled on-off valve, the water supply pipeline, and the control valve are also the same as in Embodiment 1.

### Working Process of the Control Valve of Embodiment 2

The working process of the control valve of this embodiment is substantially the same as that of Embodiment 1. The differences lie in the magnetic force interactions among the magnets in the magnetic force interaction component, the movement stroke of the active valve core 121, and the magnitude of the required trigger force.

As shown in FIG. 2A, when the liquid level in the water tank drops to the preset lower limit liquid level, the first float 231 and the second float 232 are in a low position, the active valve core 121 is in the first position, and the passive valve core 122 is in the first state where the fluid controlled port 113 is opened. Thus, the diaphragm valve 100 is in an open state, the water supply pipeline is in an open state, and water enters the water tank through the water supply pipeline.

As the water filling continues, the liquid level in the water tank rises, and the first float 231 floats upward. When the first float 231 moves upward to the lower limit ring 251, it is stopped by the lower limit ring 251.

As shown in FIG. 2B, when the liquid level rises to the preset upper limit liquid level, the water tank is filled with water, the second float 232 moves upward, pulling the thread 22 via the upper magnetic force follower component 242 to drive the valve rod 14 upward, then pulling the active valve core 121 upward, causing the active valve core 121 to switch from the first position to the second position, thereby forcing the passive valve core 122 to move downward to the second state where the fluid controlled port 113 is closed, thus closing the diaphragm valve 100, blocking the water supply pipeline, and stopping the water supply to the water tank. After the active valve core 121 is switched to the second position, the upper end surface of the active magnet 131 is substantially flush with the upper end surface of the positioning magnet 132, and is maintained in the substantially flush position by magnetic attractive force.

The first float 231 and the second float 232 may be configured with two types of sequential action relationships:
The first action relationship: the first float 231 floats upward before the second float 232. Specifically, when the liquid level rises to a certain height but not to the preset upper limit liquid level, the first float 231 relies on buoyancy to overcome the magnetic attractive force of the positioning magnet 132 on the trigger magnet 15 and floats upward first.

The second action relationship: the second float 232 floats upward before the first float 231. Specifically, after the liquid level rises to the preset upper limit liquid level, the second float 232 first floats upward, pulling the valve rod 14 upward via the thread 22. Subsequently, the annular portion 142 on the valve rod 14 pushes the first float 231 upward and, combined with the buoyancy on the first float 231, causes the first float 231 to float upward.

As the liquid level in the water tank drops due to water usage, when the liquid level in the water tank drops to the preset lower limit liquid level, the second float 232 has already moved downward to a low position, and the pulling force of the thread 22 on the valve rod 14 has been removed. During the downward movement of the first float 231, on one hand, the first float 231 drives the lower magnetic force follower component 241 downward, so that the magnetic force attracting component of the lower magnetic force follower component 241 sleeved on the valve rod 14 pushes the annular portion 142 of the valve rod 14 downward to drive the active valve core 121 downward. On the other hand, the downward movement of the first float 231 increases the magnetic attractive force of the positioning magnet 132 on the trigger magnet 15, and increases the magnetic repulsive force of the trigger magnet 15 on the active magnet 131. The trigger magnet 15, through its magnetic repulsive force on the active magnet 131, drives the active valve core 121 downward. Under the combined action of these two forces, the active valve core 121 is forced to move downward to the lower portion of the active valve cavity 111, i.e., forced to switch from the second position to the first position. Correspondingly, due to the change in position of the active magnet 131, the magnetic force interaction on the passive magnet 133 from the active magnet 131 and the positioning magnet changes, forcing the passive valve core 122 to move upward to the first state where the fluid controlled port 113 is opened, thus opening the diaphragm valve 100, opening the water supply pipeline, and filling the water tank again. After the active valve core 121 is switched to the first position, the lower end surface of the active magnet 131 is substantially flush with the lower end surface of the positioning magnet 132, and is maintained in the substantially flush position by magnetic attractive force. Additionally, the passive valve core 122 moves upward to a position where the upper end surface of the passive magnet 133 is substantially flush with the upper end surface of the positioning magnet 132, and is maintained in the substantially flush position by magnetic attractive force.

It should be noted that the control valve of Embodiment 2 and the diaphragm valve 100 are two independent valves, but they may also be configured as an integrated on-off valve. The control valve of Embodiment 2 may be used directly as an on-off valve, or in combination with other types of hydraulically controlled on-off valves.

### Advantages of the Control Valve of Embodiment 2:

The structure, construction, and magnetic pole arrangement of the positioning magnet 132 and the active magnet 131 enable the active valve core 121 to be maintained at the switched first position or second position, thereby making the opening/closing state of the hydraulically controlled on-off valve less affected, or even unaffected, by liquid level fluctuations in the water tank (same advantage as Embodiment 1).

The structure, construction, and magnetic pole arrangement of the positioning magnet 132 and the active magnet 131 enable the passive valve core 122 to switch positions when the active valve core 121 is fully switched to the first position or the second position, thereby making the opening/closing state of the passive valve core 122 less affected, or even unaffected, by liquid level fluctuations (same advantage as Embodiment 1).

The downward movement of the first float 231 is used to control the opening of the controlled port, and the upward movement of the second float 232 is used to control the closing of the controlled port, thereby allowing the water tank to achieve a larger single water filling volume (same advantage as Embodiment 1).

In this embodiment, the trigger force required for the active valve core 121 to switch between the first position and the second position is larger, and the movement stroke of the active valve core 121 is larger. Thus, the active valve core 121 may be maintained more stably at the switched position and is less affected by liquid level fluctuations.

The active magnet 131 provided on the active valve core 121 may be replaced by a ferrous material having equal maximum radial dimensions at both ends and an axial length equal to the length of the active magnet 131, thereby reducing cost.

### Embodiment 3

### Structure of the Control Valve of Embodiment 3

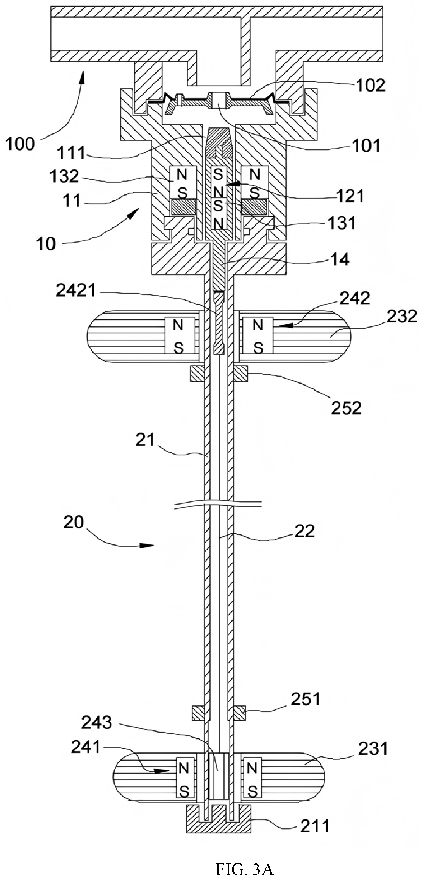

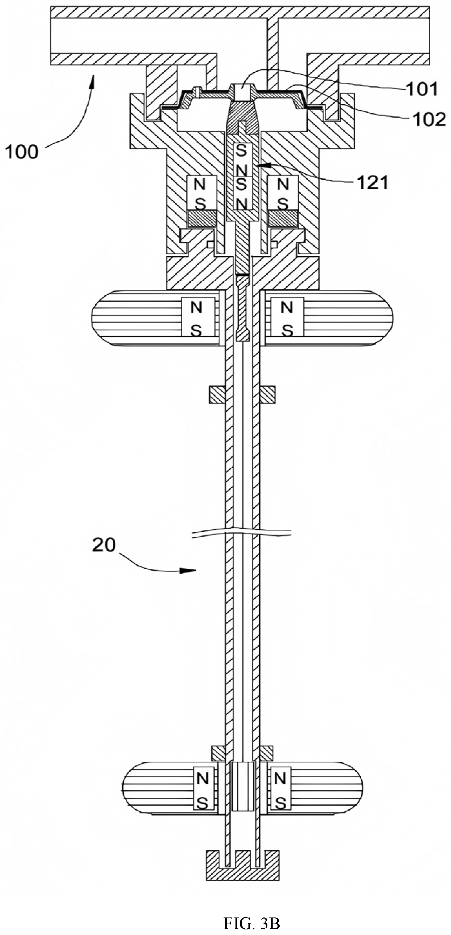

As shown in FIG. 3A and FIG. 3B, the control valve includes a valve core mechanism 10 and a trigger mechanism. The trigger mechanism is arranged below the valve core mechanism 10, and the trigger mechanism is a float ball mechanism 20. The hydraulically controlled on-off valve is a diaphragm valve 100, which is arranged above the valve core mechanism 10. The control valve is configured to control the opening and closing of the diaphragm valve 100.

The valve core mechanism 10 includes a valve body 11, an active valve core 121, a magnetic force interaction component, and a valve rod 14.

A top of the valve body 11 is connected to the diaphragm valve 100. A vertically extending active valve cavity 111 is arranged in a middle portion inside the valve body 11, and the active valve cavity 111 is in communication with the top of the valve body 11 and is opposite a through hole in the diaphragm 102 of the diaphragm valve 100. This through hole serves as a hydraulic control port 101. Therefore, this through hole may be referred to as the hydraulic control port 101 of the diaphragm valve 100 (the hydraulic control port 101 belongs to the controlled port). The active valve core 121 is arranged in the active valve cavity 111 and is vertically movable along the active valve cavity 111. Thus, the active valve core 121 may directly close the hydraulic control port 101 by moving upward, and may directly open the hydraulic control port 101 by moving downward. Therefore, within the movement stroke, the active valve core 121 has a first position located at a lower portion of the active valve cavity 111 where the hydraulic control port 101 is opened, and a second position located at an upper portion of the active valve cavity 111 where the hydraulic control port 101 is closed.

As shown in FIG. 3A, after the active valve core 121 is switched from the second position to the first position where the hydraulic control port 101 on the diaphragm 102 of the diaphragm valve 100 is opened, the diaphragm valve 100 is opened. As shown in FIG. 3B, after the active valve core 121 is switched from the first position to the second position where the hydraulic control port 101 on the diaphragm 102 of the diaphragm valve 100 is closed, the diaphragm valve 100 is closed.

The magnetic force interaction component includes an active magnet 131 and a positioning magnet 132. The active magnet 131 is configured as a bar-shaped magnet and is arranged on the active valve core 121. The positioning magnet 132 is configured as an annular magnet, is arranged on the valve body 11 in a fixed manner relative to the valve body 111, surrounds the active valve core 121, and the active magnet 131 is longer than the positioning magnet 132.

Magnetic pole directions of the active magnet 131 and the positioning magnet 132 are the same, and opposite magnetic poles of the active magnet 131 and the positioning magnet 132 face the same direction.

The positioning magnet 132 includes one magnet unit. The active magnet 131 is formed by stacking two magnet units of equal length with opposite magnetic poles facing each other. The length of the magnet unit of the positioning magnet 132 is equal to the length of the magnet unit of the active magnet 131.

An upper portion of the valve rod 14 is connected to the active valve core 121, and a lower portion of the valve rod 14 extends toward the float ball mechanism 20.

The trigger mechanism includes a tube body 21, a first float 231, a second float 232, and a magnetic force follower mechanism. The tube body 21 is arranged below the valve body 11. An upper end of the tube body 21 is connected to a bottom of the valve body 11. The lower portion of the valve rod 14 extends into the tube body 21. A plug 211 is arranged at a lower end of the tube body 21. The first float 231 and the second float 232 are sleeved on the tube body 21 and are both vertically slidable along the tube body 21. The first float 231 is located below the second float 232. Limit rings are provided on the tube body 21, including a lower limit ring 251 and an upper limit ring 252. The lower limit ring 251 is arranged at a lower portion of the tube body 21, and the upper limit ring 252 is arranged at an upper portion of the tube body 21. The lower limit ring 251 is configured to stop the upward-moving first float 231, and the upper limit ring 252 is configured to stop the downward-moving second float 232. The first float 231 is indirectly connected to the valve rod 14 via a thread 22.

The magnetic force follower mechanism includes an upper magnetic force follower component 242 and a lower magnetic force follower component 241. Each of the lower magnetic force follower component 241 and the upper magnetic force follower component 242 includes two magnetic force attracting components. The two magnetic force attracting components may both be magnets, or one may be a magnet and the other a ferrous component. The two magnetic force attracting components of the upper magnetic force follower component 242 are respectively arranged on a radial inner side of the second float 232 and at a lower end of the valve rod 14. The magnetic force attracting component arranged at the lower end of the valve rod 14 is configured as a substantially rod-like structure 2421. The magnetic force attracting component arranged on the second float 232 is configured as a substantially ring structure. The two magnetic force attracting components of the upper magnetic force follower component 242, by forming a magnetic attractive force therebetween, cause the valve rod 14 and the second float 232 to follow each other. The two magnetic force attracting components of the lower magnetic force follower component 241 are respectively arranged on a radial inner side of the first float 231 and on a follower connecting component 243. The thread 22 is connected between the follower connecting component 243 and the valve rod 14. The two magnetic force attracting components of the lower magnetic force follower component 241, by forming a magnetic attractive force therebetween, cause the follower connecting component 243 and the first float 231 to follow each other. When the first float 231 moves downward, the first float 231 pulls the thread 22 via the lower magnetic force follower component 241 and the follower connecting component 243, thereby pulling the valve rod 14 via the thread 22 to drive the active valve core 121 to move downward.

### Application Conditions of the Control Valve of Embodiment 3

The control valve of this embodiment controls the water supply to a water tank by controlling the opening and closing of the hydraulically controlled on-off valve. The float ball mechanism 20 of the control valve extends into the water tank from a top of the water tank. The first float 231 is closer to a bottom of the water tank, and the second float 232 is closer to the top of the water tank. The valve core mechanism 10 of the control valve is located at the top of the water tank.

The diaphragm valve 100, as the hydraulically controlled on-off valve, is located on a water supply pipeline for filling the water tank. The active valve core 121 of the control valve is used to directly close or open the hydraulic control port 101 on the diaphragm 102 of the diaphragm valve 100. The medium inside the valve body 11 of the valve core mechanism 10 and the tube body 21 of the float ball mechanism 20 is a gas-liquid mixture.

### Working Process of the Control Valve of Embodiment 3

As shown in FIG. 3A, when the liquid level in the water tank drops to the preset lower limit liquid level, the first float 231 and the second float 232 are in a low position, the active valve core 121 is in the first position, the hydraulic control port 101 of the diaphragm valve 100 is in an open state, the diaphragm valve 100 is in an open state, the water supply pipeline is in an open state, and water enters the water tank through the water supply pipeline.

As the water filling continues, the liquid level in the water tank rises, and the first float 231 moves upward. The first float 231, via the lower magnetic force follower component 241, removes the pulling force of the thread 22 on the valve rod 14. When the first float 231 moves upward to the lower limit ring 251, it is stopped by the lower limit ring 251, and the liquid level in the water tank continues to rise.

As shown in FIG. 3B, when the liquid level rises to the preset upper limit liquid level, the water tank is filled with water, the second float 232 moves upward, driving the valve rod 14 upward via the upper magnetic force follower component 242, causing the active valve core 121 to switch from the first position to the second position. The active valve core 121 closes the hydraulic control port 101 of the diaphragm 102 of the diaphragm valve 100, thus closing the diaphragm valve 100, blocking the water supply pipeline, and stopping the water supply to the water tank. After the active valve core 121 is switched to the second position, a lower end surface of the active magnet 131 is substantially flush with a lower end surface of the positioning magnet 132, and is maintained in the substantially flush position by magnetic attractive force.

As the liquid level in the water tank drops due to water usage, the second float 232 moves downward. Thus, the second float 232, by gravity, applies a downward force to the active valve core 121 via the upper magnetic force follower component 242. When the liquid level in the water tank drops to the preset lower limit liquid level, the first float 231 moves downward. So, the first float 231 and the second float 232, by gravity, apply a downward force to the active valve core 121 via the lower magnetic force follower component 241 and the thread 22. Under the combined action of these two forces, the active valve core 121 is forced to switch from the second position to the first position. The active valve core 121 opens the hydraulic control port 101 of the diaphragm 102 of the diaphragm valve 100, thus opening the diaphragm valve 100, opening the water supply pipeline, and filling the water tank again. After the active valve core 121 is switched to the first position, an upper end surface of the active magnet 131 is substantially flush with an upper end surface of the positioning magnet 132, and is maintained in the substantially flush position by magnetic attractive force.

It should be noted that the control valve of Embodiment 3 and the diaphragm valve 100 form an integrated on-off valve, but they may also be separately configured as two independent valves. When the control valve of Embodiment 3 is configured as an independent valve body, it may be used directly as an on-off valve, or in combination with other types of hydraulically controlled on-off valves.

### Advantages of the Control Valve of Embodiment 3:

The structure, construction, and magnetic pole arrangement of the positioning magnet 132 and the active magnet 131 enable the active valve core 121 to be maintained at the switched first position or second position, thereby making the opening/closing state of the hydraulically controlled on-off valve less affected, or even unaffected, by liquid level fluctuations in the water tank (same advantage as Embodiment 1).

The active valve core 121 directly controls the opening and closing of the hydraulic control port 101 on the diaphragm 102 of the diaphragm valve 100.

The control valve is located at the top of the water tank.

### Embodiment 4

### Structure of the Control Valve of Embodiment 4

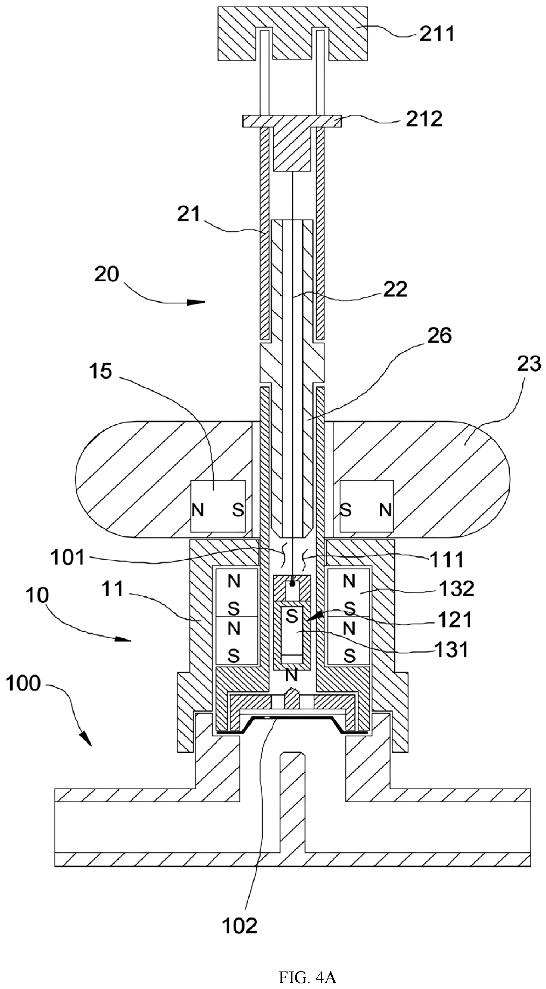

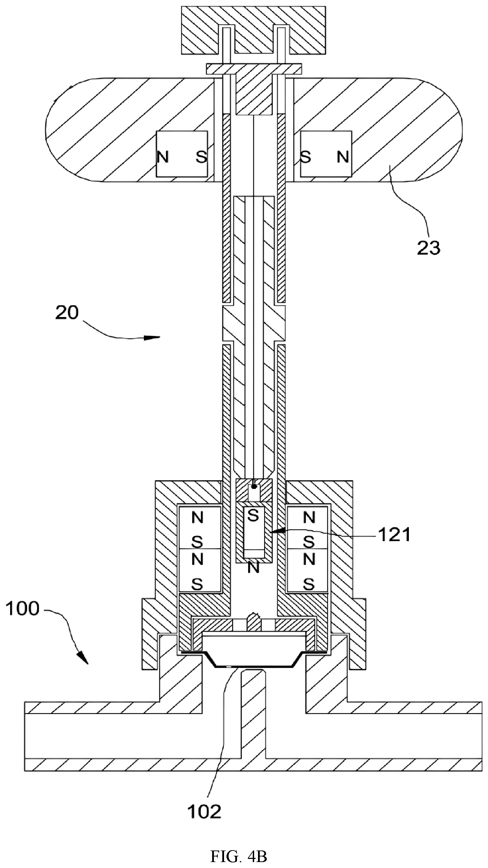

As shown in FIG. 4A and FIG. 4B, the control valve includes a valve core mechanism 10 and a trigger mechanism. The trigger mechanism is arranged above the valve core mechanism 10, and the trigger mechanism is a float ball mechanism 20. The hydraulically controlled on-off valve is a diaphragm valve 100, which is arranged below the valve core mechanism 10. The control valve is used to control the opening and closing of the diaphragm valve 100.

The valve core mechanism 10 includes a valve body 11, an active valve core 121, a magnetic force interaction component, and a trigger magnet 15.

A bottom of the valve body 11 is connected to the diaphragm valve 100. A vertically extending active valve cavity 111 is arranged in a middle portion inside the valve body 11, and the active valve cavity 111 penetrates through to the bottom of the valve body 11 and is opposite the hydraulic control port 101 of the diaphragm valve 100. The active valve core 121 is arranged in the active valve cavity 111 and is vertically movable along the active valve cavity 111.

The magnetic force interaction component includes an active magnet 131 and a positioning magnet 132. The active magnet 131 is configured as a bar-shaped magnet and is arranged on the active valve core 121. The positioning magnet 132 is configured as an annular magnet, is arranged on the valve body 11 in a fixed manner relative to the valve body 111, surrounds the active valve core 121, and the positioning magnet 132 is longer than the active magnet 131.

Magnetic pole directions of the active magnet 131 and the positioning magnet 132 are the same, and opposite magnetic poles of the active magnet 131 and the positioning magnet 132 face the same direction.

The positioning magnet 132 is formed by stacking two magnet units of equal length with opposite magnetic poles facing each other. The active magnet 131 is formed by stacking two magnet units of different lengths with opposite magnetic poles facing each other. A length of a longer magnet unit in the active magnet 131 is equal to a length of a magnet unit in the positioning magnet 132, and a length of a shorter magnet unit in the active magnet 131 is less than half of the length of the magnet unit of the positioning magnet 132.

The trigger mechanism includes only one float, which may be referred to as a main float 23. The trigger mechanism further includes a tube body 21, a liner tube 26, and a floating component 212. A lower end of the tube body 21 is connected to the valve body 11. The liner tube 26 is fixedly arranged within the tube body 21. A plug 211 is arranged at an upper end of the tube body 21. The floating component 212 is arranged at the upper end of the tube body 21 and is vertically movable along the tube body 21. The main float 23 is sleeved on the tube body 21 and is vertically slidable along the tube body 21. The floating component 212 is connected to the active valve core 121 via a thread 22 passing through the liner tube 26.

The active valve core 121 indirectly opens the hydraulic control port 101 of the diaphragm valve 100 by moving downward to open a lower end of the liner tube 26, and indirectly closes the hydraulic control port 101 of the diaphragm valve 100 by moving upward to close the lower end of the liner tube 26. Thus, within the movement stroke, the active valve core 121 has a first position located at a lower portion of the active valve cavity 111 for indirectly opening the hydraulic control port 101 of the diaphragm valve 100, and a second position located at an upper portion of the active valve cavity 111 for indirectly closing the hydraulic control port 101 of the diaphragm valve 100.

As shown in FIG. 4A, when the active valve core 121 is switched from the second position to the first position, the active valve core 121 moves downward to open the lower end of the liner tube 26, the fluid chamber above the diaphragm 102 of the diaphragm valve 100 is depressurized, the diaphragm 102 deforms upward, and the diaphragm valve 100 is opened. As shown in FIG. 4B, when the active valve core 121 is switched from the first position to the second position, the active valve core 121 moves upward to close the lower end of the liner tube 26, the fluid chamber above the diaphragm 102 of the diaphragm valve 100 is pressurized, the diaphragm 102 deforms downward, and the diaphragm valve 100 is closed.

The trigger magnet 15 is arranged in the main float 23. The trigger magnet 15 is formed by multiple magnets arranged circumferentially, so that two magnetic poles of the trigger magnet 15 are located on a radial inner side and a radial outer side of the trigger magnet 15, respectively. A polarity of the magnetic pole on the radial inner side of the trigger magnet 15 is opposite to a polarity of an upper end of the positioning magnet 132, and is the same as a polarity of an upper end of the active magnet 131. Thus, when the trigger magnet 15 approaches the positioning magnet 132 and the active magnet 131, a magnetic attractive force is formed between the trigger magnet 15 and the positioning magnet 132, while a magnetic repulsive force is formed between the trigger magnet 15 and the active magnet 131.

### Application Conditions of the Control Valve of Embodiment 4

The control valve of this embodiment controls the water supply to a water tank by controlling the opening and closing of the hydraulically controlled on-off valve. The float ball mechanism 20 of the control valve extends into the water tank from a bottom of the water tank. The valve core mechanism 10 of the control valve is arranged at the bottom of the water tank.

The diaphragm valve 100, as the hydraulically controlled on-off valve, is located on a water supply pipeline for filling the water tank. The active valve core 121 of the control valve is used to indirectly control the hydraulic control port 101 of the diaphragm valve 100. The medium inside the valve body 11 of the valve core mechanism 10 and the tube body 21 of the float ball mechanism 20 is liquid.

### Working Process of the Control Valve of Embodiment 4

As shown in FIG. 4A, when the liquid level in the water tank drops to the preset lower limit liquid level, the main float 23 is in a low position, the active valve core 121 is in the first position, and the lower end of the liner tube 26 is in an open state opened by the active valve core 121. Thus, the hydraulic control port 101 of the diaphragm valve 100 is in an open state, the diaphragm valve 100 is in an open state, the water supply pipeline is in an open state, and water enters the water tank through the water supply pipeline.

As the water filling continues, the liquid level in the water tank rises, and the main float 23 overcomes the magnetic attractive force of the positioning magnet 132 on the trigger magnet 15 and floats upward. The liquid level in the water tank continues to rise.

As shown in FIG. 4B, when the liquid level rises to the preset upper limit liquid level, the main float 23 moves upward, driving the floating component 212 to move upward. The floating component 212 pulls the active valve core 121 upward via the thread 22, causing the active valve core 121 to switch from the first position to the second position. The active valve core 121 closes the lower end of the liner tube 26, thereby indirectly closing the hydraulic control port 101 of the diaphragm valve 100, closing the diaphragm valve 100, and stopping the water supply to the water tank. After the active valve core 121 is switched to the second position, the upper end surface of the active magnet 131 is substantially flush with the upper end surface of the positioning magnet 132, and is maintained in the substantially flush position by magnetic attractive force.

As the liquid level in the water tank drops due to water usage, the main float 23 moves downward. Due to the downward movement of the main float 23, the pulling force of the thread 22 on the active valve core 121 is removed. During the downward movement of the main float 23 to the low position, the downward movement of the main float 23 increases the magnetic attractive force of the positioning magnet 132 on the trigger magnet 15, and increases the magnetic repulsive force of the trigger magnet 15 on the active magnet 131. The magnetic force interaction of the trigger magnet 15 on the active magnet 131 drives the active valve core 121 to move downward, the active valve core 121 is switched from the second position to the first position, and the active valve core 121 reopens the lower end of the liner tube 26, thereby indirectly opening the hydraulic control port 101 of the diaphragm valve 100, opening the diaphragm valve 100, opening the water supply pipeline, and filling the water tank again. After the active valve core 121 is switched to the first position, the lower end surface of the active magnet 131 is substantially flush with the lower end surface of the positioning magnet 132, and is maintained in the substantially flush position by magnetic attractive force.

It should be noted that the control valve of Embodiment 4 and the diaphragm valve 100 form an integrated on-off valve, but they may also be separately configured as two independent valves. When the control valve of Embodiment 4 is configured as an independent valve body, it may be used directly as an on-off valve, or in combination with other types of hydraulically controlled on-off valves.

### Advantages of the Control Valve of Embodiment 4:

The structure, construction, and magnetic pole arrangement of the positioning magnet 132 and the active magnet 131 enable the active valve core 121 to be maintained at the switched first position or second position, thereby making the opening/closing state of the hydraulically controlled on-off valve less affected, or even unaffected, by liquid level fluctuations in the water tank.

A single float is used to control the opening and closing of the diaphragm valve 100, thereby controlling the water supply into the water tank.

The active valve core 121 may indirectly close and open the hydraulic control port 101 of the diaphragm valve 100 with a relatively small stroke (of the main float 23).

The trigger force required for the active valve core 121 to switch between the first position and the second position is relatively small, and the movement stroke is also relatively small.

The main float 23 may cause the active valve core 121 to switch between the first position and the second position with a relatively small stroke, and the active valve core 121 remains unchanged after switching positions. This provides a locking effect after the lower end of the liner tube 26 is closed, thereby preventing the float ball mechanism 20 from swinging with the liquid level due to an increase in hydraulic pressure in the water supply pipeline, which would otherwise cause frequent opening and closing of the hydraulically controlled on-off valve.

The active magnet 131 provided on the active valve core 121 may be replaced by a ferrous material having equal maximum radial dimensions at both ends and an axial length equal to the length of the active magnet 131, thereby reducing cost.

The structure of the control valve is relatively compact.

### Embodiment 5

### Structure of the Control Valve of Embodiment 5

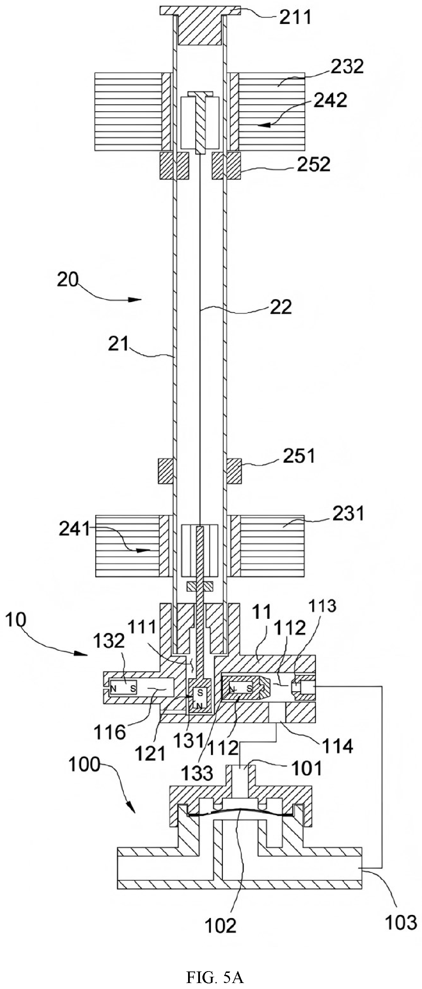

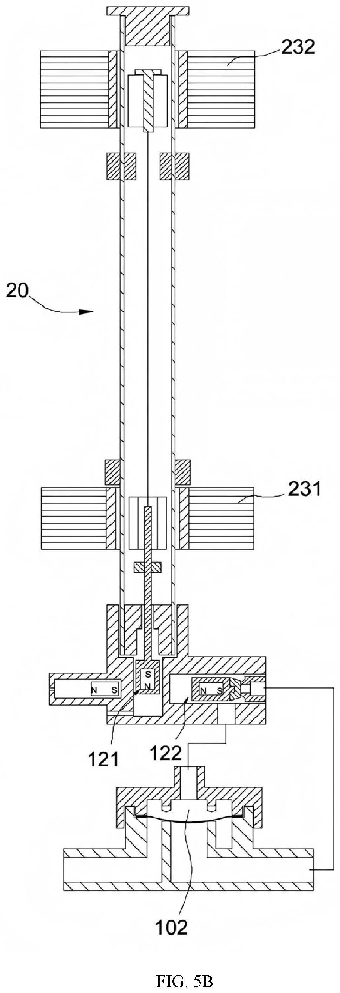

As shown in FIG. 5A and FIG. 5B, the control valve includes a valve core mechanism 10 and a trigger mechanism. The trigger mechanism is arranged above the valve core mechanism 10. The trigger mechanism is a float ball mechanism 20. The hydraulically controlled on-off valve is a diaphragm valve 100, and the control valve is configured to control the opening and closing of the diaphragm valve 100.

The structure of the float ball mechanism 20 of this embodiment is substantially the same as that of the float ball mechanism of Embodiment 1.

The valve core mechanism 10 of this embodiment differs from the valve core mechanism 10 of Embodiment 1, with the biggest differences as following:

In this embodiment, the positioning magnet 132 is arranged on the valve body 11 in a movable manner, whereas in Embodiment 1, the positioning magnet 132 is fixedly arranged on the valve body 11.

In this embodiment, the moving directions of the passive valve core 122 and the positioning magnet 132 are perpendicular to the moving direction of the active valve core 121, whereas in Embodiment 1, the moving direction of the passive valve core 122 is consistent with that of the active valve core 121.

Only the structures of this embodiment differing from Embodiment 1 will be described below.

As shown in FIG. 5A and FIG. 5B, the active valve cavity 111 in the valve body 11 extends vertically, and the active valve core 121 is vertically movable along the active valve cavity 111. A passive valve cavity 112 is provided on one side of the active valve cavity 111. An extension direction of the passive valve cavity 112 is perpendicular to the extension direction of the active valve cavity 111. A positioning valve cavity 116 is provided on the other side of the active valve cavity 111. An extension direction of the positioning valve cavity 116 is perpendicular to the extension direction of the active valve cavity 111, and the positioning valve cavity 116 is arranged coaxially with the passive valve cavity 112. The fluid controlled port 113 is provided on the passive valve cavity 112, and the end located away from the active valve cavity 111 is referred to as an outer end of the passive valve cavity 112, and the other end of the passive valve cavity 112 is referred to as an inner end of the passive valve cavity 112.

The passive valve core 122 having the passive magnet 133 is arranged in the passive valve cavity 112, and the passive valve core 122 is movable along the passive valve cavity 112. Thus, after the passive valve core 122 moves toward the active valve cavity 111 to the inner end of the passive valve cavity 112, the passive valve core 122 opens the fluid controlled port 113. After the passive valve core 122 moves away from the active valve cavity 111 to the outer end of the passive valve cavity 112, the passive valve core 122 closes the fluid controlled port 113. The positioning magnet 132 is arranged in the positioning valve cavity 116, and the positioning magnet 132 is movable along the positioning valve cavity 116. Thus, the positioning magnet 132 may approach and move away from the active valve cavity by moving.

The active magnet 131, the positioning magnet 132, and the passive magnet 133 are each one magnet unit, and are all bar-shaped magnets. A magnetic pole direction of the active magnet 131 is consistent with the moving direction of the active valve core 121. A magnetic pole direction of the passive magnet 133 is consistent with the moving direction of the passive valve core 122. A magnetic pole direction of the positioning magnet 132 is consistent with the moving direction of the positioning magnet 132. Therefore, the magnetic pole direction of the active magnet 131 is perpendicular to the magnetic pole directions of the passive magnet 133 and the positioning magnet 132. Opposite magnetic poles of the positioning magnet 132 and the passive magnet 133 face each other. A lower end magnetic pole of the active magnet 131 is the same as a magnetic pole of the passive magnet 133 that is close thereto. Thus, an upper end magnetic pole of the active magnet 131 is opposite the magnetic pole of the passive magnet 133 that is close thereto. Consequently, the lower end magnetic pole of the active magnet 131 is opposite to a magnetic pole of the positioning magnet 132 that is close thereto, and the upper end magnetic pole of the active magnet 131 is the same as the magnetic pole of the positioning magnet 132 that is close thereto.

After the active valve core 121 moves downward to switch to the first position, the upper end surface of the active magnet 131 moves to a position opposite a central line of the passive magnet 133 and the positioning magnet 132. At this time, the active magnet 131 exerts a magnetic attractive force on the passive magnet 133, causing the passive valve core 122 to move toward the inner end of the passive valve cavity 112 and approach the active valve core 121, thereby opening the fluid controlled port 113. The active magnet 131 exerts a magnetic repulsive force on the positioning magnet 132, causing the positioning magnet 132 to move away from the active valve core 121. After the active valve core 121 moves upward to switch to the second position, the lower end surface of the active magnet 131 moves to a position opposite the central line of the passive magnet 133 and the positioning magnet 132. At this time, the active magnet 131 exerts a magnetic repulsive force on the passive magnet 133, causing the passive valve core 122 to move toward the outer end of the passive valve cavity 112 and away from the active valve core 121, thereby closing the fluid controlled port 113. The active magnet 131 exerts a magnetic attractive force on the positioning magnet 132, causing the positioning magnet 132 to move toward the active valve core 121.

### Application Conditions of the Control Valve of Embodiment 5

The control valve of this embodiment controls the water supply to a water tank by controlling the opening and closing of the hydraulically controlled on-off valve. The float ball mechanism 20 of the control valve extends into the water tank from a bottom of the water tank. The first float 231 is closer to the bottom of the water tank, and the second float 232 is closer to a top of the water tank. The valve core mechanism 10 of the control valve is located at the bottom of the water tank.

The diaphragm valve 100, as the hydraulically controlled on-off valve, is located on a water supply pipeline for filling the water tank. The hydraulic control port 101 of the diaphragm valve 100 is connected to the liquid inlet port 114 of the valve body 11 of the valve core mechanism 10, and the fluid controlled port 113 of the valve body 11 is connected to the outlet 103 of the diaphragm valve 100.

### Working Process of the Control Valve of Embodiment 5

Since this embodiment does not include the trigger magnet 15, the first float 231 does not need to overcome the magnetic attractive force between the trigger magnet 15 and the positioning magnet 132. Therefore, the first float 231 floats upward before the second float 232, and there is no situation where the second float 232 floats upward before the first float 231.

As shown in FIG. 5A, when the liquid level in the water tank drops to the preset lower limit liquid level, the first float 231 and the second float 232 are in a low position, the active valve core 121 is in the first position, and the passive valve core 122 is at the inner end of the passive valve cavity 112. The passive valve core 122 is in a first state where the fluid controlled port 113 is opened. Thus, the diaphragm valve 100 is in an open state, the water supply pipeline is in an open state, and water enters the water tank through the water supply pipeline.

As the water filling continues, the liquid level in the water tank rises, and the first float 231 first floats upward. When the first float 231 moves upward to the lower limit ring 251, it is stopped by the lower limit ring 251.

As shown in FIG. 5B, when the liquid level rises to the preset upper limit liquid level, the water tank is filled with water, the second float 232 floats upward, pulling the thread 22 via the upper magnetic force follower component 242 to drive the valve rod 14 upward, then pulling the active valve core 121 upward, causing the active valve core 121 to switch from the first position to the second position. This forces the passive valve core 122 to move to the outer end of the passive valve cavity 112, and the positioning magnet 132 to move to a side of the positioning valve cavity 116 close to the active valve core 121. The passive valve core 122 is switched to a second state where the fluid controlled port 113 is closed, thus closing the diaphragm valve 100, blocking the water supply pipeline, and stopping the water supply to the water tank. After the active valve core 121 is switched to the second position, the lower end surface of the active magnet 131 is opposite the central line of the passive magnet 133 and the positioning magnet 132. The magnetic repulsive force between the active magnet 131 and the passive magnet 133, as well as the magnetic attractive force between the active magnet 131 and the positioning magnet 132 enable the active valve core 121 to be maintained at the switched second position.

As the liquid level in the water tank drops due to water usage, when the liquid level in the water tank drops to the preset lower limit liquid level, the second float 232 has already moved downward to a low position, and the pulling force of the thread 22 on the valve rod 14 has been removed. During the downward movement of the first float 231, the first float 231 drives the lower magnetic force follower component 241 downward. The lower magnetic force follower component 241 sleeved on the valve rod 14 pushes the annular portion 142 of the valve rod 14 downward to drive the active valve core 121 to move downward to the first position. At the same time, the active magnet 131 exerts a magnetic attractive force on the passive magnet 133, forcing the passive valve core 122 to move to the inner end of the passive valve cavity 112. The active magnet 131 exerts a magnetic repulsive force on the positioning magnet 132, forcing the positioning magnet 132 to move to a side of the positioning valve cavity 116 away from the active valve core 121. Thus, the passive valve core 112 is switched to the first state in which the fluid controlled port 113 is opened, thereby opening the diaphragm valve 100, opening the water supply pipeline, and filling the water tank again. After the active valve core 121 is switched to the first position, the upper end surface of the active magnet 131 is opposite the central line of the passive magnet 133 and the positioning magnet 132. The magnetic attractive force between the active magnet 131 and the passive magnet 133, as well as the magnetic repulsive force between the active magnet 131 and the positioning magnet 132 enable the active valve core 121 to be maintained at the switched first position.

It should be noted that the control valve of Embodiment 5 and the diaphragm valve 100 are two independent valves, but they may also be configured as an integrated on-off valve. The control valve of Embodiment 5 may be used directly as an on-off valve, or in combination with other types of hydraulically controlled on-off valves.

### Advantages of the Control Valve of Embodiment 5:

The structure, construction, and magnetic pole arrangement of the positioning magnet 132, the passive magnet 133, and the active magnet 131 enable the active valve core 121 to be maintained at the switched first position or second position, thereby making the opening/closing state of the hydraulically controlled on-off valve less affected, or even unaffected, by liquid level fluctuations in the water tank.

The downward movement of the first float 231 is used to control the opening of the controlled port (specifically, the fluid controlled port 113 belonging to the controlled port), and the upward movement of the second float 232 is used to control the closing of the controlled port, thereby allowing the water tank to achieve a larger single water filling volume.

The magnetic force interaction among the active magnet 131, the passive magnet 133, and the movable positioning magnet 132 results in a relatively small trigger force required to drive the active valve core 121 to switch between the first position and the second position, thus allowing the floats to be made smaller.

The movable positioning magnet 132, the passive magnet 133, the active magnet 131, and the magnetic pole arrangement therebetween enable the active valve core 121 to switch and be maintained at the first position or the second position with a smaller required force stroke, and reduce the application cost for achieving the desired effect.

The working media in the active valve cavity 111 and the passive valve cavity 112 may be different.

### Embodiment 6

### Structure of the Control Valve of Embodiment 6

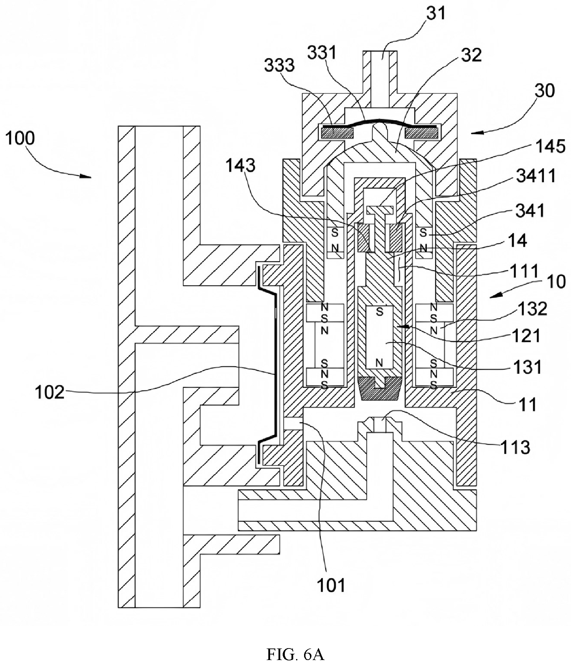

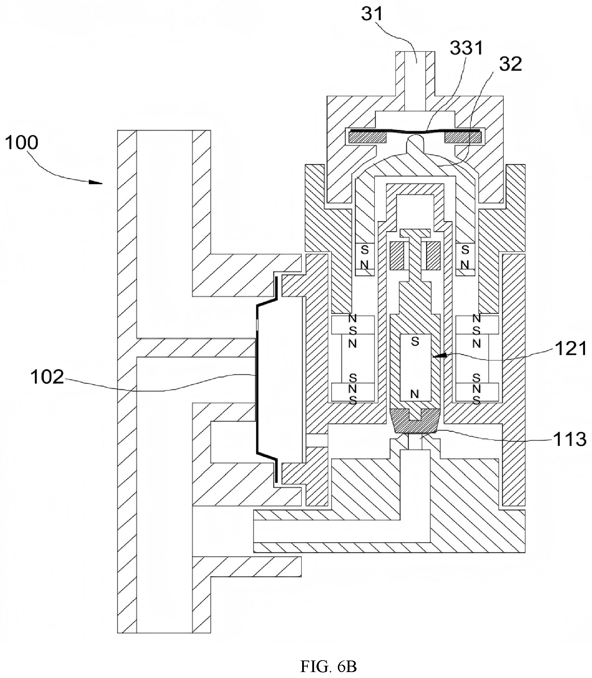

As shown in FIG. 6A and FIG. 6B, the control valve includes a valve core mechanism 10 and a trigger mechanism. The trigger mechanism is a hydraulic control mechanism 30. The valve core mechanism 10 is connected to the diaphragm valve 100 serving as the hydraulically controlled on-off valve. The hydraulic control mechanism 30 controls the opening and closing of the diaphragm valve 100 in response to a change in fluid pressure.

The valve core mechanism 10 includes a valve body 11, an active valve core 121, a magnetic force interaction component, and a valve rod 14.

A vertically extending active valve cavity 111 is arranged in a middle portion inside the valve body 11. A lower end of the active valve cavity 111 has a fluid controlled port 113 communicating with an outlet 103 of the diaphragm valve 100. A hydraulic control port 101 of the diaphragm valve 100 penetrates through to a cavity wall of the active valve cavity 111. The active valve core 121 is arranged in the active valve cavity 111 and is vertically movable along the active valve cavity 111. Thus, the active valve core 121 may close the fluid controlled port 113 by moving downward, thereby blocking the hydraulic control port 101 of the diaphragm valve 100 from the fluid controlled port 113. The active valve core 121 may open the fluid controlled port 113 by moving upward, thereby communicating the hydraulic control port 101 of the diaphragm valve 100 with the fluid controlled port 113. Therefore, within the movement stroke, the active valve core 121 has a first position located at an upper portion of the active valve cavity 111, where the hydraulic control port 101 is opened, and a second position located at a lower portion of the active valve cavity 111, where the hydraulic control port 101 is closed.

As shown in FIG. 6A, after the active valve core 121 is switched from the second position to the first position where the hydraulic control port 101 of the diaphragm valve 100 is opened, a fluid chamber of the diaphragm valve 100 is depressurized, and the diaphragm 102 deforms toward the hydraulic control port 101 to open the diaphragm valve 100. As shown in FIG. 6B, after the active valve core 121 is switched from the first position to the second position where the hydraulic control port 101 of the diaphragm valve 100 is closed, the fluid chamber of the diaphragm valve 100 is pressurized, and the diaphragm 102 deforms in an opposite direction to close the diaphragm valve 100.

The magnetic force interaction component includes an active magnet 131 and a positioning magnet 132. The active magnet 131 is configured as a bar-shaped magnet and is arranged on the active valve core 121. The positioning magnet 132 is configured as an annular magnet, is arranged on the valve body 11 in a fixed manner relative to the valve body 111, and surrounds the active valve core 121.

Magnetic pole directions of the active magnet 131 and the positioning magnet 132 are the same, and opposite magnetic poles of the active magnet 131 and the positioning magnet 132 face the same direction.

The positioning magnet 132 is formed by stacking three magnet units with opposite magnetic poles facing each other. A length of a middle magnet unit is greater than each of the lengths of magnet units on two axial sides thereof, and radially outer sides of the magnet units at the two sides protrude outward relative to a radially outer side of the middle magnet unit, and the two magnet units at the sides have equal length. The active magnet 131 includes one magnet unit. A length of the magnet unit of the active magnet 131 is equal to a sum of lengths of the long magnet unit and one short magnet unit in the positioning magnet 132.

The hydraulic control mechanism 30 includes a sliding sleeve 32 (as an actuating component), a reset magnet 341, and a spring diaphragm 331. The sliding sleeve 32 is arranged in the valve body 11 and located above the magnetic force interaction component. The sliding sleeve 32 is vertically movable. The spring diaphragm 331 is arranged above the sliding sleeve 32. An annular retaining ring 333 is arranged at a bottom of the spring diaphragm 331. A fluid chamber is formed above the sliding sleeve 32, and a pressure accumulating port 31 is formed above the fluid chamber. Fluid from a pipeline is introduced into the pressure accumulating port 31 of the hydraulic control mechanism 30. A protrusion is formed at a top of the sliding sleeve 32. After the sliding sleeve 32 moves upward, the protrusion approaches the spring diaphragm 331.

When a pressure in the fluid chamber exceeds a certain pressure value, the fluid in the fluid chamber forces the spring diaphragm 331 to deform downward. When the pressure in the fluid chamber is below that pressure value, the spring diaphragm 331 resets upward. It may be seen that this pressure value is a threshold defining the deformation of the spring diaphragm 331, and this threshold may be set by the structure of the spring diaphragm 331 and its related components. For example, the threshold may be reduced by making the spring diaphragm 331 thinner, or by adjusting an inner diameter of the annular retaining ring 333 below the spring diaphragm 331, thereby achieving the purpose of adjusting the threshold.

The reset magnet 341 is arranged at a bottom of the sliding sleeve 32. The like magnetic poles of the reset magnet 341 and the positioning magnet 132 face each other, thus forming a magnetic repulsive force between the positioning magnet 132 and the reset magnet 341.

A lower end of the valve rod 14 is connected to the active valve core 121, and an upper end of the valve rod 14 forms a stopping portion 145. A magnetic force attracting component 3411 is sleeved on the valve rod 14, such that the reset magnet 341 may also form a magnetic force follower assembly with the magnetic force attracting component 3411. That is, the reset magnet 341 and the magnetic force attracting component 3411 may follow each other by forming a magnetic attractive force therebetween.

### Application Conditions of the Control Valve of Embodiment 6

The control valve of this embodiment controls the connection and disconnection of a pipeline by controlling the opening and closing of the hydraulically controlled on-off valve. This pipeline may be a water supply pipeline for filling a water tank, or other pipelines in a gas delivery system. The control valve of this embodiment may also indirectly control the connection and disconnection of other pipelines connected to one pipeline by controlling the connection and disconnection of fluid in that one pipeline.

The trigger mechanism of the control valve is the hydraulic control mechanism 30. The hydraulic control mechanism 30 is used to drive the valve core mechanism 10 to operate, and thereby controlling the opening and closing of the diaphragm valve 100, by fluid introduced from a pipeline, a container, a front end of a valve, or the like.

### Working Process of the Control Valve of Embodiment 6

As shown in FIG. 6A, when the pressure at the pressure accumulating port 31 of the hydraulic control mechanism 30 of the control valve is in a state less than the threshold, the spring diaphragm 331 remains in an undeformed state. Under the action of the magnetic repulsive force formed between the positioning magnet 132 and the reset magnet 341, the sliding sleeve 32 is in a high position, and the active valve core 121 is in the first position. The hydraulic control port 101 of the diaphragm valve 100 is in communication with the fluid controlled port 113, i.e., the hydraulic control port 101 of the diaphragm valve 100 is opened, the diaphragm valve 100 is in an open state, and the pipeline where the diaphragm valve 100 is located is in an open state.

As shown in FIG. 6B, when the pressure at the pressure accumulating port 31 of the hydraulic control mechanism 30 of the control valve rises above the threshold, the spring diaphragm 331 of the hydraulic control mechanism 30 deforms downward. The spring diaphragm 331 pushes the sliding sleeve 32 downward, causing the sliding sleeve 32 to move downward. The sliding sleeve 32, via the magnetic attraction action formed between the reset magnet 341 and the magnetic force attracting component, causes the magnetic force attracting component to push the valve rod 14 downward (by the magnetic force attracting component acting on the stepped portion 143 of the valve rod 14 to push the valve rod 14). The valve rod 14 drives the active valve core 121 to move downward, and the active valve core 121 is switched from the first position to the second position where the fluid controlled port 113 and the hydraulic control port 101 of the diaphragm valve 100 are closed. The diaphragm valve 100 closes, and the pipeline where the diaphragm valve 100 is located is blocked. In this process, the hydraulic control mechanism 30 applies the second trigger force to the active valve core 121 to switch the active valve core 121 from the first position to the second position. After the active valve core 121 is switched to the second position, a lower end surface of the active magnet 131 is substantially flush with a lower end surface of the positioning magnet 132, and is maintained in the substantially flush position by magnetic attractive force.

When the pressure at the pressure accumulating port 31 of the hydraulic control mechanism 30 of the control valve decreases below the threshold, the spring diaphragm 331 of the hydraulic control mechanism 30 elastically resets. Under the magnetic repulsive force of the positioning magnet 132 on the reset magnet 341, the sliding sleeve 32 moves upward, finally causing the protrusion of the sliding sleeve 32 to approach the bottom of the spring diaphragm 331. During the upward movement of the sliding sleeve 32, the sliding sleeve 32 drives the valve rod 14 upward via the magnetic attraction action between the reset magnet 341 and the magnetic force attracting component. The valve rod 14 drives the active valve core 121 upward, thereby causing the active valve core 121 to switch from the second position to the first position. The active valve core 121 opens the fluid controlled port 113 and the hydraulic control port 101 of the diaphragm valve 100. The diaphragm valve 100 is opened, and the pipeline where the diaphragm valve 100 is located is opened. In this process, the hydraulic control mechanism 30 applies the first trigger force to the active valve core 121 to switch the active valve core 121 from the second position to the first position. After the active valve core 121 is switched to the first position, an upper end surface of the active magnet 131 is substantially flush with an upper end surface of the positioning magnet 132, and is maintained in the substantially flush position by magnetic attractive force.

The above-mentioned threshold for deforming the spring diaphragm 331 is also substantially equal to the working threshold for the control valve to control the opening and closing of the diaphragm valve 100.

It should be noted that the control valve of Embodiment 6 and the diaphragm valve 100 form an integrated on-off valve, but they may also be separately configured as two independent valves. When the control valve of Embodiment 6 is configured as an independent valve body, it may be used directly as an on-off valve, or in combination with other types of hydraulically controlled on-off valves.

### Advantages of the Control Valve of Embodiment 6:

The structure, construction, and magnetic pole arrangement of the positioning magnet 132 and the active magnet 131 enable the active valve core 121 to be maintained at the switched first position or second position, thereby making the opening/closing state of the hydraulically controlled on-off valve less affected, or even unaffected, by fluid pressure fluctuations.

When the active magnet 131 is switched between the first position and the second position, the movement stroke of the active valve core 121 is extremely short, thus being able to match the deformation amount (which is relatively small) of the spring diaphragm 331, meeting the working requirements of the spring diaphragm 331.

The active valve core 121 only needs to be applied with a small force and complete a movement stroke slightly greater than half of the active valve core 121; thereafter, the active valve core 121 may complete the second half of the movement stroke by itself under the magnetic force interaction. Furthermore, because the active valve core 121 may be maintained at that position after switching to the first position or the second position, the magnetic repulsive force between the reset magnet 341 and the positioning magnet 132 may be set sufficiently small, greatly reducing the resistance of the sliding sleeve 32 against the deformation of the spring diaphragm 331, thereby reducing the influence of the sliding sleeve 32 on the working threshold.

By setting the deformation threshold of the spring diaphragm 331 and combining the second and third advantages of this embodiment, when different control valves are driven to open and close based on the pressure of the same pipeline, a control effect of sequential connection and disconnection in an orderly manner may be achieved.

Because the radially outer sides of the magnet units at the upper and lower ends of the positioning magnet 132 protrude outward relative to the radially outer side of the middle magnet unit, when the active valve core 121 is in the first position or the second position, the magnetic attractive force formed between the ends of the active magnet 131 and the positioning magnet 132 is stronger. This allows the active magnet 131 to be maintained more stably in the first position or the second position, thereby enabling the diaphragm valve 100 to be maintained more stably in the open state or closed state.

The active magnet 131 provided on the active valve core 121 may be replaced by a ferrous material having equal maximum radial dimensions at both ends and an axial length equal to the length of the active magnet 131, thereby reducing cost.

### Embodiment 7

### Structure of the Control Valve of Embodiment 7

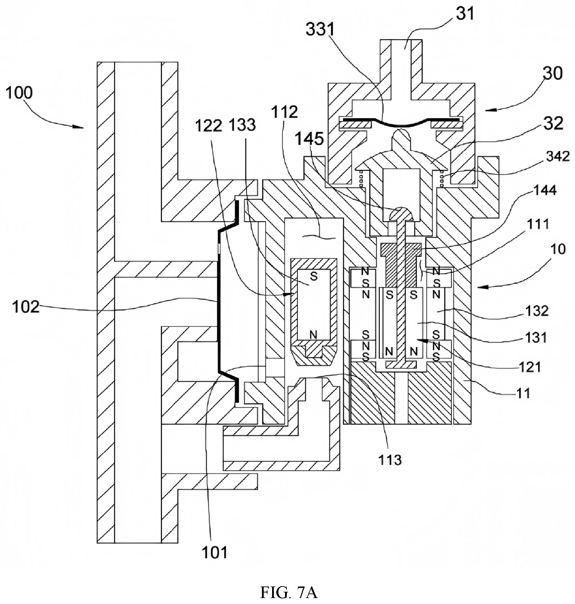

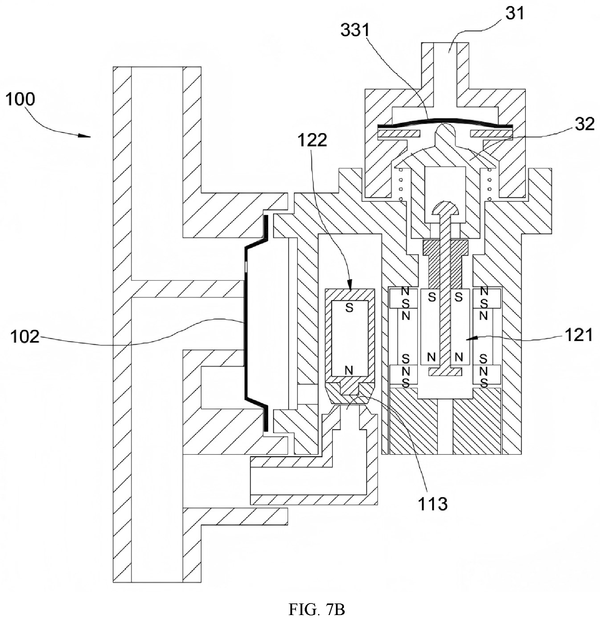

As shown in FIG. 7A and FIG. 7B, the control valve includes a valve core mechanism 10 and a trigger mechanism. The trigger mechanism is a hydraulic control mechanism 30. The valve core mechanism 10 is connected to the diaphragm valve 100 serving as the hydraulically controlled on-off valve. The hydraulic control mechanism 30 controls the opening and closing of the diaphragm valve 100 in response to a change in fluid pressure.

The structures of the valve core mechanism 10 and the hydraulic control mechanism 30 of the control valve of this embodiment are substantially the same as those of the control valve of Embodiment 6.

The biggest structural differences between the control valve of this embodiment and the control valve of Embodiment 6 are:
In this embodiment, a passive valve core 122 and a passive magnet 133 are added to the valve core mechanism 10.

The valve core mechanism 10 of this embodiment does not include the reset magnet 341. A stepped sleeve 144 and a reset spring 342 are added on the valve rod 14. The valve core mechanism 10 includes a valve body 11, an active valve core 121, a passive valve core 122, a magnetic force interaction component, and a valve rod 14.

A vertically extending active valve cavity 111 is arranged in a middle portion inside the valve body 11. The active valve core 121 is arranged in the active valve cavity 111 and is vertically movable along the active valve cavity 111. Thus, within a movement stroke, the active valve core 121 has a first position located at a lower portion of the active valve cavity 111 and a second position located at an upper portion of the active valve cavity 111.

A passive valve cavity 112 is arranged in the valve body 111 on one side of the active valve cavity 111. The passive valve cavity 112 is parallel to the active valve cavity 111. A lower end of the passive valve cavity 112 has a fluid controlled port 113 in communication with the outlet 103 of the diaphragm valve 100. The hydraulic control port 101 of the diaphragm valve 100 penetrates through a cavity wall of the passive valve cavity 112. The passive valve core 122 is arranged in the passive valve cavity 112, and the passive valve core 122 is vertically movable along the passive valve cavity 112. After the passive valve core 122 moves upward, the passive valve core 122 opens the fluid controlled port 113, so that the hydraulic control port 101 of the diaphragm valve 100 is in communication with the fluid controlled port 113. After the passive valve core 122 moves downward, the passive valve core 122 closes the fluid controlled port 113, thereby blocking the hydraulic control port 101 of the diaphragm valve 100 from the fluid controlled port 113.

As shown in FIG. 7A, after the passive valve core 122 moves upward to open the hydraulic control port 101, the fluid chamber of the diaphragm valve 100 is depressurized, and the diaphragm 102 deforms toward the hydraulic control port 101 to open the diaphragm valve 100. As shown in FIG. 7B, after the passive valve core 122 moves downward to close the hydraulic control port 101, the fluid chamber of the diaphragm valve 100 is pressurized, and the diaphragm 102 deforms in an opposite direction to close the diaphragm valve 100. The state where the passive valve core 122 opens the hydraulic control port 101 may be referred to as a first state of the passive valve core 122, and the state where the passive valve core 122 closes the hydraulic control port 101 may be referred to as a second state.

The magnetic force interaction component includes an active magnet 131, a positioning magnet 132, and a passive magnet 133.

The active magnet 131 is configured as a bar-shaped magnet and is arranged on the active valve core 121. The positioning magnet 132 is configured as an annular magnet, is arranged on the valve body 11 in a fixed manner relative to the valve body 111, surrounds the active valve core 121, and the positioning magnet 132 is longer than the active magnet 131. The passive magnet 133 is configured as a bar-shaped magnet and is arranged on the passive valve core 122.

Magnetic pole directions of the active magnet 131, the positioning magnet 132, and the passive magnet 133 are the same. Opposite magnetic poles of the active magnet 131 and the positioning magnet 132 face the same direction, and opposite magnetic poles of the passive magnet 133 and the positioning magnet 132 face the same direction.

The positioning magnet 132 is formed by stacking three magnet units with opposite magnetic poles facing each other. A length of a middle magnet unit is greater than each of the lengths of magnet units on two axial sides thereof, and radially outer sides of the magnet units on the two sides protrude outward relative to a radially outer side of the middle magnet unit, and the two magnet units at the sides have equal length. The active magnet 131 includes one magnet unit. A length of the magnet unit of the active magnet 131 is equal to a sum of lengths of the long magnet unit and one short magnet unit in the positioning magnet 132. The passive magnet 133 includes one magnet unit. A length of the magnet unit of the passive magnet 133 is less than a length of the positioning magnet 132, and is substantially equal to the length of the active magnet 131.

The hydraulic control mechanism 30 includes a sliding sleeve 32, a reset spring 342, and a spring diaphragm 331. The sliding sleeve 32 is arranged in the valve body 11 and located above the magnetic force interaction component. The sliding sleeve 32 is vertically movable. The spring diaphragm 331 is arranged above the sliding sleeve 32. An annular retaining ring 333 is arranged at a bottom of the spring diaphragm 331. A fluid chamber is formed above the sliding sleeve 32, and a pressure accumulating port 31 is formed above the fluid chamber. Fluid from a pipeline is introduced into the pressure accumulating port 31 of the hydraulic control mechanism 30. The reset spring 342 is sleeved on the sliding sleeve 32 and is used to push the sliding sleeve 32 upward. A protrusion is formed at a top of the sliding sleeve 32. After the sliding sleeve 32 moves upward, the protrusion approaches the spring diaphragm 331.

When a pressure in the fluid chamber exceeds a certain pressure value, the fluid in the fluid chamber forces the spring diaphragm 331 to deform downward. When the pressure in the fluid chamber is below that pressure value, the spring diaphragm 331 resets upward. It can be seen that this pressure value is a threshold defining the deformation of the spring diaphragm 331, and this threshold may be set by the structure of the spring diaphragm 331 and its related components. For example, the threshold may be reduced by making the spring diaphragm 331 thinner, or by adjusting an inner diameter of the annular retaining ring 333 below the spring diaphragm 331, thereby achieving the purpose of adjusting the threshold.

A lower end of the valve rod 14 is connected to the active valve core 121. An upper end of the valve rod 14 extends into the sliding sleeve 32 and is relatively movable with respect to the sliding sleeve 32. The upper end of the valve rod 14 forms a stopping portion 145. A stepped sleeve 144 is fixedly sleeved on the valve rod 14, and the stepped sleeve 144 is located below the sliding sleeve 32.

### Application Conditions of the Control Valve of Embodiment 7

The application conditions of the control valve of this embodiment are the same as those of the control valve of Embodiment 6. That is, the control valve of this embodiment controls the connection and disconnection of a pipeline by controlling the opening and closing of the hydraulically controlled on-off valve. This pipeline may be a water supply pipeline for filling a water tank, or other pipelines in a gas delivery system. The control valve of this embodiment may also indirectly control the connection and disconnection of other pipelines connected to one pipeline by controlling the connection and disconnection of fluid in that one pipeline.

The trigger mechanism of the control valve is the hydraulic control mechanism 30. The hydraulic control mechanism 30 is used to drive the valve core mechanism 10 to operate, and thereby controlling the opening and closing of the diaphragm valve 100, by fluid introduced from a pipeline, a container, a front end of a valve, or the like.

The difference from Embodiment 6 is that in the control valve of this embodiment, when the pressure value at the pressure accumulating port 31 of the hydraulic control mechanism 30 is greater than the threshold, i.e., after the spring diaphragm 331 deforms downward, the hydraulic control port 101 of the diaphragm valve 100 is opened, whereas in the control valve of Embodiment 5, the hydraulic control port 101 of the diaphragm valve 100 is closed.

### Working Process of the Control Valve of Embodiment 7

As shown in FIG. 7B, when the pressure at the pressure accumulating port 31 of the hydraulic control mechanism 30 of the control valve is in a state less than the threshold, the spring diaphragm 331 remains in an undeformed state. Under the action of the reset spring 342, the sliding sleeve 32 is in a high position, and the active valve core 121 is in the second position. The magnetic force interaction among the passive magnet 133, the active magnet 131, and the positioning magnet 132 causes the passive valve core 122 to be in the second state. Thus, the hydraulic control port 101 of the diaphragm valve 100 is in a blocked state from the fluid controlled port 113, i.e., the hydraulic control port 101 of the diaphragm valve 100 is closed, the diaphragm valve 100 is in a closed state, and the pipeline where the diaphragm valve 100 is located is in a blocked state.

As shown in FIG. 7A, when the pressure at the pressure accumulating port 31 of the hydraulic control mechanism 30 of the control valve rises above the threshold, the spring diaphragm 331 of the hydraulic control mechanism 30 deforms downward. The spring diaphragm 331 pushes the sliding sleeve 32 downward, causing the sliding sleeve 32 to move downward, and the reset spring 342 is compressed. The sliding sleeve 32, via the stepped sleeve 144, pushes the active valve core 121 downward through the valve rod 14, and the active valve core 121 is switched from the second position to the first position. Correspondingly, due to the change in position of the active magnet 131, the magnetic force interaction on the passive magnet 133 from the active magnet 131 and the positioning magnet changes, forcing the passive valve core 122 to move upward to a first state in which the fluid controlled port 113 and the hydraulic control port 101 of the diaphragm valve 100 are opened. The diaphragm valve 100 is opened, and the pipeline where the diaphragm valve 100 is located is opened. In this process, the hydraulic control mechanism 30 applies the first trigger force to the active valve core 121 to switch the active valve core 121 from the second position to the first position. After the active valve core 121 is switched to the first position, a lower end surface of the active magnet 131 is substantially flush with a lower end surface of the positioning magnet 132, and is maintained in the substantially flush position by magnetic attractive force. An upper end surface of the passive magnet 133 is substantially flush with an upper end surface of the positioning magnet 132, and is maintained in the substantially flush position by magnetic attractive force.

When the pressure at the pressure accumulating port 31 of the hydraulic control mechanism 30 of the control valve decreases below the threshold, the spring diaphragm 331 of the hydraulic control mechanism 30 elastically resets, the reset spring 342 resets, pushing the sliding sleeve 32 upward, causing the sliding sleeve 32 to move upward until the protrusion of the sliding sleeve 32 abuts against the bottom of the spring diaphragm 331. During the upward movement of the sliding sleeve 32, the sliding sleeve 32 pulls the stopping portion 145 at the upper end of the valve rod 14 upward, causing the valve rod 14 to drive the active valve core 121 upward. Thus, the active valve core 121 is switched from the first position to the second position. Correspondingly, due to the change in position of the active magnet 131, the magnetic force interaction on the passive magnet 133 from the active magnet 131 and the positioning magnet changes, forcing the passive valve core 122 to move downward to a second state in which the fluid controlled port 113 and the hydraulic control port 101 of the diaphragm valve 100 are closed. The diaphragm valve 100 is closed, and the pipeline where the diaphragm valve 100 is located is blocked. In this process, the hydraulic control mechanism 30 applies the second trigger force to the active valve core 121 to switch the active valve core 121 from the first position to the second position. After the active valve core 121 is switched to the second position, an upper end surface of the active magnet 131 is substantially flush with an upper end surface of the positioning magnet 132, and is maintained in the substantially flush position by magnetic attractive force.

The above-mentioned threshold for deforming the spring diaphragm 331 is also substantially equal to the working threshold for the control valve to control the opening and closing of the diaphragm valve 100.

It should be noted that the control valve of Embodiment 7 and the diaphragm valve 100 form an integrated on-off valve, but they may also be separately configured as two independent valves. When the control valve of Embodiment 7 is configured as an independent valve body, it may be used directly as an on-off valve, or in combination with other types of hydraulically controlled on-off valves.

### Advantages of the Control Valve of Embodiment 7:

The structure, construction, and magnetic pole arrangement of the positioning magnet 132 and the active magnet 131 enable the active valve core 121 to be maintained at the switched first position or second position, thereby making the opening/closing state of the hydraulically controlled on-off valve less affected, or even unaffected, by fluid pressure fluctuations.

When the active magnet 131 is switched between the first position and the second position, the movement stroke of the active valve core 121 is extremely short, thus being able to match the deformation amount (which is relatively small) of the spring diaphragm 331, meeting the working requirements of the spring diaphragm 331.

The active valve core 121 only needs to be applied with a small force and complete a movement stroke slightly greater than half of the active valve core 121; thereafter, the active valve core 121 may complete the second half of the movement stroke by itself under the magnetic force interaction. Furthermore, because the active valve core 121 may be maintained at the switched position after switching to the first position or the second position, the elastic coefficient of the reset spring 342 may be set sufficiently small, greatly reducing the resistance of the sliding sleeve 32 against the deformation of the spring diaphragm 331, thereby reducing the influence of the sliding sleeve 32 on the working threshold.

By setting the deformation threshold of the spring diaphragm 331 and combining the second and third advantages of this embodiment, when different control valves are driven to open and close based on the pressure of the same pipeline, a control effect of sequential connection and disconnection in an orderly manner is achieved.

Because the radially outer sides of the magnet units at the upper and lower ends of the positioning magnet 132 protrude outward relative to the radially outer side of the middle magnet unit, when the active valve core 121 is in the first position or the second position, the magnetic attractive force formed between the ends of the active magnet 131 and the positioning magnet 132 is stronger. This allows the active magnet 131 to be maintained more stably in the first position or the second position, thereby enabling the diaphragm valve 100 to be maintained more stably in the open state or closed state.

Compared to Embodiment 6, in this embodiment, the passive valve core 122 is configured to control the opening and closing of the hydraulic control port 101 of the diaphragm valve 100, so that the active valve cavity 111 and the passive valve cavity 112 are completely isolated, allowing the working media in the two cavities to be different. Therefore, the control valve of this embodiment may operate more safely and reliably.

By disposing the fluid controlled port 113 at an upper portion of the passive valve cavity 112, when the pressure value at the pressure accumulating port 31 of the hydraulic control mechanism 30 is greater than the threshold, the passive valve core 122 blocks the opening of the hydraulic control port 101 of the diaphragm valve 100.

The active magnet 131 provided on the active valve core 121 may be replaced by a ferrous material having equal maximum radial dimensions at both ends and an axial length equal to the length of the active magnet 131, thereby reducing cost.

### Embodiment 8

### Structure of the Control Valve of Embodiment 8

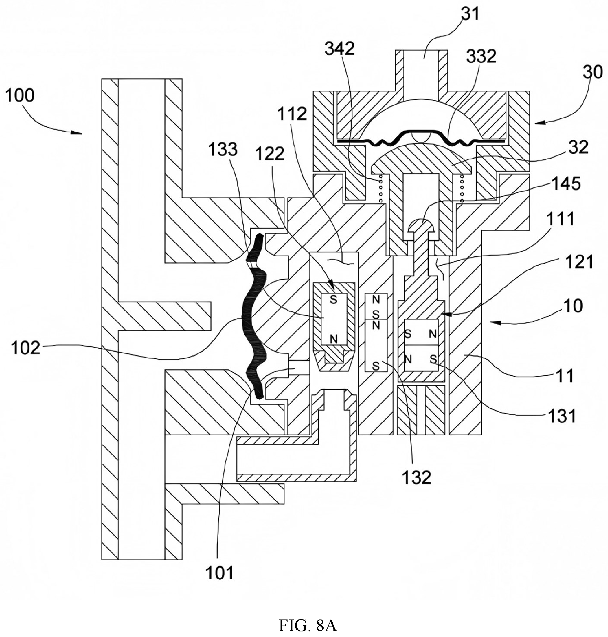

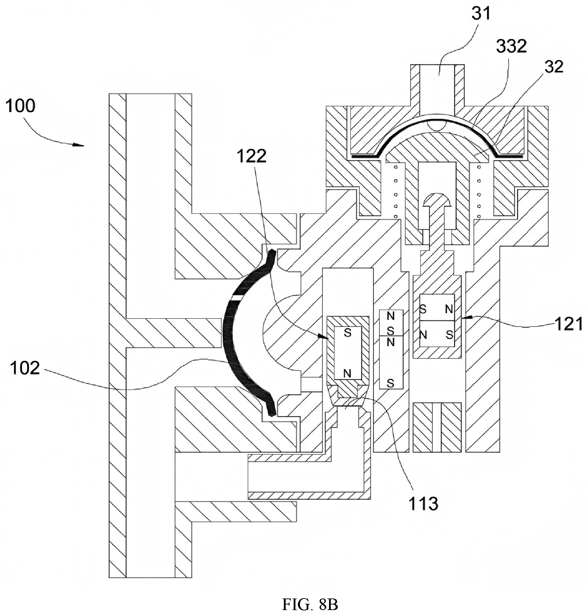

As shown in FIG. 8A and FIG. 8B, the control valve includes a valve core mechanism 10 and a trigger mechanism. The trigger mechanism is a hydraulic control mechanism 30. The valve core mechanism 10 is connected to the diaphragm valve 100 serving as the hydraulically controlled on-off valve. The hydraulic control mechanism 30 controls the opening and closing of the diaphragm valve 100 in response to a change in fluid pressure.

The structures of the valve core mechanism 10 and the hydraulic control mechanism 30 of the control valve of this embodiment are substantially the same as those of the control valve of Embodiment 7.

The biggest structural differences between the control valve of this embodiment and the control valve of Embodiment 7 are as following.

The structure and arrangement of each magnet in the magnetic force interaction component are different from those in Embodiment 7.

A bulging diaphragm 332 is provided at the pressure accumulating port 31 of the hydraulic control mechanism 30, whereas in Embodiment 7, the spring diaphragm 331 is provided.

The valve core mechanism 10 includes a valve body 11, an active valve core 121, a passive valve core 122, a magnetic force interaction component, and a valve rod 14.

A vertically extending active valve cavity 111 is arranged in a middle portion inside the valve body 11. The active valve core 121 is arranged in the active valve cavity 111 and is vertically movable along the active valve cavity 111. Thus, within a movement stroke, the active valve core 121 has a first position located at a lower portion of the active valve cavity 111 and a second position located at an upper portion of the active valve cavity 111.

A passive valve cavity 112 is arranged in the valve body 11 on one side of the active valve cavity 111. The passive valve cavity 112 is parallel to the active valve cavity 111. A lower end of the passive valve cavity 112 has a fluid controlled port 113 communicating with the outlet 103 of the diaphragm valve 100. The hydraulic control port 101 of the diaphragm valve 100 penetrates through a cavity wall of the passive valve cavity 112. The passive valve core 122 is arranged in the passive valve cavity 112, and the passive valve core 122 is vertically movable along the passive valve cavity 112. After the passive valve core 122 moves upward, the passive valve core 122 opens the fluid controlled port 113, thereby communicating the hydraulic control port 101 of the diaphragm valve 100 with the fluid controlled port 113. After the passive valve core 122 moves downward, the passive valve core 122 closes the fluid controlled port 113, thereby blocking the hydraulic control port 101 of the diaphragm valve 100 from the fluid controlled port 113.

As shown in FIG. 8A, after the passive valve core 122 moves upward to open the hydraulic control port 101, the fluid chamber of the diaphragm valve 100 is depressurized, and the diaphragm 102 deforms toward the hydraulic control port 101 to open the diaphragm valve 100. As shown in FIG. 8B, after the passive valve core 122 moves downward to close the hydraulic control port 101, the fluid chamber of the diaphragm valve 100 is pressurized, and the diaphragm 102 deforms in an opposite direction to close the diaphragm valve 100. The state where the passive valve core 122 opens the hydraulic control port 101 may be referred to as a first state of the passive valve core 122, and the state where the passive valve core 122 closes the hydraulic control port 101 may be referred to as a second state.

The magnetic force interaction component includes an active magnet 131, a positioning magnet 132, and a passive magnet 133.

The active magnet 131 is configured as a bar-shaped magnet and is arranged on the active valve core 121. The positioning magnet 132 is configured as a bar-shaped magnet, is arranged on the valve body 111 in a fixed manner relative to the valve body 111, and is located between the active valve cavity 111 and the passive valve cavity 112. The positioning magnet 132 is longer than the active magnet 131. The passive magnet 133 is configured as a bar-shaped magnet and is arranged on the passive valve core 122.

A magnetic pole direction of the active magnet 131 is perpendicular to the moving direction of the active valve core 121. A magnetic pole direction of the positioning magnet 132 is consistent with the moving direction of the active valve core 121. A magnetic pole direction of the passive magnet 133 is consistent with the magnetic pole direction of the positioning magnet 132. The active magnet 131 is formed by stacking two magnet units along a thickness direction. Opposite magnetic poles of the two magnet units of the active magnet 131 face the same direction. The positioning magnet 132 is formed by stacking two magnet units of different lengths with opposite magnetic poles facing each other. A length of a shorter magnet unit in the positioning magnet 132 is half the thickness of the active magnet 131. A length of a longer magnet unit in the positioning magnet 132 is equal to the thickness of the active magnet 131. The passive magnet 133 includes one magnet unit. A length of the passive magnet 133 is equal to the length of the longer magnet unit in the positioning magnet 132.

The hydraulic control mechanism 30 includes a sliding sleeve 32, a reset spring 342, and a bulging diaphragm 332. The sliding sleeve 32 is arranged in the valve body 111 and located above the magnetic force interaction component. The sliding sleeve 32 is vertically movable. The bulging diaphragm 332 is arranged above the sliding sleeve 32. A fluid chamber is formed above the sliding sleeve 32, and a pressure accumulating port 31 is formed above the fluid chamber. Fluid from a pipeline is introduced into the pressure accumulating port 31 of the hydraulic control mechanism 30. The reset spring 342 is sleeved on the sliding sleeve 32 and is configured to push the sliding sleeve 32 upward. A top of the sliding sleeve 32 is configured as an arc-shaped surface. After the sliding sleeve 32 moves upward, the upper end of the sliding sleeve 32 tensions the bulging diaphragm 332.

A lower end of the valve rod 14 is connected to the active valve core 121. An upper end of the valve rod 14 extends into the sliding sleeve 32 and is relatively movable with respect to the sliding sleeve 32. The upper end of the valve rod 14 forms a stopping portion 145. The valve rod 14 has a stepped portion 143, which is located below the sliding sleeve 32.

### Application Conditions of the Control Valve of Embodiment 8

The application conditions of the control valve of this embodiment are the same as those of the control valve of Embodiment 7. That is, the control valve of this embodiment controls the connection and disconnection of a pipeline by controlling the opening and closing of the hydraulically controlled on-off valve. This pipeline may be a water supply pipeline for filling a water tank, or other pipelines in a gas delivery system. The control valve of this embodiment may also indirectly control the connection and disconnection of other pipelines connected to one pipeline by controlling the connection and disconnection of fluid in that one pipeline.

The trigger mechanism of the control valve is the hydraulic control mechanism 30. The hydraulic control mechanism 30 is configured to drive the valve core mechanism 10 to operate through the fluid introduced from a pipeline, a container, a front end of a valve, or the like, thereby controlling the opening and closing of the diaphragm valve 100.

### Working Process of the Control Valve of Embodiment 8

As shown in FIG. 8B, when the pressure at the pressure accumulating port 31 of the hydraulic control mechanism 30 of the control valve is in a state less than a working threshold, under the action of the reset spring 342, the bulging diaphragm 332 is in a tensioned state, the sliding sleeve 32 is in a high position, and the active valve core 121 is in the second position. The magnetic force interaction among the passive magnet 133, the active magnet 131, and the positioning magnet 132 causes the passive valve core 122 to be in the second state. Thus, the hydraulic control port 101 of the diaphragm valve 100 is in a blocked state from the fluid controlled port 113, i.e., the hydraulic control port 101 of the diaphragm valve 100 is closed, the diaphragm valve 100 is in a closed state, and the pipeline where the diaphragm valve 100 is located is in a blocked state.

As shown in FIG. 8A, when the pressure at the pressure accumulating port 31 of the hydraulic control mechanism 30 of the control valve rises above the working threshold, the fluid at the pressure accumulating port 31 forces the bulging diaphragm 332 of the hydraulic control mechanism 30 to deform downward. The fluid overcomes the elastic force of the reset spring 342 and pushes the sliding sleeve 32 downward, causing the sliding sleeve 32 to move downward. The sliding sleeve 32, via the stepped portion 143, pushes the active valve core 121 downward through the valve rod 14, and the active valve core 121 is switched from the second position to the first position. Correspondingly, due to the change in position of the active magnet 131, the magnetic force interaction on the passive magnet 133 from the active magnet 131 and the positioning magnet changes, forcing the passive valve core 122 to move upward to a first state where the fluid controlled port 113 and the hydraulic control port 101 of the diaphragm valve 100 are opened. The diaphragm valve 100 is opened, and the pipeline where the diaphragm valve 100 is located is opened. After the active valve core 121 is switched to the first position, the active magnet 131 is opposite the lower magnet unit of the positioning magnet 132, and the active valve core 121 is maintained in the first position by magnetic attractive force. The passive magnet 133 is opposite the upper magnet unit of the positioning magnet 132, and the passive valve core 122 is maintained in the first state by magnetic attractive force.

When the pressure at the pressure accumulating port 31 of the hydraulic control mechanism 30 of the control valve decreases below the working threshold, the reset spring 342 resets, pushing the sliding sleeve 32 upward, causing the sliding sleeve 32 to move upward to abut against the bulging diaphragm 332, tensioning the bulging diaphragm 332. During the upward movement of the sliding sleeve 32, the sliding sleeve 32 pulls the stopping portion 145 at the upper end of the valve rod 14 upward, causing the valve rod 14 to drive the active valve core 121 upward, and the active valve core 121 to switch from the first position to the second position. Correspondingly, due to the change in position of the active magnet 131, the magnetic force interaction on the passive magnet 133 from the active magnet 131 and the positioning magnet changes, forcing the passive valve core 122 to move downward to a second state in which the fluid controlled port 113 and the hydraulic control port 101 of the diaphragm valve 100 are closed. In this process, the hydraulic control mechanism 30 applies the second trigger force to the active valve core 121 to switch the active valve core 121 from the first position to the second position. After the active valve core 121 is switched to the second position, the active magnet 131 is opposite the upper magnet unit of the positioning magnet 132, and the active valve core 121 is maintained in the second position by magnetic attractive force. The passive magnet 133 is opposite the lower magnet unit of the positioning magnet 132, and the passive valve core 122 is maintained in the second state by magnetic attractive force.

It can be seen from the above that the required driving hydraulic pressure at the pressure accumulating port 31 of the hydraulic control mechanism 30 is mainly matched by selecting the reset spring 342 with an appropriate elastic coefficient.

It should be noted that the control valve of Embodiment 8 and the diaphragm valve 100 form an integrated on-off valve, but they may also be separately configured as two independent valves. When the control valve of Embodiment 8 is configured as an independent valve body, it may be used directly as an on-off valve, or in combination with other types of hydraulically controlled on-off valves.

### Advantages of the Control Valve of Embodiment 8:

The structure, construction, and magnetic pole arrangement of the positioning magnet 132 and the active magnet 131 enable the active valve core 121 to be maintained at the switched first position or second position, thereby making the opening/closing state of the hydraulically controlled on-off valve less affected, or even unaffected, by fluid pressure fluctuations.

The structure, construction, and magnetic pole arrangement of the positioning magnet 132 and the active magnet 131 enable the active valve core 121 to be maintained more stably at the switched first position or second position, and the active valve core 121 has the characteristic of completing the position switch before the passive valve core 122, thereby enabling the bulging diaphragm 332, after being pressurized, to indirectly drive the passive valve core 122 to open or close the fluid controlled port 113, and to have a settable threshold for opening and closing.

Compared to Embodiment 6, in this embodiment, the passive valve core 122 is used to control the opening and closing of the hydraulic control port 101 of the diaphragm valve 100, so that the active valve cavity 111 and the passive valve cavity 112 are completely isolated, allowing the working media in the two cavities to be different. Therefore, the control valve of this embodiment may operate more safely and reliably.

By disposing the fluid controlled port 113 at an upper portion of the passive valve cavity 112, when the pressure value at the pressure accumulating port 31 of the hydraulic control mechanism 30 is greater than the threshold, the passive valve core 122 blocks the communication of the hydraulic control port 101 of the diaphragm valve 100.

### Embodiment 9

### Structure of the Control Valve of Embodiment 9

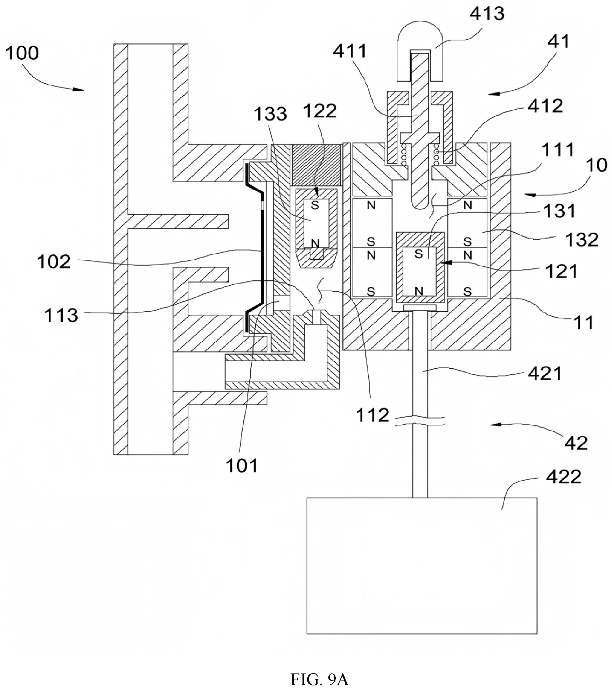

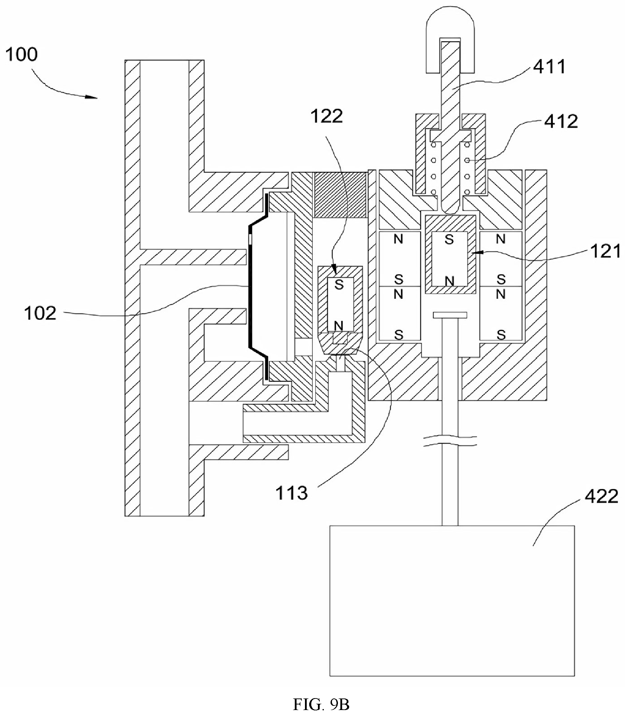

As shown in FIG. 9A and FIG. 9B, the control valve includes a valve core mechanism 10 and a trigger mechanism. The trigger mechanism includes a float ball mechanism 42 and a button mechanism 41. The valve core mechanism 10 is connected to the diaphragm valve 100 serving as the hydraulically controlled on-off valve.

The valve core mechanism 10 includes a valve body 11, an active valve core 121, a passive valve core 122, and a magnetic force interaction component.

A vertically extending active valve cavity 111 is arranged in a middle portion inside the valve body 11. The active valve core 121 is arranged in the active valve cavity 111 and is vertically movable along the active valve cavity 111. Thus, within a movement stroke, the active valve core 121 has a first position located at a lower portion of the active valve cavity 111 and a second position located at an upper portion of the active valve cavity 111.

A passive valve cavity 112 is arranged in the valve body 11 on one side of the active valve cavity 111. The passive valve cavity 112 is parallel to the active valve cavity 111. A lower end of the passive valve cavity 112 has a fluid controlled port 113 communicating with the outlet 103 of the diaphragm valve 100. The hydraulic control port 101 of the diaphragm valve 100 penetrates through a cavity wall of the passive valve cavity 112. The passive valve core 122 is arranged in the passive valve cavity 112, and the passive valve core 122 is vertically movable along the passive valve cavity 112. After the passive valve core 122 moves upward, the passive valve core 122 opens the fluid controlled port 113, thereby communicating the hydraulic control port 101 of the diaphragm valve 100 with the fluid controlled port 113. After the passive valve core 122 moves downward, the passive valve core 122 closes the fluid controlled port 113, thereby blocking the hydraulic control port 101 of the diaphragm valve 100 from the fluid controlled port 113.

As shown in FIG. 9A, after the passive valve core 122 moves upward to open the hydraulic control port 101, the fluid chamber of the diaphragm valve 100 is depressurized, and the diaphragm 102 deforms toward the hydraulic control port 101 to open the diaphragm valve 100. As shown in FIG. 9B, after the passive valve core 122 moves downward to close the hydraulic control port 101, the fluid chamber of the diaphragm valve 100 is pressurized, and the diaphragm 102 deforms in an opposite direction to close the diaphragm valve 100. The state where the passive valve core 122 opens the hydraulic control port 101 may be referred to as a first state of the passive valve core 122, and the state where the passive valve core 122 closes the hydraulic control port 101 may be referred to as a second state.

The magnetic force interaction component includes an active magnet 131, a positioning magnet 132, and a passive magnet 133.

The active magnet 131 is configured as a bar-shaped magnet and is arranged on the active valve core 121. The positioning magnet 132 is configured as an annular magnet, is arranged on the valve body 11 in a fixed manner relative to the valve body 11, surrounds the active valve core 121, and the positioning magnet 132 is longer than the active magnet 131. The passive magnet 133 is configured as a bar-shaped magnet and is arranged on the passive valve core 122.

Magnetic pole directions of the active magnet 131, the positioning magnet 132, and the passive magnet 133 are the same. Opposite magnetic poles of the active magnet 131 and the positioning magnet 132 face the same direction, and opposite magnetic poles of the passive magnet 133 and the positioning magnet 132 face the same direction.

The positioning magnet 132 is formed by stacking two magnet units of equal length with opposite magnetic poles facing each other. The active magnet 131 includes one magnet unit. A length of the magnet unit of the active magnet 131 is equal to a length of each magnet unit in the positioning magnet 132. The passive magnet 133 includes one magnet unit. A length of the passive magnet 133 is equal to the length of each magnet unit of the positioning magnet 132.

The float ball mechanism 42 of the trigger mechanism includes a trigger float 422 and a connecting rod 421. The button mechanism 41 of the trigger mechanism includes a trigger button 413, a trigger rod 411, and a reset spring 412. An upper end of the connecting rod 421 extends from a bottom of the valve body 11 into the active valve cavity 111, and is positioned directly below the active valve core 121. The trigger float 422 is arranged at a lower end of the connecting rod 421. A lower end of the trigger rod 411 extends from a top of the valve body 11 into the active valve cavity 111. The trigger button 413 is formed at an upper end of the trigger rod 411. The reset spring 412 is sleeved on the trigger rod 411 and is configured to apply an elastic force upward to the trigger rod 411.

### Application Conditions of the Control Valve of Embodiment 9

The control valve of this embodiment controls the water supply to a water tank by controlling the opening and closing of the hydraulically controlled on-off valve. The valve core mechanism 10 of the control valve is located at a top of the water tank. The float ball mechanism 42 of the trigger mechanism of the control valve extends into the water tank.

The diaphragm valve 100, as the hydraulically controlled on-off valve, is arranged on one side of the control valve. This diaphragm valve 100 is also located on a water supply pipeline for filling the water tank.

### Working Process of the Control Valve of Embodiment 9

As shown in FIG. 9B, during the process of filling the water tank with water through the water supply pipeline, the trigger float 422 floats upward and drives the active valve core 121 upward via the connecting rod 421, thus causing the active valve core 121 to switch from the first position to the second position. Due to the change in position of the active magnet 131, the magnetic force interaction on the passive magnet 133 from the active magnet 131 and the positioning magnet changes, forcing the passive valve core 122 to move downward to the second state where the fluid controlled port 113 and the hydraulic control port 101 of the diaphragm valve 100 are closed. The diaphragm valve 100 is closed, the water supply pipeline where the diaphragm valve 100 is located is blocked, and the water supply pipeline stops supplying water to the water tank. In this process, the float ball mechanism 42 applies the second trigger force to the active valve core 121 to switch the active valve core 121 from the first position to the second position. After the active valve core 121 is switched to the second position, the upper end surface of the active magnet 131 is substantially flush with the upper end surface of the positioning magnet 132, and is maintained in the substantially flush position by magnetic attractive force.

After the active valve core 121 is switched to the second position, as the liquid level in the water tank drops due to water usage, the trigger float 422 will actively move downward following the drop in liquid level, the active valve core 121 will not actively switch from the second position to the first position. Consequently, the diaphragm valve 100 will not automatically open to fill the water tank.

The button mechanism 41 of the control valve is configured to control the start of water supply to the water tank through the pipeline. Specifically, as shown in FIG. 9A, when a user deems it necessary to fill the water tank, the user presses the trigger button 413 of the button mechanism 41. The trigger rod 411 moves downward, and the lower end of the trigger rod 411 pushes the active valve core 121 downward, thus causing the active valve core 121 to switch from the second position to the first position. Due to the change in position of the active magnet 131, the magnetic force interaction on the passive magnet 133 from the active magnet 131 and the positioning magnet changes, forcing the passive valve core 122 to move upward to the first state where the fluid controlled port 113 and the hydraulic control port 101 of the diaphragm valve 100 are opened. The diaphragm valve 100 is opened, the water supply pipeline where the diaphragm valve 100 is located is opened, and the water supply pipeline starts to supply water to the water tank. In this process, the button mechanism 41 applies the first trigger force to the active valve core 121 to switch the active valve core 121 from the second position to the first position. After the active valve core 121 is switched to the first position, a lower end surface of the active magnet 131 is substantially flush with a lower end surface of the positioning magnet 132, and is maintained in the substantially flush position by magnetic attractive force. The upper end surface of the passive magnet 133 is substantially flush with the upper end surface of the positioning magnet 132, and is maintained in the substantially flush position by magnetic attractive force.

When the water tank is filled with water, the trigger float 422 of the float ball mechanism 42 moves upward, causing the diaphragm valve 100 to automatically close, and the water supply pipeline stops supplying water to the water tank.

It should be noted that the control valve of Embodiment 9 and the diaphragm valve 100 form an integrated on-off valve, but they may also be separately configured as two independent valves. When the control valve of Embodiment 9 is configured as an independent valve body, it may be used directly as an on-off valve, or in combination with other types of hydraulically controlled on-off valves.

### Advantages of the Control Valve of Embodiment 9:

The structure, construction, and magnetic pole arrangement of the positioning magnet 132 and the active magnet 131 enable the active valve core 121 to be maintained at the switched first position or second position, thereby making the opening/closing state of the hydraulically controlled on-off valve less affected, or even unaffected, by liquid level fluctuations in the water tank.

After the active valve core 121 is switched to the second position, if the liquid level fluctuates, although the float moves with the liquid level fluctuation, the active valve core 121 and the passive valve core 122 are not affected by the float's movement. Consequently, the fluid controlled port 113 is not affected, and the passive valve core 122 still keeps the fluid controlled port 113 in a closed and locked state.

When the water tank is filled, the float ball mechanism 42 automatically closes the water supply pipeline. Starting the water supply pipeline again for filling is controlled by manually pressing the button mechanism 41.

The active magnet 131 provided on the active valve core 121 may be replaced by a ferrous material having equal maximum radial dimensions at both ends and an axial length equal to the length of the active magnet 131, thereby reducing cost.

### Embodiment 10

### Structure of the Control Valve of Embodiment 10

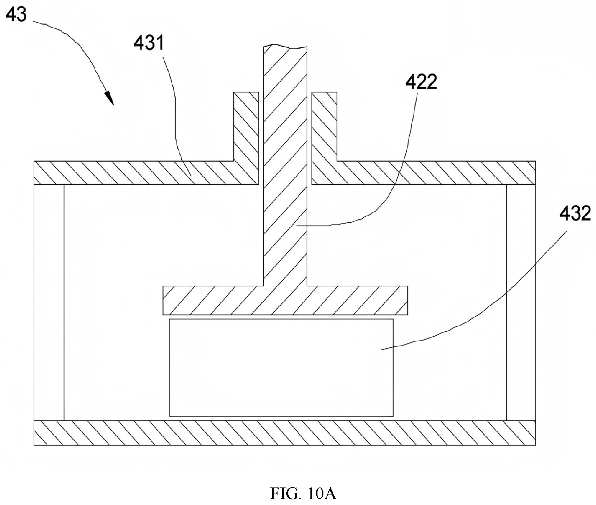

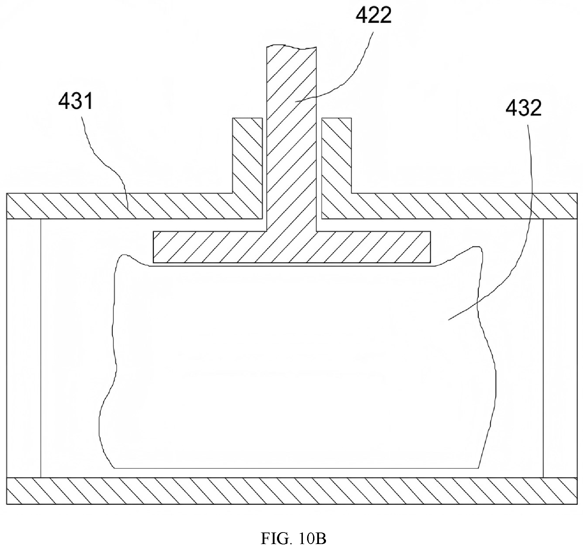

As shown in FIG. 10A and FIG. 10B, and in conjunction with FIG. 9A and FIG. 9B, the control valve of this embodiment is substantially the same in structure as that of Embodiment 9. The biggest difference between this embodiment and Embodiment 9 is as following.

The float ball mechanism in the trigger mechanism is replaced by an expansion mechanism 43. Specifically, an expansion component 432 of the expansion mechanism 43 replaces the trigger float 422 of the float ball mechanism.

### Application Conditions of the Control Valve of Embodiment 10

The application conditions of the control valve of Embodiment 10 are different from those of Embodiment 9. This embodiment controls the connection and disconnection of a relevant pipeline based on detecting a leakage in the pipeline of the water purification system.

### Working Process of the Control Valve of Embodiment 10

The expansion component 432, such as a water-absorbing sponge, is arranged in a leak detection box 431 located around a pipeline. As shown in FIG. 10B, if water is present in the detection box 431, causing the expansion component 432 to absorb and expand, this indicates a leakage in the pipeline. In this process, the expansion component 432 drives the active valve core 121 upward via the connecting rod 421, thus causing the active valve core 121 to switch from the first position to the second position, and the passive valve core 122 is switched from the first state to the second state where the hydraulic control port 101 of the diaphragm valve 100 is closed. The diaphragm valve 100 is closed, and the pipeline where the diaphragm valve is located is blocked, thereby avoiding production safety hazards caused by liquid leakage and facilitating the repair or replacement of the leaking pipeline.

As shown in FIG. 10A, when it is necessary to reopen the diaphragm valve 100, for example, after the repair of the leaking pipeline is completed and a technician deems it appropriate to restore water supply, the button mechanism 41 is pressed to drive the active valve core 121 downward. Thus, the active valve core 121 is switched from the second position to the first position, and the passive valve core 122 is switched back to the first state where the hydraulic control port 101 of the diaphragm valve 100 is opened. The diaphragm valve 100 is opened, and the pipeline where the diaphragm valve 100 is located is opened.

It should be noted that the control valve of Embodiment 10 may form an integrated on-off valve with the diaphragm valve 100, or they may be separately configured as two independent valves. When the control valve of Embodiment 10 is configured as an independent valve body, it may also be used in combination with other types of hydraulically controlled on-off valves.

### Advantages of the Control Valve of Embodiment 10:

It has similar advantages to those of Embodiment 9.

When a leakage occurs in a relevant pipeline, the control valve automatically controls the diaphragm valve 100 to close the relevant pipeline, thereby avoiding production safety hazards caused by liquid leakage and facilitating the inspection of the leaking pipeline.

### Embodiment 11

### Structure of the Control Valve of Embodiment 11

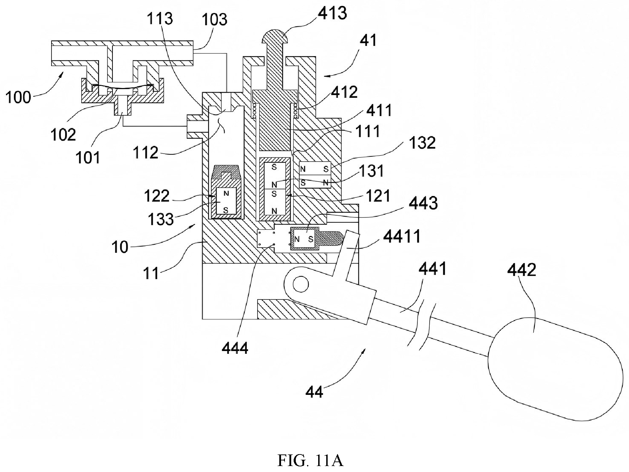

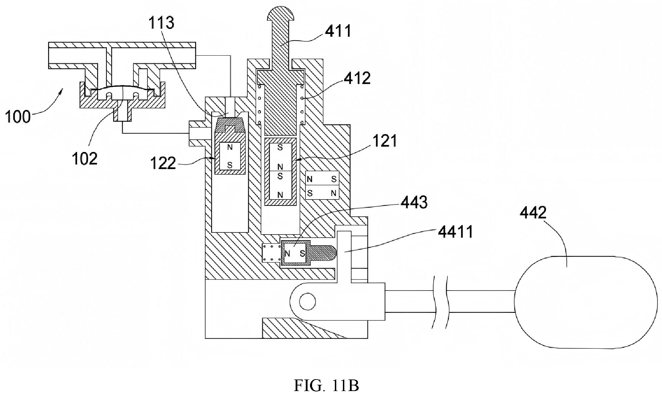

As shown in FIG. 11A and FIG. 11B, the control valve includes a valve core mechanism 10 and a trigger mechanism. The trigger mechanism includes a float ball mechanism 44 and a button mechanism 41. The hydraulically controlled on-off valve is a diaphragm valve 100, and the control valve is configured to control the opening and closing of the diaphragm valve 100.

The valve core mechanism 10 includes a valve body 11, an active valve core 121, a passive valve core 122, a magnetic force interaction component, and a trigger magnet 443.

A vertically extending active valve cavity 111 is arranged in a middle portion inside the valve body 11. The active valve core 121 is arranged in the active valve cavity 111 and is vertically movable along the active valve cavity 111. Thus, within a movement stroke, the active valve core 121 has a first position located at a lower portion of the active valve cavity 111 and a second position located at an upper portion of the active valve cavity 111.

A passive valve cavity 112 is arranged in the valve body 11 on one side of the active valve cavity 111. The passive valve cavity 112 is parallel to the active valve cavity 111. The passive valve core 122 is arranged in the passive valve cavity 112 and is vertically movable along the passive valve cavity 112. A fluid controlled port 113 is arranged above the passive valve core 122. A liquid inlet port 114 is opened on one side of the valve body 11, the liquid inlet port 114 penetrates through the passive valve cavity 112. The hydraulic control port 101 of the diaphragm valve 100 is connected to the inlet port 114, and the fluid controlled port 113 is connected to the outlet 103 of the diaphragm valve 100.

As shown in FIG. 11A, after the passive valve core 122 moves downward, the passive valve core 122 moves downward to open the fluid controlled port 113, the liquid inlet port 114 is in communication with the fluid controlled port 113, a flow chamber at the diaphragm 102 of the diaphragm valve 100 is depressurized, and the diaphragm 102 deforms toward the hydraulic control port 101 to open the diaphragm valve 100. As shown in FIG. 11B, after the passive valve core 122 moves upward, the passive valve core 122 closes the fluid controlled port 113, the liquid inlet port 114 is blocked from the fluid controlled port 113, the pressure in the fluid chamber at the diaphragm 102 of the diaphragm valve 100 increases, forcing the diaphragm 102 to deform in an opposite direction to close the diaphragm valve 100. Thus, the passive magnet 133 has a first state located at a lower portion of the passive valve cavity 112 where the fluid controlled port 113 is opened, and a second state located at an upper portion of the passive valve cavity 112 where the fluid controlled port is closed.

The magnetic force interaction component includes an active magnet 131, a positioning magnet 132, and a passive magnet 133, all of which are configured as bar-shaped magnets. The active magnet 131 is arranged on the active valve core 121, the passive magnet 133 is arranged on the passive valve core 122, and the positioning magnet 132 is arranged in the valve body 11 in a fixed manner relative to the valve body 11 and is located on the other side of the active valve core 121.

A magnetic pole direction of the active magnet 131 is the same as a moving direction of the active valve core 121. A magnetic pole direction of the positioning magnet 132 is perpendicular to the moving direction of the active valve core 121. The magnetic pole direction of the active magnet 131 is the same as a magnetic pole direction of the passive magnet 133, and opposite magnetic poles thereof face the same direction. The positioning magnet 132 is formed by stacking two magnet units along a thickness direction, and opposite magnetic poles of the two magnet units of the positioning magnet 132 face the same direction. The active magnet 131 is formed by stacking two magnet units along a length direction with opposite magnetic poles facing each other. A thickness of the positioning magnet 132 is equal to a length of one magnet unit of the active magnet 131, and A length of the passive magnet 133 is equal to a length of one magnet unit of the active magnet 131.

A trigger valve cavity is arranged at a bottom of the valve body 11. An extension direction of the trigger valve cavity is perpendicular to the extension direction of the active valve cavity 111. The trigger magnet 443 is arranged in the trigger valve cavity and is movable along the trigger valve cavity. A reset spring 444 is also arranged in the trigger valve cavity.

The float ball mechanism 44 of the trigger mechanism includes a trigger float 442 and a connecting rod 441. The button mechanism 41 of the trigger mechanism includes a trigger button 413, a trigger rod 411, and a reset spring 412. A tail portion of the connecting rod 441 is pivotally connected to the bottom of the valve body 11. A push plate 4411 is formed near the tail portion. The trigger float 442 is arranged at a head portion of the connecting rod 441. A lower end of the trigger rod 411 extends from the top of the valve body 11 into the active valve cavity 111. The trigger button 413 is formed at an upper end of the trigger rod 411. The reset spring 412 is sleeved on the trigger rod 411 and is configured to apply an elastic force upward to the trigger rod 411.

When the trigger magnet 443 approaches a lower end of the active valve core 121, it may form a magnetic repulsive force with the active magnet 131.

### Application Conditions of the Control Valve of Embodiment 11

The control valve of this embodiment is configured to control the opening and closing of the diaphragm valve 100 by using the button mechanism 41 in cooperation with the float ball mechanism 44, thereby controlling the connection and disconnection of a pipeline on the diaphragm valve 100.

### Working Process of the Control Valve of Embodiment 11

As shown in FIG. 11B, when a liquid level in a container rises to a preset liquid level, the trigger float 442 of the float ball mechanism 44 floats upward, driving the connecting rod 441 to rotate upward, causing the push plate 4411 on the connecting rod 441 to push the trigger magnet 443 to approach the lower end of the active valve core 121. The trigger magnet 443, through the magnetic repulsive force formed with the active magnet 131, drives the active valve core 121 to move upward, so that the active valve core 121 is switched from the first position to the second position. Correspondingly, the passive magnet 133 is switched from the first state to the second state where closing the fluid controlled port 113 is closed. The diaphragm valve 100 is closed, and the pipeline where the diaphragm valve 100 is located is blocked. In this process, the float ball mechanism 44 applies the second trigger force to the active valve core 121 to switch the active valve core 121 from the first position to the second position. After the active valve core 121 is switched to the second position, the lower magnet unit of the active magnet 131 is opposite the positioning magnet 132, a magnetic attractive force is formed between the active magnet 131 and the positioning magnet 132, and the active magnet 131 is maintained in the second position by this magnetic attractive force.

As the liquid level drops, the connecting rod 441 rotates downward. Under the action of the reset spring 444, the trigger magnet 443 moves rightward, away from the active valve cavity 111. However, the active valve core 121 remains in the second position and does not move downward.

As shown in FIG. 11A, when it is necessary to open the diaphragm valve 100, thereby opening the pipeline, a user presses the button mechanism 41. Specifically, the user presses the trigger button 413, causing the trigger rod 411 to push the active valve core 121 downward. Thus, the active valve core 121 is switched from the second position to the first position. Correspondingly, the passive valve core 122 is switched from the second state to the first state, in which the fluid controlled port is opened, and the diaphragm valve 100 is opened. In this process, the button mechanism 41 applies the first trigger force to the active valve core 121 to switch the active valve core 121 from the second position to the first position. After the active valve core 121 is switched to the first position, the upper magnet unit of the active magnet 131 is opposite the positioning magnet 132, a magnetic attractive force is formed between the active magnet 131 and the positioning magnet 132, and the active magnet 131 is maintained in the first position by this magnetic attractive force.

It should be noted that the control valve of Embodiment 11 and the diaphragm valve 100 are two independent valves, but they may also be configured as an integrated on-off valve. The control valve of Embodiment 11 may be used directly as an on-off valve, or in combination with other types of hydraulically controlled on-off valves.

### Advantages of the Control Valve of Embodiment 11:

The structure, construction, and magnetic pole arrangement of the positioning magnet 132 and the active magnet 131 enable the active valve core 121 to be maintained more stably at the switched first position or second position, thereby making the opening/closing state of the hydraulically controlled on-off valve less affected, or even unaffected, by pressure fluctuations.

After the active valve core 121 is switched to the second position, if the liquid level fluctuates, although the float and the connecting rod 441 swing with the liquid level fluctuation, the active valve core 121 and the passive valve core 122 are not affected by the float's swing. Consequently, the fluid controlled port 113 is not affected, and the passive valve core 122 still keeps the fluid controlled port 113 in a closed and locked state.

When the float floats upward, forcing the push plate 4411 to push the trigger magnet 443, because the trigger magnet 443 drives the active valve core 121 to move upward without directly contacting the active magnet 131, this prevents the active valve cavity 111 from being exposed to air and from drawing in air.

The relatively strong magnetic repulsive force formed between the trigger magnet 443 and the active magnet 131 when the trigger magnet 443 approaches the active valve core 121 is used to force the active valve core 121 to switch from the second position to the first position.

A relatively small triggering stroke of the trigger mechanism may result in a relatively large movement stroke of the passive valve core 122.

### Embodiment 12

### Structure of the Control Valve of Embodiment 12

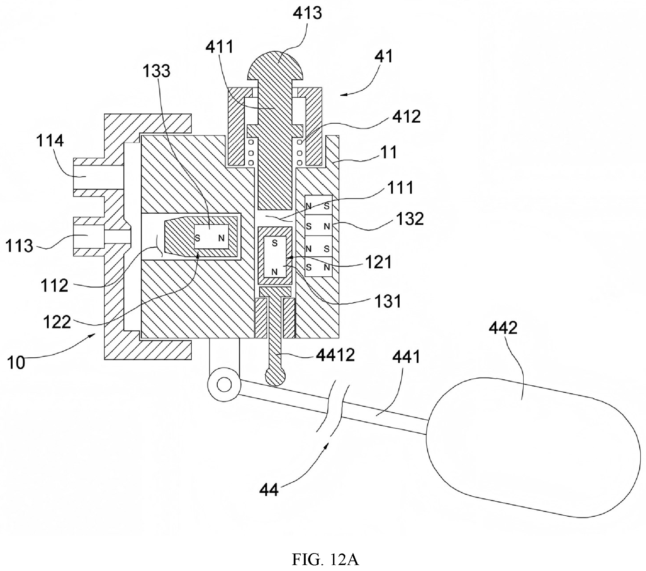

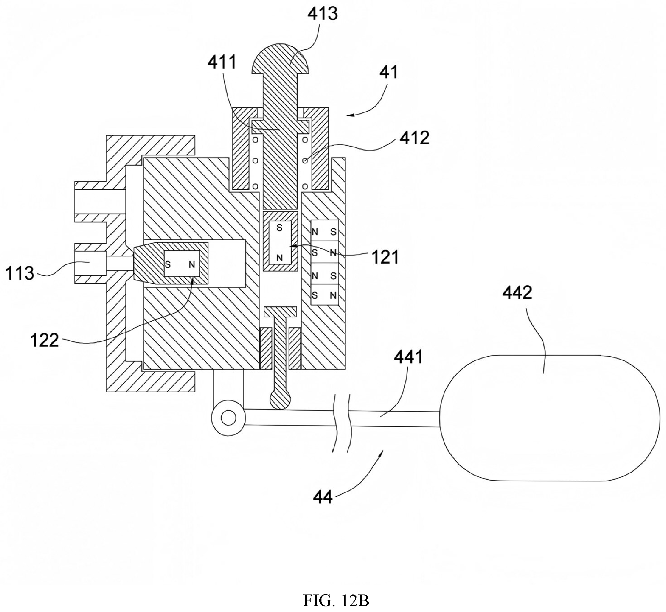

As shown in FIG. 12A and FIG. 12B, the control valve includes a valve core mechanism 10 and a trigger mechanism. The trigger mechanism includes a float ball mechanism 44 and a button mechanism 41. The hydraulically controlled on-off valve is a diaphragm valve 100, and the control valve is configured to control the opening and closing of the diaphragm valve 100.

The structure of the button mechanism 41 of this embodiment is substantially the same as that of the button mechanism 41 of Embodiment 11.

The structure of the float ball mechanism 44 of this embodiment is substantially the same as that of the float ball mechanism 44 of Embodiment 11, with the biggest difference being:

In this embodiment, a vertically movable push rod 4412 for directly pushing the active valve core 121 upward is added, and the push plate 4411 for pushing the trigger magnet 443 is removed.

The valve core mechanism 10 of this embodiment differs from the valve core mechanism 10 of Embodiment 11, with the biggest differences being:

In this embodiment, the trigger magnet 443 used to drive the active valve core 121 upward is removed.

In this embodiment, the moving direction of the passive valve core 122 is perpendicular to the moving direction of the active valve core 121, whereas in Embodiment 11, the moving direction of the passive valve core 122 is consistent with that of the active valve core 121.

Only the structures differing from Embodiment 11 will be described below.

As shown in FIG. 12A and FIG. 12B, the active valve cavity 111 in the valve body 11 extends vertically, and the active valve core 121 is vertically movable along the active valve cavity 111. A passive valve cavity 112 is provided on one side of the active valve cavity 111, an extension direction of the passive valve cavity 112 is perpendicular to the extension direction of the active valve cavity 111, and a positioning magnet is provided on the other side of the active valve cavity 111. This positioning magnet 132 is fixedly arranged on the valve body 11. The fluid controlled port 113 is provided on the passive valve cavity 112, and the end located away from the active valve cavity 111 is referred to as an outer end of the passive valve cavity 112, and the other end of the passive valve cavity 112 is referred to as an inner end of the passive valve cavity 112.

The passive valve core 122 having the passive magnet 133 is arranged in the passive valve cavity 112, and the passive valve core 122 is movable along the passive valve cavity 112. Thus, after the passive valve core 122 moves toward the active valve cavity 111 to the inner end of the passive valve cavity 112, the passive valve core 122 opens the fluid controlled port 113. After the passive valve core 122 moves away from the active valve cavity 111 to the outer end of the passive valve cavity 112, the passive valve core 122 closes the fluid controlled port 113.

The active magnet 131, the positioning magnet 132, and the passive magnet 133 are all bar-shaped magnets. A magnetic pole direction of the active magnet 131 is the same as the moving direction of the active valve core 121. A moving direction of the passive magnet 133 is the same as the moving direction of the passive valve core 122. Thus, the magnetic pole direction of the passive magnet 133 is perpendicular to the magnetic pole direction of the active magnet 131. The positioning magnet 132 is formed by stacking four magnet units of equal thickness along a thickness direction. A magnetic pole direction of each magnet unit of the positioning magnet 132 is perpendicular to the magnetic pole direction of the active magnet 131. Opposite magnetic poles of every two adjacent of magnet units of the positioning magnet 132 face the same direction. A length of the active magnet 131 is equal to a sum of thicknesses of two magnet units of the positioning magnet 132. A lower end magnetic pole of the active magnet 131 is the same as a magnetic pole of the passive magnet 133 that is close thereto. Thus, an upper end magnetic pole of the active magnet 131 is opposite to the magnetic pole of the passive magnet 133 that is close thereto.

After the active valve core 121 moves downward to switch to the first position, the upper end surface of the active magnet 131 moves to a position opposite a central line of the passive magnet 133, and the active magnet 131 is opposite the lower two magnet units of the positioning magnet 132. At this time, the active magnet 132 exerts a magnetic attractive force on the passive magnet 133, causing the passive valve core 122 to move toward the inner end of the passive valve cavity 112 and approach the active valve core 121, thereby opening the fluid controlled port 113. The lower two magnet units of the positioning magnet 132 exert a magnetic attractive force on the active magnet 131, maintaining the active valve core 121 in the switched first position. After the active valve core 121 moves upward to switch to the second position, the lower end surface of the active magnet 131 moves to a position opposite the central line of the passive magnet 133, and the active magnet 131 is opposite the upper two magnet units of the positioning magnet 132. At this time, the active magnet 131 exerts a magnetic repulsive force on the passive magnet 133, causing the passive valve core 122 to move towards the outer end of the passive valve cavity 112 and away from the active valve core 122, thereby closing the fluid controlled port 113. The upper two magnet units of the positioning magnet 132 exert a magnetic attractive force on the active magnet 131, maintaining the active valve core 121 in the switched second position.

The push rod 4412 of the float ball mechanism 44 extends into the active valve cavity 111 from a bottom of the active valve cavity 111. This push rod 4412 is used to push the active valve core 121 upward.

### Application Conditions of the Control Valve of Embodiment 12

The control valve of this embodiment is configured to control the opening and closing of the diaphragm valve 100 by using the button mechanism 41 in cooperation with the float ball mechanism 44, thereby controlling the connection and disconnection of a pipeline on the diaphragm valve 100.

### Working Process of the Control Valve of Embodiment 12

As shown in FIG. 12B, when a liquid level in a container rises to a preset liquid level, the trigger float 442 of the float ball mechanism 44 floats upward, driving the connecting rod 441 to rotate upward, causing the connecting rod 441 to push the push rod 4412 upward. The push rod 4412 pushes the active valve core 121, causing the active valve core 121 to move upward. Thus, the active valve core 121 is switched from the first position to the second position. The active valve core 121 exerts a magnetic repulsive force on the passive magnet 133, causing the passive valve core 122 to move to the outer end of the passive valve cavity 112. The passive valve core 122 is switched to the second state in which the fluid controlled port 113 is closed. The diaphragm valve 100 is closed, and the pipeline where the diaphragm valve 100 is located is blocked. In this process, the float ball mechanism 44 applies the second trigger force to the active valve core 121 to switch the active valve core 121 from the first position to the second position. After the active valve core 121 is switched to the second position, the lower end surface of the active magnet 131 is opposite the central line of the passive magnet 133, and the active magnet 131 is opposite the upper two magnet units of the positioning magnet 132. The magnetic attractive force of the upper two magnet units of the positioning magnet 132 on the active magnet 131 maintains the active valve core in the second position.

As the liquid level drops, the connecting rod 441 rotates downward, and the push rod 4412 moves downward. However, the active valve core 121 remains in the second position and does not move downward.

As shown in FIG. 12A, when it is necessary to open the diaphragm valve 100, thereby opening the pipeline, the user presses the button mechanism 41. Specifically, the user presses the trigger button 413, causing the trigger rod 411 to push the active valve core 121 downward. Thus, the active valve core 121 is switched from the second position to the first position. The active valve core 121 exerts a magnetic attractive force on the passive magnet 133, causing the passive valve core 122 to move to the inner end of the passive valve cavity 112. The passive valve core 122 is switched to the second state where the fluid controlled port 113 is opened, and the diaphragm valve 100 is opened. In this process, the button mechanism 41 applies the first trigger force to the active valve core 121 to switch the active valve core 121 from the second position to the first position. After the active valve core 121 is switched to the first position, the upper end surface of the active magnet 131 is opposite the central line of the passive magnet 133, and the active magnet 131 is opposite the lower two magnet units of the positioning magnet 132. The magnetic attractive force of the lower two magnet units of the positioning magnet 132 on the active magnet 131 maintains the active valve core in the first position.

It should be noted that the control valve of Embodiment 12 and the diaphragm valve 100 are two independent valves, but they may also be configured as an integrated on-off valve. The control valve of Embodiment 12 may be used directly as an on-off valve, or in combination with other types of hydraulically controlled on-off valves.

### Advantages of the Control Valve of Embodiment 12:

The structure, construction, and magnetic pole arrangement of the positioning magnet 132 and the active magnet 131 enable the active valve core 121 to be maintained more stably at the switched first position or second position, thereby making the opening/closing state of the hydraulically controlled on-off valve less affected, or even unaffected, by pressure fluctuations.

After the active valve core 121 is switched to the second position, if the liquid level fluctuates, although the float and the connecting rod 441 swing with the liquid level fluctuation, the active valve core 121 and the passive valve core 122 are not affected by the float's swing. Consequently, the fluid controlled port 113 is not affected, and the passive valve core 122 still keeps the fluid controlled port 113 in a closed and locked state.

### Embodiment 13

### Structure of the Control Valve of Embodiment 13

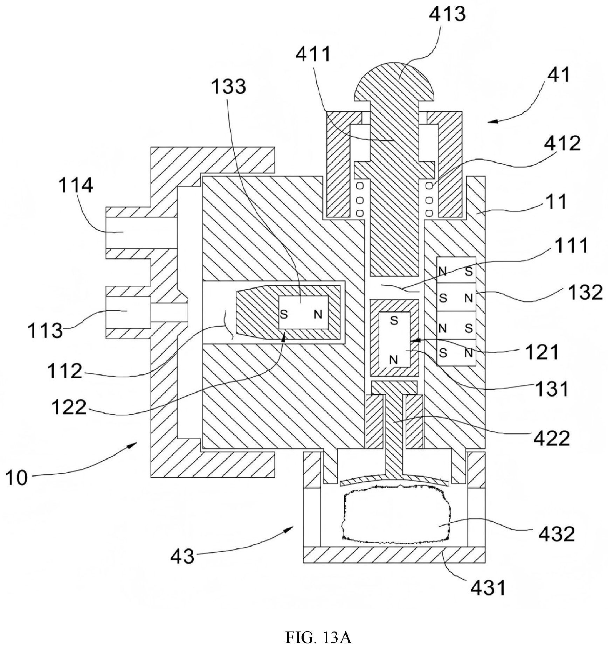

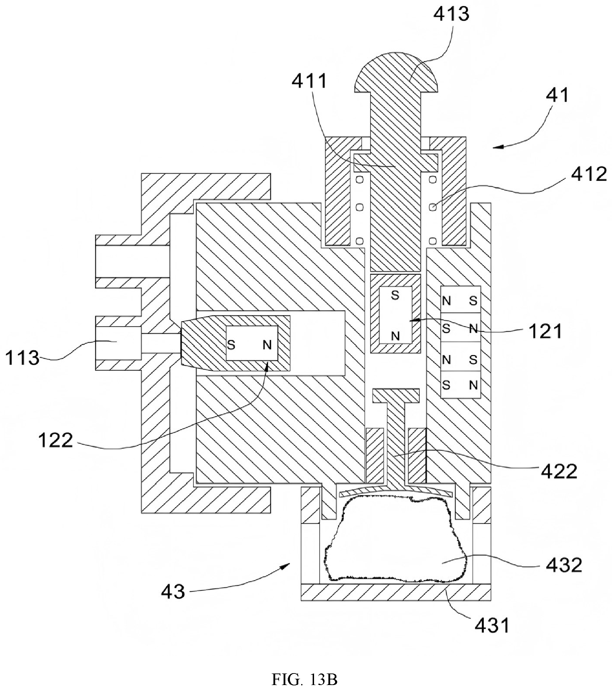

As shown in FIG. 13A and FIG. 13B, the control valve of this embodiment includes a valve core mechanism and a trigger mechanism. The trigger mechanism includes an expansion mechanism and a button mechanism.

The valve core mechanism of this embodiment is completely the same as the valve core mechanism of Embodiment 12. The button mechanism of this embodiment is completely the same as the button mechanism of Embodiment 12. The expansion mechanism of this embodiment is completely the same as the expansion mechanism of Embodiment 10.

### Application Conditions of the Control Valve of Embodiment 13

The application conditions of the control valve of this embodiment are completely the same as those of the control valve of Embodiment 10. That is, this embodiment controls the connection and disconnection of a relevant pipeline based on detecting a leakage in the pipeline of the water purification system.

### Working Process of the Control Valve of Embodiment 13

The expansion component 432, such as a water-absorbing sponge, is arranged in a leak detection box 431 located around a pipeline. As shown in FIG. 13B, if water is present in the detection box 431, causing the expansion component 432 to absorb and expand, this indicates a leakage in the pipeline. In this process, the expansion component 432 drives the active valve core 121 upward via the connecting rod 421, thus causing the active valve core 121 to switch from the first position to the second position. The passive valve core 122 is switched from the first state to the second state in which the hydraulic control port 101 of the diaphragm valve 100 is closed. The diaphragm valve 100 is closed, and the pipeline where the diaphragm valve is located is blocked, thereby avoiding production safety hazards caused by liquid leakage and facilitating the repair or replacement of the leaking pipeline.

As shown in FIG. 13A, when it is necessary to reopen the diaphragm valve 100, for example, after the repair of the leaking pipeline is completed and a technician deems it appropriate to restore water supply, the button mechanism 41 is pressed to drive the active valve core 121 downward. Thus, the active valve core 121 is switched from the second position to the first position, and the passive valve core 122 is switched back to the first state in which the hydraulic control port 101 of the diaphragm valve 100 is opened. The diaphragm valve 100 is opened, and the pipeline where the diaphragm valve 100 is located is opened.

It should be noted that the control valve of Embodiment 13 and the diaphragm valve 100 are two independent valves, but they may also be configured as an integrated on-off valve. The control valve of Embodiment 13 may be used directly as an on-off valve, or in combination with other types of hydraulically controlled on-off valves.

### Advantages of the Control Valve of Embodiment 13:

It has the same advantages as Embodiment 10. That is, when a leakage occurs in a relevant pipeline, the control valve automatically controls the diaphragm valve 100 to close the relevant pipeline, thereby avoiding production safety hazards caused by liquid leakage and facilitating the inspection of the leaking pipeline.

### Embodiment 14

### Structure of the Control Valve of Embodiment 14

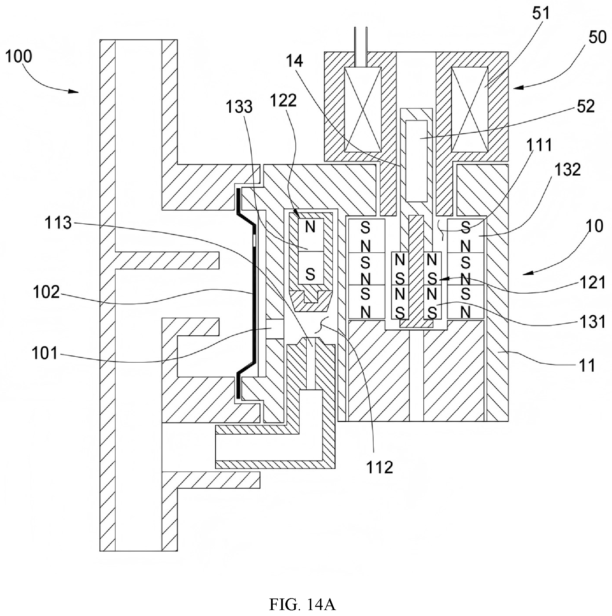

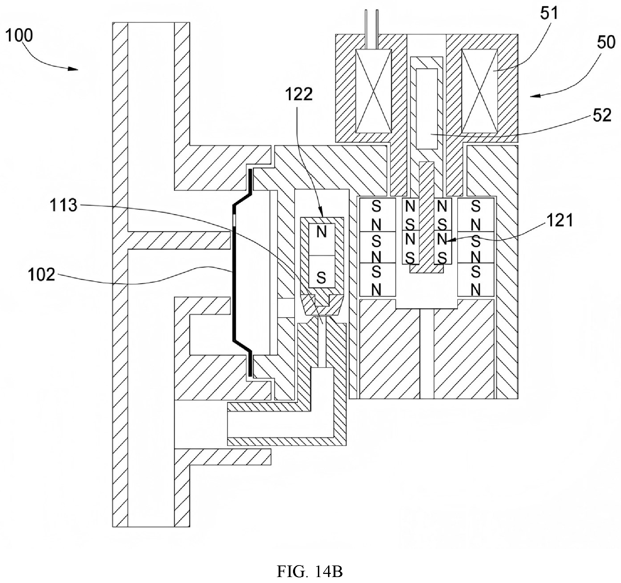

As shown in FIG. 14A and FIG. 14B, the control valve includes a valve core mechanism 10 and a trigger mechanism. The valve core mechanism 10 is connected to the diaphragm valve 100 serving as the hydraulically controlled on-off valve. The trigger mechanism is an electromagnetic drive mechanism 50. The control valve is configured to control the opening and closing of the diaphragm valve 100.

The valve core mechanism 10 includes a valve body 11, an active valve core 121, a passive valve core 122, a magnetic force interaction component, and a valve rod 14.

A vertically extending active valve cavity 111 is arranged in a middle portion inside the valve body 11. The active valve core 121 is arranged in the active valve cavity 111 and is vertically movable along the active valve cavity 111. Thus, within a movement stroke, the active valve core 121 has a first position located at a lower portion of the active valve cavity 111 and a second position located at an upper portion of the active valve cavity 111.

A passive valve cavity 112 is arranged in the valve body 11 on one side of the active valve cavity 111. The passive valve cavity 112 is parallel to the active valve cavity 111. A lower end of the passive valve cavity 112 has a fluid controlled port 113 in communication with the outlet 103 of the diaphragm valve 100. The hydraulic control port 101 of the diaphragm valve 100 penetrates through a cavity wall of the passive valve cavity 112. The passive valve core 122 is arranged in the passive valve cavity 112, and the passive valve core 122 is vertically movable along the passive valve cavity 112. After the passive valve core 122 moves upward, the passive valve core 122 opens the fluid controlled port 113, thereby communicating the hydraulic control port 101 of the diaphragm valve 100 with the fluid controlled port 113. After the passive valve core 122 moves downward, the passive valve core 122 closes the fluid controlled port 113, thereby blocking the hydraulic control port 101 of the diaphragm valve 100 from the fluid controlled port 113.

As shown in FIG. 14A, after the passive valve core 122 moves upward to open the hydraulic control port 101, the fluid chamber of the diaphragm valve 100 is depressurized, and the diaphragm 102 deforms toward the hydraulic control port 101 to open the diaphragm valve 100. As shown in FIG. 14B, after the passive valve core 122 moves downward to close the hydraulic control port 101, the fluid chamber of the diaphragm valve 100 is pressurized, and the diaphragm 102 deforms in an opposite direction to close the diaphragm valve 100. The state where the passive valve core 122 opens the hydraulic control port 101 may be referred to as the first state of the passive valve core 122, and the state where the passive valve core 122 closes the hydraulic control port 101 may be referred to as a second state.

The magnetic force interaction component includes an active magnet 131, a positioning magnet 132, and a passive magnet 133.

The active magnet 131 is configured as a bar-shaped magnet and is arranged on the active valve core 121. The positioning magnet 132 is configured as an annular magnet, is arranged on the valve body 11 in a fixed manner relative to the valve body 11, surrounds the active valve core 121, and the positioning magnet 132 is longer than the active magnet 131. The passive magnet 133 is configured as a bar-shaped magnet and is arranged on the passive valve core 122.

Magnetic pole directions of the active magnet 131, the positioning magnet 132, and the passive magnet 133 are the same. Opposite magnetic poles of the active magnet 131 and the positioning magnet 132 face the same direction, and opposite magnetic poles of the passive magnet 133 and the positioning magnet 132 face the same direction.

The positioning magnet 132 is formed by stacking three magnet units of equal length with opposite magnetic poles facing each other. The active magnet 131 is formed by stacking two magnet units of equal length with opposite magnetic poles facing each other. The passive magnet 133 is formed by stacking two magnet units of equal length with opposite magnetic poles facing each other. The length of the magnet unit of the positioning magnet 132 and the length of the magnet unit of the passive magnet 133, and the length of the magnet unit of the active magnet 131 are equal.

The electromagnetic drive mechanism 50 includes a driven magnet 52 and an electromagnet surrounded by an electromagnetic coil 51. A lower end of the valve rod 14 is connected to the active valve core 121. An upper portion of the valve rod 14 extends into a hollow structure of the electromagnet. The driven magnet 52 is arranged on the upper portion of the valve rod 14. The electromagnetic drive mechanism 50 applies an instantaneous current in forward and reverse directions to the electromagnetic coil 51 to respectively form an instantaneous magnetic attractive force and magnetic repulsive force with the driven magnet 52, thereby driving the valve rod 14 to move vertically via the magnetic attractive force or magnetic repulsive force, thus driving the active valve core 121 to switch between the first position and the second position.

### Application Conditions of the Control Valve of Embodiment 14

The control valve of this embodiment controls the connection and disconnection of a pipeline by controlling the opening and closing of the hydraulically controlled on-off valve. This pipeline may be a water supply pipeline for filling a water tank, or other pipelines for conveying special liquids. The control valve of this embodiment may also be used to control the connection and disconnection of flammable or harmful gases.

The control valve of this embodiment uses the electromagnetic drive mechanism 50 to control the opening and closing of the diaphragm valve 100, thereby controlling the connection and disconnection of the pipeline on the diaphragm valve 100.

### Working Process of the Control Valve of Embodiment 14

As shown in FIG. 14A, when it is desired to open the pipeline, an instantaneous current is applied to the electromagnetic coil 51 of the electromagnetic drive mechanism 50. The electromagnetic drive mechanism 50, via the valve rod 14, drives the active valve core 121 to move downward, causing the active valve core 121 to switch from the second position to the first position. The passive valve core 122, in response to the switching action of the active valve core 121, moves upward from the second state to the first state where the fluid controlled port 113 is opened, thereby opening the hydraulic control port 101 of the diaphragm valve 100. The diaphragm valve 100 is opened, and the pipeline is opened. After the active valve core 121 is switched to the first position, a lower end surface of the active magnet 131 is substantially flush with a lower end surface of the positioning magnet 132, and is maintained in the substantially flush position by magnetic attractive force. An upper end surface of the passive magnet 133 is substantially flush with an upper end surface of the positioning magnet 132, and is maintained in the substantially flush position by magnetic attractive force. The passive valve core 122 is maintained in the first state by magnetic attractive force.

As shown in FIG. 14B, when it is desired to block the pipeline, a reverse instantaneous current is applied to the electromagnetic coil 51 of the electromagnetic drive mechanism 50. The electromagnetic drive mechanism 50, via the valve rod 14, drives the active valve core 121 to move upward, causing the active valve core 121 to switch from the first position to the second position, and causing the passive valve core 122 to move downward and switch from the first state to the second state where the fluid controlled port 113 is closed. Thus, the hydraulic control port 101 of the diaphragm valve 100 is closed, the diaphragm valve 100 is closed, and the pipeline is blocked. After the active valve core 121 is switched to the second position, an upper end surface of the active magnet 131 is substantially flush with an upper end surface of the positioning magnet 132, and is maintained in the substantially flush position by magnetic attractive force. A lower end surface of the passive magnet 133 is substantially flush with a lower end surface of the positioning magnet 132, and is maintained in the substantially flush position by magnetic attractive force.

It should be noted that the control valve of Embodiment 14 and the diaphragm valve 100 form an integrated on-off valve, but they may also be separately configured as two independent valves. When the control valve of Embodiment 14 is configured as an independent valve body, it may be used directly as an on-off valve, or in combination with other types of hydraulically controlled on-off valves.

### Advantages of the Control Valve of Embodiment 14:

The structure, construction, and magnetic pole arrangement of the positioning magnet 132 and the active magnet 131 enable the active valve core 121 to be maintained at the switched first position or second position, thereby making the opening/closing state of the hydraulically controlled on-off valve less affected, or even unaffected, by pressure fluctuations.

The electromagnetic drive mechanism 50 uses the instantaneous current to drive the valve core mechanism 10 to operate, thereby controlling the opening and closing of the hydraulically controlled on-off valve, and avoiding heat generation.

The electromagnetic drive mechanism 50 is de-energized after driving the valve core mechanism 10 to operate, and the magnetic force interaction component maintains the switching state of the diaphragm valve 100, thereby saving energy.

The active valve cavity 111 and the passive valve cavity 112 of the control valve of this embodiment are completely isolated, allowing the working media in the two cavities to be different, achieving fluid-electrical isolation. Moreover, because instantaneous current is used for drive control, the control valve of this embodiment may be applied to control the connection and disconnection of fluids such as flammable or toxic substances.

The active magnet 131 provided on the active valve core 121 may be replaced by a ferrous material having equal maximum radial dimensions at both ends and an axial length equal to the length of the active magnet 131, thereby reducing cost.

### Embodiment 15

### Structure of the Control Valve of Embodiment 15

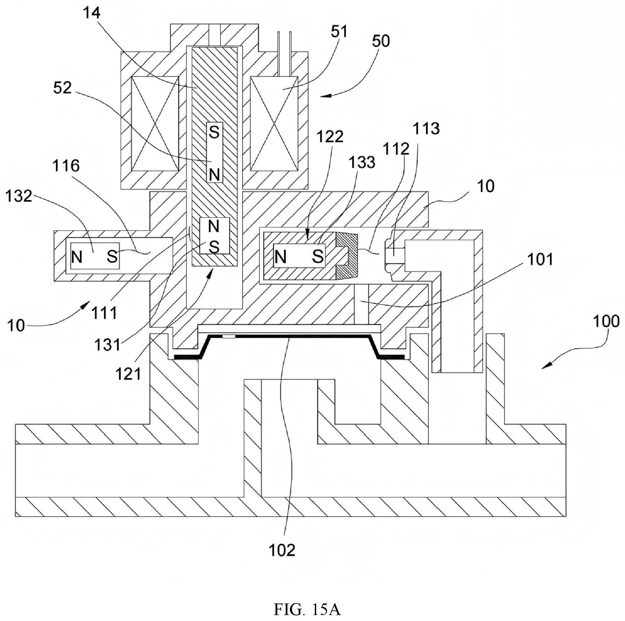

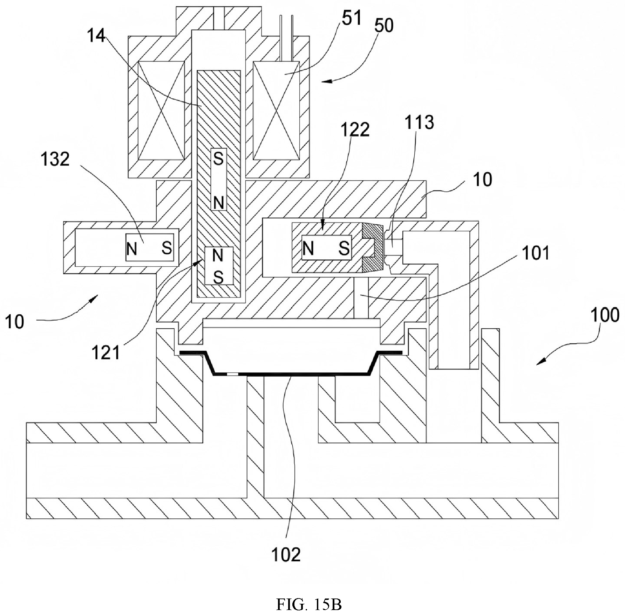

As shown in FIG. 15A and FIG. 15B, the control valve includes a valve core mechanism 10 and a trigger mechanism. The valve core mechanism 10 is connected to the diaphragm valve 100 serving as the hydraulically controlled on-off valve. The trigger mechanism is an electromagnetic drive mechanism 50. The control valve is used to control the opening and closing of the diaphragm valve 100.

The structure of the electromagnetic drive mechanism 50 of this embodiment is substantially the same as that of the electromagnetic drive mechanism 50 of Embodiment 14.

The valve core mechanism 10 of this embodiment differs from the valve core mechanism of Embodiment 14, with the biggest differences being:

In this embodiment, the positioning magnet 132 is arranged on the valve body 11 in a movable manner, whereas in Embodiment 14, the positioning magnet 132 is fixedly arranged on the valve body 11.

In this embodiment, the moving directions of the passive valve core 122 and the positioning magnet 132 are perpendicular to the moving direction of the active valve core 121, whereas in Embodiment 14, the moving direction of the passive valve core 122 is consistent with that of the active valve core 121.

In this embodiment, the first position of the active valve core 121 is located at an upper portion of the active valve cavity 111, and the second position of the active valve core 121 is located at a lower portion of the active valve cavity 111, whereas in Embodiment 14, the first position of the active valve core 121 is located at the lower portion of the active valve cavity 111, and the second position of the active valve core 121 is located at the upper portion of the active valve cavity 111.

Only the structures differing from Embodiment 15 will be described below.

As shown in FIG. 15A and FIG. 15B, the active valve cavity 111 in the valve body 11 extends vertically, and the active valve core 121 is vertically movable along the active valve cavity 111. A passive valve cavity 112 is provided on one side of the active valve cavity 111. An extension direction of the passive valve cavity 112 is perpendicular to the extension direction of the active valve cavity 111. A positioning valve cavity 116 is provided on the other side of the active valve cavity 111. An extension direction of the positioning valve cavity 116 is perpendicular to the extension direction of the active valve cavity 111, and the positioning valve cavity 116 is arranged coaxially with the passive valve cavity 112. The fluid controlled port 113 is provided on the passive valve cavity 112, and the end located away from the active valve cavity 111 is referred to as an outer end of the passive valve cavity 112, and the other end of the passive valve cavity 112 is referred to as an inner end of the passive valve cavity 112.

The passive valve core 122 having the passive magnet 133 is arranged in the passive valve cavity 112, and the passive valve core 122 is movable along the passive valve cavity 112. Thus, after the passive valve core 122 moves toward the active valve cavity 111 to the inner end of the passive valve cavity 112, the passive valve core 122 opens the fluid controlled port 113. After the passive valve core 122 moves away from the active valve cavity 111 to the outer end of the passive valve cavity 112, the passive valve core 122 closes the fluid controlled port 113. The positioning magnet 132 is arranged in the positioning valve cavity 116, and the positioning magnet 132 is movable along the positioning valve cavity 116. Thus, the positioning magnet 132 may approach and move away from the active valve cavity by moving.

The active magnet 131, the positioning magnet 132, and the passive magnet 133 are each one magnet unit, and are all bar-shaped magnets. A magnetic pole direction of the active magnet 131 is consistent with the moving direction of the active valve core 121. A magnetic pole direction of the passive magnet 133 is the same as the moving direction of the passive valve core 122. A magnetic pole direction of the positioning magnet 132 is the same as the moving direction of the positioning magnet 132. Therefore, the magnetic pole direction of the active magnet 131 is perpendicular to the magnetic pole directions of the passive magnet 133 and the positioning magnet 132. Opposite magnetic poles of the positioning magnet 132 and the passive magnet 133 face each other. A lower end magnetic pole of the active magnet 131 and a magnetic pole of the passive magnet 133 that is close thereto attract each other. Thus, an upper end magnetic pole of the active magnet 131 is the same as the magnetic pole of the passive magnet 133 that is close thereto. Consequently, the lower end magnetic pole of the active magnet 131 is the same as a magnetic pole of the positioning magnet 132 that is close thereto, and the upper end magnetic pole of the active magnet 131 and the magnetic pole of the positioning magnet 132 that is close thereto attract each other.

After the active valve core 121 moves upward to switch to the first position, the lower end surface of the active magnet 131 moves to a position opposite a central line of the passive magnet 133 and the positioning magnet 132. At this time, the active magnet 131 exerts a magnetic attractive force on the passive magnet 133, causing the passive valve core 122 to move toward the inner end of the passive valve cavity 112 and approach the active valve core 121, thereby opening the fluid controlled port 113. The active magnet 131 exerts a magnetic repulsive force on the positioning magnet 132, causing the positioning magnet 132 to move away from the active valve core 121. After the active valve core 121 moves downward to switch to the second position, the upper end surface of the active magnet 131 moves to a position opposite the central line of the passive magnet 133 and the positioning magnet 132. At this time, the active magnet 131 exerts a magnetic repulsive force on the passive magnet 133, causing the passive valve core 122 to move toward the outer end of the passive valve cavity 112 and away from the active valve core 121, thereby closing the fluid controlled port 113. The active magnet 131 exerts a magnetic attractive force on the positioning magnet 132, causing the positioning magnet 132 to move toward the active valve core 121.

### Application Conditions of the Control Valve of Embodiment 15

The control valve of this embodiment controls the connection and disconnection of a pipeline by controlling the opening and closing of the hydraulically controlled on-off valve. This pipeline may be a water supply pipeline for filling a water tank, or other pipelines for conveying special liquids. The control valve of this embodiment may also be used to control the connection and disconnection of flammable or harmful gases.

The control valve of this embodiment uses the electromagnetic drive mechanism 50 to control the opening and closing of the diaphragm valve 100, thereby controlling the connection and disconnection of the pipeline on the diaphragm valve 100.

### Working Process of the Control Valve of Embodiment 15

As shown in FIG. 15A, when it is desired to open the pipeline, an instantaneous current is applied to the electromagnetic coil 51 of the electromagnetic drive mechanism 50. The electromagnetic drive mechanism 50, via the valve rod 14, drives the active valve core 121 to move upward, causing the active valve core 121 to switch from the second position to the first position. The active valve core 121 exerts a magnetic attractive force on the passive magnet 133, causing the passive valve core 122 to move to the inner end of the passive valve cavity 112. The active magnet 121 exerts a magnetic repulsive force on the positioning magnet 132, causing the positioning magnet 132 to move to a side of the positioning valve cavity 116 away from the active valve core 121. The passive valve core 122 is switched to a first state where the fluid controlled port 113 is opened. Thus, the hydraulic control port 101 of the diaphragm valve 100 is opened, the diaphragm valve 100 is opened, and the pipeline is opened. After the active valve core 121 is switched to the first position, the lower end surface of the active magnet 131 is opposite the central line of the passive magnet 133 and the positioning magnet 132. The magnetic attractive force between the active magnet 131 and the passive magnet 133 and the magnetic repulsive force between the active magnet 131 and the positioning magnet 132 enable the active valve core 121 to be maintained at the switched first position.

As shown in FIG. 15B, when it is desired to block the pipeline, a reverse instantaneous current is applied to the electromagnetic coil 51 of the electromagnetic drive mechanism 50. The electromagnetic drive mechanism 50, via the valve rod 14, drives the active valve core 121 to move downward, causing the active valve core 121 to switch from the first position to the second position. The active valve core 121 exerts a magnetic repulsive force on the passive magnet 133, causing the passive valve core 122 to move to the outer end of the passive valve cavity 112. The active magnet 121 exerts a magnetic attractive force on the positioning magnet 132, causing the positioning magnet 132 to move to a side of the positioning valve cavity 116 close to the active valve core 121. The passive valve core 122 is switched to a second state where the fluid controlled port 113 is closed. Thus, the hydraulic control port 101 of the diaphragm valve 100 is closed, the diaphragm valve 100 is closed, and the pipeline is blocked. After the active valve core 121 is switched to the second position, the upper end surface of the active magnet 131 is opposite the central line of the passive magnet 133 and the positioning magnet 132. The magnetic repulsive force between the active magnet 131 and the passive magnet 133 and the magnetic attractive force between the active magnet 131 and the positioning magnet 132 enable the active valve core 121 to be maintained at the switched second position.

It should be noted that the control valve of Embodiment 15 and the diaphragm valve 100 form an integrated on-off valve, but they may also be separately configured as two independent valves. When the control valve of Embodiment 15 is configured as an independent valve body, it may be used directly as an on-off valve, or in combination with other types of hydraulically controlled on-off valves.

### Advantages of the Control Valve of Embodiment 15:

The structure, construction, and magnetic pole arrangement of the positioning magnet 132, the passive magnet 133, and the active magnet 131 enable the active valve core 121 to be maintained more stably at the switched first position or second position, thereby making the opening/closing state of the hydraulically controlled on-off valve less affected, or even unaffected, by pressure fluctuations.

The electromagnetic drive mechanism 50 uses an instantaneous current to drive the valve core mechanism 10 to operate, thereby controlling the opening and closing of the hydraulically controlled on-off valve, and avoiding heat generation.

The electromagnetic drive mechanism 50 is de-energized after driving the valve core mechanism 10 to operate, and the magnetic force interaction component maintains the switching state of the diaphragm valve 100, thereby saving energy.

The active valve cavity 111 and the passive valve cavity 112 of the control valve of this embodiment are completely isolated, allowing the working media in the two cavities to be different, achieving fluid-electrical isolation. Moreover, because instantaneous current is used for drive control, the control valve of this embodiment may be applied to control the connection and disconnection of fluids such as flammable or toxic substances.

The movable positioning magnet 132, the passive magnet 133, the active magnet 131, and the magnetic pole arrangement therebetween enable the active valve core 121 to switch and be maintained at the first position or the second position with a smaller required force stroke, and thereby reducing the application cost for achieving the desired effect.

The working media in the active valve cavity 111 and the passive valve cavity 112 may be different.

### Embodiment 16

### Structure of the Control Valve of Embodiment 16

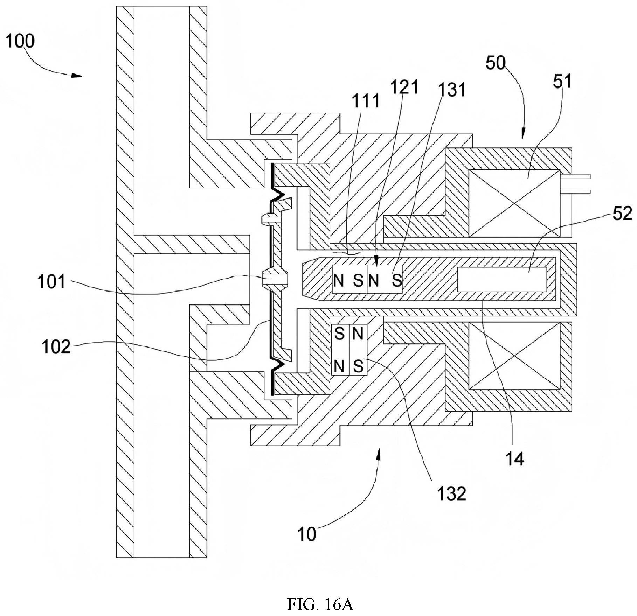

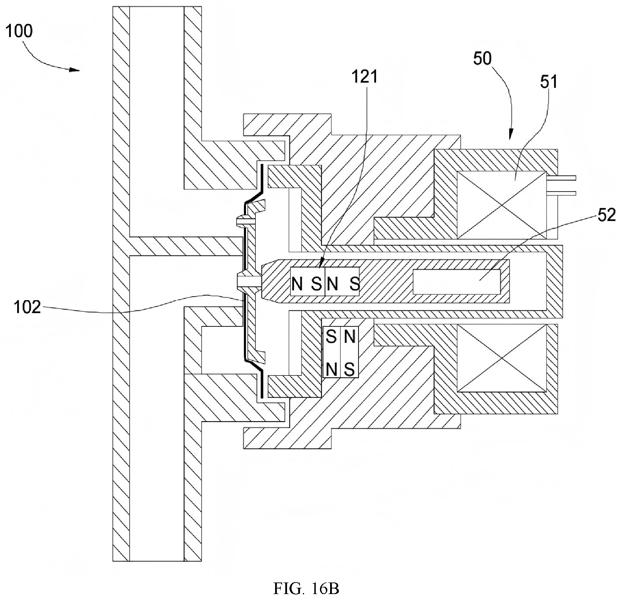

As shown in FIG. 16A and FIG. 16B, the control valve includes a valve core mechanism 10 and a trigger mechanism. The valve core mechanism 10 is connected to the diaphragm valve 100 serving as the hydraulically controlled on-off valve. The trigger mechanism is an electromagnetic drive mechanism 50. The control valve is configured to control the opening and closing of the diaphragm valve 100.

The valve core mechanism 10 includes a valve body 11, an active valve core 121, a magnetic force interaction component, and a valve rod 14.

The diaphragm valve 100 is connected to the valve body 11. An active valve core 121 extending toward the diaphragm 102 of the diaphragm valve 100 is arranged in a middle portion inside the valve body 11. A through hole is provided in the diaphragm 102 of the diaphragm valve 100 at a position opposite the active valve cavity 111. This through hole serves as a hydraulic control port 101. Therefore, this through hole may be referred to as the hydraulic control port 101 of the diaphragm valve 100 (the hydraulic control port 101 belongs to the controlled port). The active valve core 121 is arranged in the active valve cavity 111. The active valve core 121 is movable along the active valve cavity 111. Thus, the active valve core 121 may directly close the hydraulic control port 101 by moving toward the diaphragm 102, and may directly open the hydraulic control port 101 by moving away from the diaphragm 102. Therefore, within the movement stroke, the active valve core 121 has a first position where the hydraulic control port 101 is opened, and a second position where the hydraulic control port 101 is closed.

After the active valve core 121 is switched from the second position to the first position where the hydraulic control port 101 on the diaphragm 102 of the diaphragm valve 100 is opened, the diaphragm valve 100 is opened. After the active valve core 121 is switched from the first position to the second position where the hydraulic control port 101 on the diaphragm 102 of the diaphragm valve 100 is closed, the diaphragm valve 100 is closed.

The magnetic force interaction component includes an active magnet 131 and a positioning magnet 132. Both the active magnet 131 and the positioning magnet 132 are configured as bar-shaped magnets. The active magnet 131 is arranged on the active valve core 121. The positioning magnet 132 is arranged in the valve body 11 in a fixed manner relative to the valve body 11.

A magnetic pole direction of the active magnet 131 is the same as a moving direction of the active valve core 121. A magnetic pole direction of the positioning magnet 132 is perpendicular to the moving direction of the active valve core 121. The positioning magnet 132 is formed by stacking two magnet units along a thickness direction. Opposite magnetic poles of the two magnet units of the positioning magnet 132 face the same direction. The active magnet 131 is formed by stacking two magnet units along a length direction with opposite magnetic poles facing each other. A thickness of the positioning magnet 132 is equal to a length of one magnet unit of the active magnet 131.

The electromagnetic drive mechanism 50 includes a driven magnet 52 and an electromagnet surrounded by an electromagnetic coil 51. One end of the valve rod 14 is connected to the active valve core 121. The other end of the valve rod 14 extends into a hollow structure of the electromagnet. The driven magnet 52 is arranged on the portion of the valve rod 14 extending into the hollow structure. The electromagnetic drive mechanism 50 applies an instantaneous current in forward and reverse directions to the electromagnetic coil 51 to respectively form an instantaneous magnetic attractive force and magnetic repulsive force with the driven magnet 52, thereby driving the valve rod 14 to move via the magnetic attractive force or magnetic repulsive force, thus driving the active valve core 121 to switch between the first position and the second position.

### Application Conditions of the Control Valve of Embodiment 16

The control valve of this embodiment uses the electromagnetic drive mechanism 50 to control the opening and closing of the diaphragm valve 100, thereby controlling the connection and disconnection of the pipeline on the diaphragm valve 100.

### Working Process of the Control Valve of Embodiment 16

As shown in FIG. 16A, when it is desired to open the pipeline, an instantaneous current is applied to the electromagnetic coil 51 of the electromagnetic drive mechanism 50. The electromagnetic drive mechanism 50, via the valve rod 14, drives the active valve core 121, causing the active valve core 121 to switch from the second position to the first position. The active valve core 121 opens the hydraulic control port 101 on the diaphragm 102 of the diaphragm valve 100. The diaphragm valve 100 is opened, and the pipeline is opened. After the active valve core 121 is switched to the first position, the lower magnet unit of the active magnet 131 is opposite the positioning magnet 132, and the active valve core 121 is maintained in the first position by magnetic attractive force.

As shown in FIG. 16B, when it is desired to block the pipeline, a reverse instantaneous current is applied to the electromagnetic coil 51 of the electromagnetic drive mechanism 50. The electromagnetic drive mechanism 50, via the valve rod 14, drives the active valve core 121, causing the active valve core 121 to switch from the first position to the second position. The active valve core 121 closes the hydraulic control port 101 on the diaphragm 102 of the diaphragm valve 100. The diaphragm valve 100 is closed, and the pipeline is blocked. After the active valve core 121 is switched to the first position, the upper magnet unit of the active magnet 131 is opposite the positioning magnet 132, and the active valve core 121 is maintained in the second position by magnetic attractive force.

It should be noted that the control valve of Embodiment 16 and the diaphragm valve 100 form an integrated on-off valve, but they may also be separately configured as two independent valves. When the control valve of Embodiment 16 is configured as an independent valve body, it may be used directly as an on-off valve, or in combination with other types of hydraulically controlled on-off valves.

### Advantages of the Control Valve of Embodiment 16:

The structure, construction, and magnetic pole arrangement of the positioning magnet 132 and the active magnet 131 enable the active valve core 121 to be maintained more stably at the switched first position or second position, thereby making the switching state of the hydraulically controlled on-off valve less affected, or even unaffected, by pressure fluctuations.

The electromagnetic drive mechanism 50 uses an instantaneous current to drive the valve core mechanism 10 to operate, thereby controlling the switching of the hydraulically controlled on-off valve, and avoiding heat generation.

The electromagnetic drive mechanism 50 is de-energized after driving the valve core mechanism 10 to operate, and the magnetic force interaction component maintains the switching state of the diaphragm valve 100, thereby saving energy.

The active valve core 121 is used to directly close the hydraulic control port 101 of the diaphragm valve 100, and the structure is simpler.

Furthermore, although exemplary embodiments have been described in the present disclosure, the scope thereof includes any and all embodiments based on the present disclosure having equivalent elements, modifications, omissions, combinations (e.g., cross-embodiment schemes), adaptations, or alterations. Elements in the claims will be broadly interpreted based on the language employed in the claims, and are not limited to examples described in this specification or during the implementation of the present disclosure, which examples are to be interpreted as non-exclusive. Therefore, this specification and examples are intended to be considered as examples only, with a true scope and spirit being indicated by the following claims and the full scope of equivalents thereof.

The above description is intended to be illustrative rather than restrictive. For example, the above examples (or one or more aspects thereof) may be used in combination with each other. For example, other embodiments may be used by a person of ordinary skill in the art upon reading the above description. Additionally, in the above detailed description, various features may be grouped together to streamline the present disclosure. This should not be interpreted as that an unclaimed disclosed feature is essential to any claim. Rather, the subject matter of the present disclosure may lie in less than all features of a particular disclosed embodiment. Thus, the following claims are hereby incorporated into the detailed description as examples or embodiments, with each claim standing on its own as a separate embodiment, and it is contemplated that these embodiments may be combined with each other in various combinations or permutations. The scope of the present disclosure should be determined with reference to the appended claims, along with the full scope of equivalents to which such claims are entitled.

The above embodiments are merely exemplary embodiments of the present disclosure and are not intended to limit the present disclosure. The protection scope of the present disclosure is defined by the claims. A person skilled in the art may make various modifications or equivalent substitutions within the spirit and protection scope of the present disclosure, and such modifications or equivalent substitutions shall also be deemed to fall within the protection scope of the present disclosure.

## Claims

1. A control valve, comprising:
a valve core mechanism, and
a trigger mechanism,
wherein the valve core mechanism comprises:
a valve body, wherein an active valve cavity is arranged inside the valve body; and
an active valve core, wherein the active valve core is arranged in the active valve cavity and is movable along the active valve cavity, the active valve core has a first position and a second position respectively located at two ends of a movement stroke; after the active valve core is subjected to a first trigger force and switched from the second position to the first position, the active valve core directly or indirectly opens/closes a controlled port; and after the active valve core is subjected to a second trigger force opposite to the first trigger force and switched from the first position to the second position, the active valve core directly or indirectly closes/opens the controlled port;
the trigger mechanism is configured to provide the first trigger force for switching the active valve core from the second position to the first position and to provide the second trigger force for switching the active valve core from the first position to the second position;
an active magnet is arranged on the active valve core; and
a positioning magnet is arranged on the valve body, the positioning magnet is adjacent to the active magnet, and the positioning magnet through a magnetic force interaction with the active magnet, enables the active valve core to have an acting force capable of maintaining the active valve core at a switched position after switching to the first position or the second position.

2. The control valve according to claim 1, wherein the positioning magnet is arranged on the valve body in a fixed manner relative to the valve body.

3. The control valve according to claim 2, wherein a magnetic pole direction of the positioning magnet is consistent with a magnetic pole direction of the active magnet, and opposite magnetic poles of the positioning magnet and the active magnet face a same direction.

4. The control valve according to claim 2, wherein magnetic pole directions of the positioning magnet and the active magnet are perpendicular to each other.

5. The control valve according to claim 3, wherein one of the positioning magnet and the active magnet is an annular magnet, another of the positioning magnet and the active magnet is a bar-shaped magnet, and the annular magnet surrounds the bar-shaped magnet.

6. The control valve according to claim 5, wherein the annular magnet and the bar-shaped magnet are movable relative to each other along the magnetic pole direction, the bar-shaped magnet is maintained at either end of an inner cavity defined by magnetic poles of two ends of the annular magnet through a magnetic force interaction with the annular magnet, and the bar-shaped magnet comprises a magnet formed as a permanent magnet or as a ferrous material magnetized by the annular magnet.

7. The control valve according to claim 5, wherein the positioning magnet is the annular magnet, and the active magnet is the bar-shaped magnet.

8. The control valve according to claim 3, wherein the positioning magnet and the active magnet are both bar-shaped magnets, and the positioning magnet is located at a side of the active magnet.

9. The control valve according to claim 3, further comprising a trigger magnet, wherein opposite magnetic poles of the trigger magnet and the positioning magnet face each other, and like magnetic poles of the trigger magnet and the active magnet face each other; and
the trigger magnet, by forming a magnetic attractive force with the positioning magnet and a magnetic repulsive force with the active magnet, cooperates with the trigger mechanism to apply the first trigger force to switch the active valve core from the second position to the first position.

10. The control valve according to claim 3, wherein a length of the active magnet is less than a length of the positioning magnet.

11. The control valve according to claim 10, wherein the positioning magnet is formed by stacking two magnet units of equal length with opposite magnetic poles facing each other; and
the active magnet is formed by stacking two magnet units of different lengths with opposite magnetic poles facing each other, a length of a longer magnet unit in the active magnet is equal to a length of each of the magnet units in the positioning magnet, and a length of a shorter magnet unit in the active magnet is less than half of the length of each of the magnet units of the positioning magnet.

12. The control valve according to claim 10, wherein the positioning magnet is formed by stacking two magnet units of equal length with opposite magnetic poles facing each other; and
the active magnet comprises one magnet unit, and a length of the magnet unit of the active magnet is equal to a length of each of the magnet units in the positioning magnet.

13. The control valve according to claim 10, wherein the positioning magnet is formed by stacking three magnet units with opposite magnetic poles facing each other, a length of a middle magnet unit is greater than a length of each of two magnet units respectively arranged at two sides along an axis, and radially outer sides of the two magnet units at the two sides protrude beyond a radially outer side of the middle magnet unit; and
the active magnet comprises one magnet unit, and a length of the magnet unit of the active magnet is greater than a length of the middle magnet unit of the positioning magnet.

14. The control valve according to claim 10, wherein the positioning magnet is formed by stacking three magnet units of equal length with opposite magnetic poles facing each other; and
the active magnet is formed by stacking two magnet units of equal length with opposite magnetic poles facing each other, and a length of each of the magnet units of the positioning magnet is equal to a length of each of the magnet units of the active magnet.

15. The control valve according to claim 3, wherein a length of the active magnet is greater than a length of the positioning magnet.

16. The control valve according to claim 15, wherein the positioning magnet comprises one magnet unit; and
the active magnet is formed by stacking two magnet units of equal length with opposite magnetic poles facing each other, and a length of the magnet unit of the positioning magnet is equal to a length of each of the magnet units of the active magnet.

17. The control valve according to claim 4, wherein the magnetic pole direction of the active magnet is consistent with a moving direction of the active valve core, and the magnetic pole direction of the positioning magnet is perpendicular to the moving direction of the active valve core.

18. The control valve according to claim 17, wherein the positioning magnet is formed by stacking at least two magnet units along a thickness direction, and opposite magnetic poles of the two magnet units of the positioning magnet facing a same direction;
the active magnet is formed by stacking two magnet units along a length direction with opposite magnetic poles facing each other; and
a thickness of the positioning magnet is equal to a length of one of the magnet units of the active magnet.

19. The control valve according to claim 17, wherein the positioning magnet is formed by stacking four magnet units of equal thickness along a thickness direction, and opposite magnetic poles of every two adjacent magnet units of the positioning magnet facing a same direction;
the active magnet comprises one magnet unit; and
a length of the active magnet is equal to a sum of thicknesses of two of the magnet units of the positioning magnet.

20. The control valve according to claim 4, wherein the magnetic pole direction of the active magnet is perpendicular to a moving direction of the active valve core, and the magnetic pole direction of the positioning magnet is consistent with the moving direction of the active valve core.

21. The control valve according to claim 20, wherein the active magnet is formed by stacking two magnet units along a thickness direction, and opposite magnetic poles of the two magnet units of the active magnet facing a same direction;
the positioning magnet is formed by stacking two magnet units of different lengths with opposite magnetic poles facing each other;
a length of a shorter magnet unit in the positioning magnet is half a thickness of the active magnet; and
a length of a longer magnet unit in the positioning magnet is equal to the thickness of the active magnet.

22. The control valve according to claim 1, further comprising a passive valve core; wherein a passive valve cavity is arranged in the valve body, the passive valve cavity is located at one side of the active valve cavity, and the passive valve core is arranged in the passive valve cavity and movable along the passive valve cavity;
a passive magnet is arranged on the passive valve core; and
the passive magnet forms a magnetic force interaction with the active magnet and the positioning magnet, such that when the active valve core is switched between the first position and the second position, the passive valve core is driven to move, so as to close or open the controlled port via the passive valve core.

23. The control valve according to claim 22, wherein an extension direction of the passive valve cavity is consistent with an extension direction of the active valve cavity, and a moving direction of the passive valve core is consistent with a moving direction of the active valve core.

24. The control valve according to claim 22, wherein an extension direction of the passive valve cavity is perpendicular to an extension direction of the active valve cavity, and a moving direction of the passive valve core is perpendicular to a moving direction of the active valve core.

25. The control valve according to claim 24, wherein the positioning magnet is located at another side of the active valve cavity, a positioning valve cavity is formed in the valve body, an extension direction of the positioning valve cavity is consistent with and coaxially opposite the extension direction of the passive valve cavity, and the positioning magnet is arranged in the positioning valve cavity and movable along the positioning valve cavity to approach or move away from the active valve cavity.

26. The control valve according to claim 25, wherein opposite magnetic poles of the positioning magnet and the passive magnet face each other.

27. The control valve according to claim 1, wherein the trigger mechanism comprises a float ball mechanism, the float ball mechanism comprises floats, and the float ball mechanism is configured to apply the first trigger force and the second trigger force to the active valve core through the floats.

28. The control valve according to claim 27, wherein the float ball mechanism comprises two floats, and the two floats cooperate with each other to apply the first trigger force and the second trigger force to the active valve core.

29. The control valve according to claim 28, wherein a magnetic force follower mechanism is provided between the floats and the active valve core, and the floats are configured to directly or indirectly drive the active valve core to move and switch between the first position and the second position.

30. The control valve according to claim 1, wherein the trigger mechanism comprises a float ball mechanism and a button mechanism; and
the button mechanism is configured to provide the first trigger force, and the float ball mechanism is configured to provide the second trigger force.

31. The control valve according to claim 1, wherein the trigger mechanism comprises an expansion mechanism and a button mechanism; and
the button mechanism is configured to provide the first trigger force, the expansion mechanism has an expansion component, the expansion component is capable of expanding after absorbing water, and the expansion component is configured to provide the second trigger force through a water absorption expansion action.

32. The control valve according to claim 1, wherein the trigger mechanism comprises a hydraulic control mechanism, the hydraulic control mechanism has a pressure accumulating port, an actuating mechanism and a reset component for resetting the actuating mechanism are arranged in the hydraulic control mechanism; the actuating mechanism is configured to, in response to an increase in pressure of a fluid at the pressure accumulating port, drive the active valve core to switch from the second position to the first position; and the reset component is configured to, in response to a decrease in pressure at the pressure accumulating port, reset the actuating mechanism, so as to drive the active valve core to switch from the first position to the second position.

33. The control valve according to claim 32, wherein a spring diaphragm or a bulging diaphragm is provided between the pressure accumulating port and the actuating mechanism.

34. The control valve according to claim 1, wherein the trigger mechanism comprises an electromagnetic drive mechanism.

35. The control valve according to claim 1, wherein the controlled port comprises a hydraulic control port of a diaphragm valve.
